(19) **Europäisches Patentamt**
**European Patent Office**
**Office européen des brevets**

(11) **EP 4 415 399 A1**

(12) **EUROPEAN PATENT APPLICATION**
published in accordance with Art. 153(4) EPC

(43) Date of publication:
**14.08.2024 Bulletin 2024/33**

(21) Application number: **22885307.3**

(22) Date of filing: **12.08.2022**

(51) International Patent Classification (IPC):
**H04W 4/70** (2018.01)　　**H04W 28/16** (2009.01)
**H04W 28/26** (2009.01)

(52) Cooperative Patent Classification (CPC):
**H04W 4/70; H04W 28/16; H04W 28/26**

(86) International application number:
**PCT/CN2022/112189**

(87) International publication number:
**WO 2023/071407 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2021 CN 202111238539**
**04.11.2021 CN 202111302217**

(71) Applicant: **Huawei Technologies Co., Ltd.**
**Shenzhen, Guangdong 518129 (CN)**

(72) Inventors:
• **LIU, Yun**
**Shenzhen, Guangdong 518129 (CN)**
• **XUE, Lixia**
**Shenzhen, Guangdong 518129 (CN)**
• **CAI, Yu**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND DEVICE**

(57) This application relates to a communication method and device. A first terminal device receives at least one message for reserving a resource, and the first terminal device determines, from S resources based on the at least one message, M resources whose signal strengths do not meet a first signal strength threshold. The first terminal device adjusts the first signal strength threshold if M does not meet a first resource quantity or S-M does not meet a first resource quantity. The first terminal device sends a first message to a second terminal device, where the first message indicates a resource determined based on an adjusted signal strength threshold, and the adjusted signal strength threshold enables M or S-M to meet the first resource quantity. In embodiments of this application, an appropriate threshold can be determined. The threshold is neither excessively high nor excessively low, and an unrecommended resource determined based on the threshold is appropriate.

First UE　　　　　　　　　　　　Second UE

S201: At least one message for reserving a resource

S202: Determine, from S resources based on the at least one message, M resources whose signal strengths do not meet a first signal strength threshold

S203: Adjust the first signal strength threshold if M does not meet a first resource quantity

S204: Determine a fourth signal strength threshold based on an adjusted signal strength threshold

S205: Determine, from the S resources based on the at least one message, N resources whose signal strengths do not meet the fourth signal strength threshold as an unrecommended resource

S206: First message, indicating the N resources

FIG. 2A

EP 4 415 399 A1

**Description**

**CROSS-REFERENCE TO RELATED APPLICATIONS**

This application claims priorities to Chinese Patent Application No. 202111238539.7, filed with the China National Intellectual Property Administration on October 25, 2021, and entitled "COMMUNICATION METHOD, TERMINAL, AND NETWORK DEVICE", which is incorporated herein by reference in its entirety; and to Chinese Patent Application No. 202111302217.4, filed with the China National Intellectual Property Administration on November 4, 2021, and entitled "COMMUNICATION METHOD AND DEVICE", which are incorporated herein by reference in their entireties.

**TECHNICAL FIELD**

This application relates to the field of communication technologies, and in particular, to a communication method and device.

**BACKGROUND**

In sidelink (sidelink, SL) communication, one goal is to reduce power consumption, and two other goals are to improve reliability and reduce latency. The three goals are enhanced based on resource allocation. For example, a user equipment (user equipment, UE)-A sends information of a group of resources to a UE-B. For example, the group of resources are resources unrecommended when the UE-B sends data to the UE-A. In this case, the UE-B may consider the group of resources during a transmission. This is one way of resource allocation enhancement. An advantage of doing so is that the UE-A fully considers a nearby interference situation, and notifies the UE-B of the information of the group of resources, so that the UE-B may select, based on a status of the group of resources, a resource for sending data to the UE-A.

Currently, a manner that may be used when the UE-A determines an unrecommended resource is that the UE-A receives a message from another UE in a resource sensing window, where the message is used to reserve a resource. The UE-A identifies the resource reserved by using the message and measures the message. If a value of a reference signal received power (reference signal received power, RSRP) obtained by measuring the message is greater than a threshold 1, the UE-A lists, as the unrecommended resource, the resource reserved by using the message.

In the foregoing manner, the threshold 1 is used, but currently no manner for determining the threshold 1 is provided. If the threshold 1 is excessively high, insufficient resources are determined by the UE-A, and many resources that should be determined as unrecommended resources may not be determined. If the threshold 1 is excessively low, excessive resources are determined as unrecommended resources. As a result, the UE-B has a few optional resources. It may be learned that how to determine the threshold 1 is a problem that needs to be resolved.

**SUMMARY**

Embodiments of this application provide a communication method and device, to determine an appropriate threshold for determining an unrecommended resource.

According to a first aspect, a first communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: receiving at least one message for reserving a resource; determining, from S resources based on the at least one message, M resources whose signal strengths do not meet a first signal strength threshold, where a first signal strength threshold corresponding to a first resource in the M resources is related to a priority indicated by a message for reserving the first resource, M is a positive integer, and S is an integer greater than or equal to M; adjusting the first signal strength threshold if M does not meet a first resource quantity or S-M does not meet a first resource quantity; and sending a first message to a second terminal device, where the first message indicates a resource determined based on an adjusted signal strength threshold, and the adjusted signal strength threshold enables M to meet the first resource quantity or enables S-M to meet the first resource quantity.

In this embodiment of this application, the M resources are first determined based on the first signal strength threshold. If M or S-M does not meet the first resource quantity, the first signal strength threshold may be further adjusted. The adjusted signal strength threshold enables M or S-M to meet the first resource quantity. Therefore, the adjusted signal strength threshold is appropriate. In other words, in this embodiment of this application, an appropriate threshold can be determined, the threshold is neither excessively high nor excessively low, and unrecommended resources are determined based on the threshold. In this way, resources that should be determined as unrecommended resources may be determined as many as possible, and resources that should not be determined as unrecommended resources may not be determined. That is, a case of omitting a part of resources can be reduced, and a peer terminal device has sufficient optional resources. This helps reduce transmission interference, and improves transmission quality.

With reference to the first aspect, in a first optional implementation of the first aspect, the method further includes: determining, from the S resources based on the at least one message, N resources whose signal strengths do not meet the adjusted signal strength threshold. After the adjusted signal strength threshold is determined, the N resources may be determined based on the adjusted signal strength threshold. For example, the N resources are used as a candidate resource non-preferred for sending data to the first terminal device. Because the adjusted signal strength threshold is appropriate, the determined unrecommended resource may be appropriate.

With reference to the first optional implementation of the first aspect, in a second optional implementation of the first aspect, the method further includes: determining K resources from the N resources, where K is less than or equal to the first resource quantity, and K is a positive integer. For example, N may still be greater than the first resource quantity. Therefore, the K resources may be further determined from the N resources, so that the first terminal device can indicate the K resources to the second terminal device.

With reference to the second optional implementation of the first aspect, in a third optional implementation of the first aspect, signal strengths corresponding to the K resources are greater than or equal to a signal strength of a remaining resource in the N resources other than the K resources, the K resources are a resource with a highest signal strength in the N resources, the K resources are first K resources determined in descending order of signal strengths in the N resources, or the K resources are a resource whose signal strength is greater than a second signal strength threshold in the N resources; or the K resources are randomly determined from the N resources. The first terminal device may determine the K resources from the N resources in different manners. For example, the first terminal device may randomly determine the K resources. This manner is simple. Alternatively, the first terminal device may determine a resource with a higher signal strength from the N resources based on the signal strength. The higher signal strength indicates a high power, and interference caused by transmitting information on such resources is high. Therefore, the first terminal device indicates such resources to the second terminal device, so that the second terminal device can avoid using these resources, to reduce transmission interference.

With reference to the first optional implementation of the first aspect, the second optional implementation of the first aspect, or the third optional implementation of the first aspect, in a fourth optional implementation of the first aspect, the method further includes: determining P resources whose signal strengths are less than or equal to a third signal strength threshold and that are used to send data to the first terminal device, where P is a positive integer, and the third signal strength threshold is equal to the adjusted signal strength threshold, or equal to a largest value in thresholds included in the adjusted signal strength threshold. The first terminal device needs to determine the unrecommended resource. In addition to a resource whose signal strength is greater than a signal strength threshold (for example, the first signal strength threshold or the adjusted signal strength threshold), the first terminal device may further determine a resource whose signal strength is less than a signal strength threshold (for example, the third signal strength threshold) and that regards the first terminal device as a receive end. Both the two types of resources may be used as the unrecommended resource. If signal strengths used by the first terminal device in the two resource selection manners are inappropriate, a resource may be omitted, or a same resource is selected in the two resource selection manners. Therefore, in this embodiment of this application, the third signal strength threshold is associated with the adjusted signal strength threshold, so that a case of omitting a resource can be reduced, and a case of selecting a same resource can also be minimized.

According to a second aspect, a second communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: receiving at least one message for reserving a resource; determining, from S resources based on the at least one message, M resources whose signal strengths do not meet a first signal strength threshold, where a first signal strength threshold corresponding to a first resource in the M resources is related to a priority indicated by a message for reserving the first resource, M is a positive integer, and S is an integer greater than or equal to M; determining K resources from the M resources or S-M resources, where K is less than or equal to a first resource quantity, and K is a positive integer less than or equal to M; and sending a first message to a second terminal device, where the first message indicates the K resources.

Considering that a quantity of resources determined based on the first signal strength threshold may not meet the first resource quantity, this embodiment of this application provides a manner of determining, from the M resources, the K resources that can meet the first resource quantity, so that a determined quantity of unrecommended resources meets the first resource quantity as much as possible, and the first UE can better indicate the unrecommended resource to the second UE. In addition, in this embodiment of this application, the first signal strength threshold does not need to be adjusted. This reduces processing complexity.

According to a third aspect, a third communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: receiving at least one message for reserving a resource; determining M resources from a resource reserved by using the at least one message in descending order of a signal strength of the at least one message, where M is a positive integer; determining K resources from the M resources, where K is less than or equal to a first resource quantity, and K is a positive integer less than or equal to M; and sending a first message to a second terminal device, where the first message indicates the K resources.

In this embodiment of this application, a signal strength threshold may not need to be set, and the first UE can determine an unrecommended resource based on a signal strength of a message for reserving a resource. An implementation process is simple. In addition, the quantity of resources indicated by the first UE to the second UE meets the first resource quantity as much as possible, so that the first UE can better indicate the unrecommended resource to the second UE.

According to a fourth aspect, a fourth communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: determining a third signal strength threshold based on a first priority, where the first priority is a priority indicated by a second terminal device or a preset priority; receiving at least one message for reserving a resource; and determining, based on the at least one message, P resources whose signal strengths do not meet the third signal strength threshold, where P is a positive integer.

According to the method provided in this embodiment of this application, a signal strength threshold used in a second selection manner can be maximized, to cover more transmissions in which the first UE is used as a receiver.

According to a fifth aspect, a fifth communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: determining a first resource quantity; and determining, in a first selection manner based on the first resource quantity, a resource non-preferred for sending data to the first terminal device.

In this embodiment of this application, a quantity of resources that can be selected in the first selection manner may be determined, and correspondingly a quantity of resources that can be selected in a second selection manner may also be determined, so that the quantities of resources that can be selected in both selection manners can be determined, and a selection process may be clearer. In addition, all finally determined unrecommended resources can be indicated to a second terminal device.

According to a sixth aspect, a sixth communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: determining a first resource quantity and a second resource quantity, where the first resource quantity is a quantity of resources that are determined in a first selection manner and that are non-preferred for sending data to the first terminal device, the second resource quantity is a quantity of resources that are determined in a second selection manner and that are non-preferred for sending data to the first terminal device, and a resource corresponding to the first resource quantity and a resource corresponding to the second resource quantity include an overlapping resource; and excluding the overlapping resource from the resource corresponding to the first resource quantity.

In this embodiment of this application, the overlapping resource may be excluded from a determined unrecommended resource as many as possible, so that the first UE does not need to indicate a same resource twice. This reduces consumption of bearing space of a first message.

According to a seventh aspect, a seventh communication method is provided. The method may be performed by a terminal device, may be performed by a larger device including a terminal device, or may be performed by a chip system or another functional module. The chip system or the functional module can implement a function of the terminal device. The chip system or the functional module is, for example, disposed in the terminal device. The terminal device is, for example, referred to as a first terminal device. The method includes: determining, in a first selection manner and/or a second selection manner, a resource non-preferred for sending data to the first terminal device, where the selection manner is determined based on a first parameter; and sending a message to a second terminal device, where the message indicates the resource non-preferred for sending data to the first terminal device. According to the method provided in this embodiment of this application, the selection manner may be determined based on the first parameter, so that the first UE can select an unrecommended resource based on a corresponding selection manner.

According to an eighth aspect, a communication apparatus is provided. The communication apparatus may be the first terminal device according to any one of the first aspect to the seventh aspect. The communication apparatus has a function of the foregoing first terminal device. The communication apparatus is, for example, the first terminal device, or a functional module in the first terminal device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

In an optional implementation, the communication apparatus further includes a storage unit. The processing unit is configured to: be coupled to the storage unit, and execute a program or instructions in the storage unit, to enable the communication apparatus to perform a function of the first terminal device according to any one of the first aspect to the seventh aspect.

According to a ninth aspect, a computer-readable storage medium is provided. The computer-readable storage medium is configured to store a computer program or instructions. When the computer program or the instructions are run, the methods performed by the first terminal device in the foregoing aspects are implemented.

According to a tenth aspect, a computer program product including instructions is provided. When the computer program product runs on a computer, the methods in the foregoing aspects are implemented.

According to an eleventh aspect, an apparatus is provided, including one or more units configured to perform the method according to any embodiment of this application.

## BRIEF DESCRIPTION OF DRAWINGS

FIG. 1 is a schematic diagram of an application scenario according to an embodiment of this application;
FIG. 2A and FIG. 3 to FIG. 12 are flowcharts of several communication methods according to an embodiment of this application;
FIG. 2B is a schematic diagram of performing resource sensing by a first UE;
FIG. 13 is a schematic diagram of a structure of a communication apparatus according to an embodiment of this application;
FIG. 14 is a schematic diagram of a structure of a terminal device according to an embodiment of this application;
FIG. 15 is a schematic diagram of a communication system to which an embodiment of this application is applicable;
FIG. 16 is a schematic diagram of a structure of a communication device according to an embodiment of this application;
FIG. 17 is a schematic diagram of a DRX cycle;
FIG. 18 is a schematic diagram of a manner of determining active time of a terminal in a DRX mechanism;
FIG. 19 is a flowchart of a communication method according to an embodiment of this application;
FIG. 20 is a schematic diagram of a DRX mechanism according to an embodiment of this application;
FIG. 21 is a flowchart of a communication method according to an embodiment of this application;
FIG. 22 to FIG. 28 are several schematic diagrams of a DRX mechanism according to an embodiment of this application;
FIG. 29 and FIG. 30 are several schematic diagrams of sidelink resources selected by a MC entity;
FIG. 31 and FIG. 32 are several schematic diagrams of sidelink resources selected by a first terminal;
FIG. 33 is a schematic diagram in which a retransmission grant is not used according to an embodiment of this application;
FIG. 34 is a schematic diagram of a retransmission sidelink resource indicated by a retransmission grant selected by a terminal according to an embodiment of this application;
FIG. 35 is a schematic diagram of a communication apparatus according to an embodiment of this application; and
FIG. 36 is a schematic diagram of a structure of a chip according to an embodiment of this application.

**DESCRIPTION OF EMBODIMENTS**

To make objectives, technical solution, and advantages of embodiments of this application clearer, the following further describes embodiments of this application in detail with reference to the accompanying drawings.

The following describes some terms or concepts in embodiments of this application, to facilitate understanding by a person skilled in the art.

In embodiments of this application, a terminal device is a device with a wireless transceiver function, and may be a stationary device, a mobile device, a handheld device (for example, a mobile phone), a wearable device, a vehicle-mounted device, or a built-in wireless apparatus (for example, a communication module, a modem, or a chip system) of the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle to everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medicine (remote medicine), a smart grid (smart grid), smart furniture, a smart office, a smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like. For ease of description, in embodiments of this application, an example in which the terminal device is a UE is used for description.

A network device in embodiments of this application may include, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) and a transmission reception point (transmission reception point, TRP) in the foregoing communication systems, a future evolved 3$^{rd}$ generation partnership project (3$^{rd}$ generation partnership project, 3GPP) base station, an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, a network device in the vehicle to everything (vehicle to everything, V2X) technology may be a road side unit (road side unit, RSU). The following uses an example in which the access network device is a base station for description. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus for implementing a function of the network device may be a network device, or may be an apparatus that can support the network device in implementing the function, for example, a chip system, and the apparatus may be installed in the network device. In the technical solutions provided in embodiments of this application, the technical solutions provided in embodiments of this application are described by using an example in which the apparatus configured to implement the function of the network device is the network device.

In embodiments of this application, unless otherwise specified, a quantity of a noun indicates "a singular noun or a plural noun", namely, "one or more". "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. At least one of the following items (pieces) or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, a first signal strength threshold and a second signal strength threshold may be a same signal strength threshold, or may be different signal strength thresholds. In addition, this name does not indicate that values, application scenarios, priorities, or importance levels of the two signal strength thresholds are different. In addition, step numbers in embodiments described in this application are merely used to distinguish between different steps, but are not used to limit a sequence of the steps. For example, S201 may occur before S202, or may occur after S202, or may occur at the same time as S202.

The technical solutions provided in embodiments of this application may be applied to a 4th generation (4th generation, 4G) mobile communication technology system, for example, a long term evolution (long term evolution, LTE) system, or may be applied to a 5G system, for example, a new radio (new radio, NR) system, or may be further applied to a next generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to a vehicle to everything (vehicle to everything, V2X) scenario, for example, an NR-V2X scenario. For example, the technical solutions may be applied to an Internet of Vehicles, for example, V2X and vehicle-to-vehicle (vehicle-to-vehicle, V2V), or may be applied to fields such as intelligent driving, assisted driving, or intelligent networked vehicles. If the technical solutions are applied to a D2D scenario, both communication parties may be UEs. If the technical solutions are applied to a non-D2D scenario, one communication party may be a UE, and the other party may be a network device (for example, an access network device or a core network device), or both communication parties may be network devices. In the following description process, an example in which both communication parties are UEs is used.

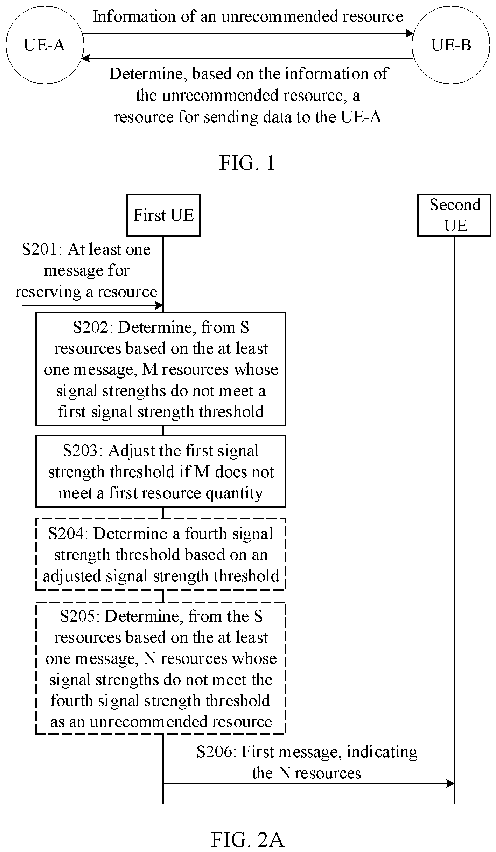

FIG. 1 is a schematic diagram of a network architecture to which an embodiment of this application is applied. FIG. 1 includes a UE-A and a UE-B. The UE-A may send information of one or more resources to the UE-B. These resources are resources unrecommended when the UE-B sends data to the UE-A. After receiving the information of the resources, the UE-B may consider the resources indicated by the UE-A when determining resources for sending data to the UE-A.

In summary, in this embodiment of this application, M resources are first determined based on the first signal strength threshold. If M or S-M does not meet a first resource quantity, the first signal strength threshold may be further adjusted. An adjusted signal strength threshold enables M or S-M to meet the first resource quantity. Therefore, the adjusted signal strength threshold is appropriate. In other words, in this embodiment of this application, an appropriate threshold can be determined, the threshold is neither excessively high nor excessively low, and unrecommended resources are determined based on the threshold. In this way, resources that should be determined as unrecommended resources may be determined as many as possible, and resources that should not be determined as unrecommended resources may not be determined. That is, a case of omitting a part of resources can be reduced, and a peer terminal device has sufficient optional resources. This helps reduce transmission interference, and improves transmission quality.

To better describe embodiments of this application, the following describes the methods provided in embodiments of this application with reference to the accompanying drawings. In the accompanying drawings corresponding to embodiments of this application, all optional steps are represented by dashed lines.

An embodiment of this application provides a first communication method. FIG. 2A is a flowchart of the method. The method may be applied to the network architecture shown in FIG. 1. For example, a first UE used in the method is the UE-A in FIG. 1, and a second UE used in the method is the UE-B in FIG. 1.

S201: The first UE receives at least one message for reserving a resource. The message for reserving a resource may also be referred to as a reservation message or the like, and a name does not constitute a limitation on a feature.

The first UE may perform a resource sensing process, for example, the first UE performs monitoring in a resource sensing window, to receive, from one or more other UEs, a message for reserving a resource. Further, the first UE may select a resource in a resource selection window based on a monitoring result.

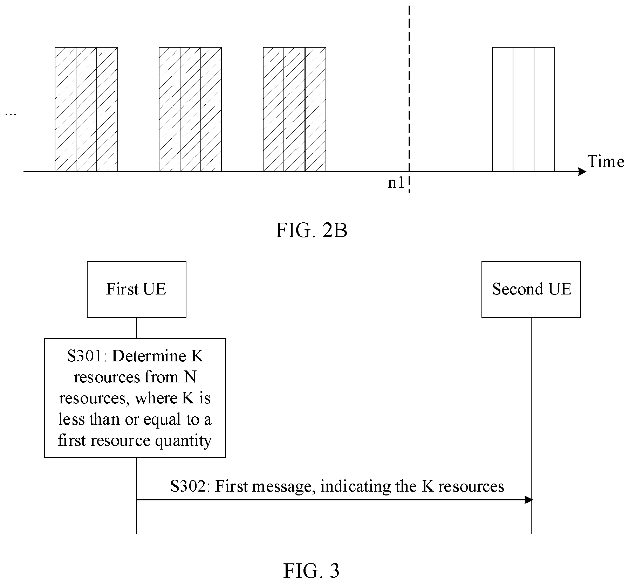

FIG. 2B is a schematic diagram of the resource sensing process of the first UE. In FIG. 2B, a striped rectangular box indicates the resource sensing window, and a blank rectangular box indicates the resource selection window. For a periodic resource sensing process, a time interval between the resource sensing window and the resource selection window may be a sensing period. For an aperiodic resource sensing process, a time interval between the resource sensing window and the resource selection window may fall within a time range.

The at least one message may include a message sent by the second UE, or may not include a message sent by the second UE. The at least one message is, for example, sidelink control information (sidelink control information, SCI), or may be another type of message.

S202: The first UE determines, from S resources based on the at least one message, M resources whose signal strengths do not meet a first signal strength threshold, where M is a positive integer, and S is an integer greater than or equal to M. For example, the S resources include all resources in the resource selection window. The M resources are, for example, all or a part of resources reserved by using the at least one message.

The first signal strength threshold is a threshold for determining an unrecommended resource. In embodiments of this application, the unrecommended resource may also be referred to as a non-preferred resource (non-preferred resource), a non-suggested resource, an unapproved resource, or an undesired (or unexpected) resource, or the like. The unrecommended resource is indicated by the first UE to the second UE, so that the second UE may avoid these unrecommended resources as much as possible when selecting a transmission resource, or the second UE may preferentially select a resource other than the unrecommended resource when selecting a transmission resource. In this embodiment of this application, the unrecommended resource determined by the first UE is a resource non-preferred for sending data to the first UE. For example, the first signal strength threshold corresponds to a first parameter, or the first signal strength threshold is a value of a first parameter. The first parameter is, for example, an RSRP, reference signal received quality (reference signal received quality, RSRQ), or the like, or may be another parameter for measuring signal quality. The first signal strength threshold may be determined in different determining manners. The following describes an example.

An optional manner of determining the first signal strength threshold is that the first signal strength threshold is determined based on a first priority, where the first priority is, for example, a preset priority (for example, predefined in a protocol, determined by the first UE, or preconfigured in the first UE). Alternatively, the first priority is, for example, a priority indicated by the second UE. For example, before sending data to the first UE, the second UE sends an indication message to the first UE, where the indication message may indicate a priority, the priority is a priority of data that is to be sent by the second UE to the first UE, and the priority is used as the first priority. Alternatively, before sending data to the first UE, the second UE sends an indication message to the first UE, where the indication message has a priority, the priority may be used as a priority of data that is to be sent by the second UE to the first UE, and the priority may also be used as the first priority. For example, if the second UE indicates the priority to the first UE, the priority is used as the first priority. If the second UE does not indicate the priority to the first UE, the preset priority is used as the first priority. Alternatively, the first priority may also be decoupled from the foregoing determining condition. For example, regardless of whether the second UE indicates the priority to the first UE, the preset priority is used as the first priority.

For example, the first UE determines the first signal strength threshold based on the first priority and first information. For example, the first information includes a correspondence between a data priority, a message priority, and a threshold. In the first information, one threshold can be uniquely determined based on one data priority and one message priority. For example, the first information is a sidelink threshold RSRP list (SL-Thres-RSRP-List). The SL-Thres-RSRP-List may be presented in a form of a table. The table includes 64 thresholds. In addition, the table further includes two parameters $P_i$ and $P_j$. $P_i$ indicates the message priority, and $P_j$ indicates the data priority. Generally, larger values of $P_i$ and $P_j$ indicate lower corresponding priorities. For example, a message priority of $P_i$=7 is lower than a message priority of $P_i$=6, and a data priority of $P_j$=7 is lower than a data priority of $P_j$=6. The message priority is a priority indicated by the message for reserving a resource. The data priority is a preset priority or a priority indicated by a data sender (for example, the second UE). For example, the first priority is a data priority. Table 1 describes an implementation of the first information.

**Table 1**

|  | $P_i$=1 | $P_i$=2 | $P_i$=3 | $P_i$=4 | $P_i$=5 | $P_i$=6 | $P_i$=7 | $P_i$=8 |
|---|---|---|---|---|---|---|---|---|
| $P_j$=1 | TH1 | TH2 | TH3 | TH4 | TH5 | TH6 | TH7 | TH8 |
| $P_j$=2 | TH9 | TH10 | TH11 | TH12 | TH13 | TH14 | TH15 | TH16 |
| $P_j$=3 | TH17 | TH18 | TH19 | TH20 | TH21 | TH22 | TH23 | TH24 |
| $P_j$=4 | TH25 | TH26 | TH27 | TH28 | TH29 | TH30 | TH31 | TH32 |
| $P_j$=5 | TH33 | TH34 | TH35 | TH36 | TH37 | TH38 | TH39 | TH40 |
| $P_j$=6 | TH41 | TH42 | TH43 | TH44 | TH45 | TH46 | TH47 | TH48 |
| $P_j$=7 | TH49 | TH50 | TH51 | TH52 | TH53 | TH54 | TH55 | TH56 |
| $P_j$=8 | TH57 | TH58 | TH59 | TH60 | TH61 | TH62 | TH63 | TH64 |

For example, the priority indicated by the message for reserving a resource is $P_i$=3, and the priority indicated by the second UE is $P_j$=7. In this case, it may be determined, according to Table 1, that the threshold corresponding to the message is TH51.

The first signal strength threshold determined by the first UE based on the first priority and the first information includes, for example, a group of thresholds. For example, the first information is Table 1. After the first priority is determined, a row of thresholds corresponding to the first priority may be determined from Table 1. For example, if the first priority is $P_j$=1, a row of thresholds in which $P_j$=1 is located may be determined, that is, TH1 to TH8. The eight thresholds may be included in the first signal strength threshold. In this case, first signal strength thresholds corresponding to different resources (or different messages for reserving a resource) may be a same threshold, or may be different thresholds. A first signal strength threshold corresponding to a resource is related to a priority indicated by a message for reserving the resource. For example, the M resources include a first resource, a priority indicated by a message 1 for reserving the first resource is $P_i$=3, and the first priority is $P_j$=1. In this case, a first signal strength threshold corresponding to the message 1 (or the first resource) is TH3, and the first UE may determine whether a signal strength of the first resource (namely, the value of the first parameter obtained by measuring the message 1 by the first UE) meets TH3. For another example, the M resources include a second resource, a priority indicated by the message 2 for reserving the second resource is $P_i$=5, and the first priority is $P_j$=1. In this case, a first signal strength threshold corresponding to the message 2 (or the first resource) is TH5, and the first UE may determine whether a signal strength of the second resource (namely, the value of the first parameter obtained by the first UE by measuring the message 2) meets TH5.

Another optional manner of determining the first signal strength threshold is that if the first signal strength threshold is predefined in a protocol, the first UE may determine the first signal strength threshold based on information predefined in the protocol; or if the first signal strength threshold is preconfigured in UE (for example, the first UE), the first UE may determine the first signal strength threshold based on information preconfigured in the first UE. In this determining manner, the first UE does not need to perform other processing, and the first signal strength threshold is determined based on the preconfigured information or the information predefined in the protocol. This is simple.

In this determining manner, the first signal strength threshold may include only one threshold. In other words, for any message in the at least one message, whether the message meets the threshold is determined. Whether a resource meets the first signal strength threshold means whether the message for reserving the resource meets the first signal strength threshold. Whether the message for reserving the resource meets the first signal strength threshold means whether the value of the first parameter obtained by the first UE by measuring the message meets the first signal strength threshold. For example, the at least one message includes a first message. The first UE measures the first message to obtain a first value of the first parameter. If the first value does not meet the first signal strength threshold, it is determined that a resource reserved by using the first message does not meet the first signal strength threshold. If the first value meets the first signal strength threshold, it is determined that a resource reserved by using the first message meets the first signal strength threshold.

Alternatively, the first signal strength threshold may include a plurality of thresholds, values of different thresholds in the plurality of thresholds may be the same or different, and different messages in the at least one message may correspond to different thresholds in the plurality of thresholds, or may correspond to a same threshold in the plurality of thresholds. For example, if the first signal strength threshold includes a plurality of thresholds, the first signal strength threshold may include a group of thresholds corresponding to one data priority in the SL-Thres-RSRP-List. For example, the first signal strength threshold includes a row of thresholds in Table 1. That is, in this case, a row of thresholds in the foregoing Table 1 is directly determined as the first signal strength threshold, and the first signal strength threshold does not need to be determined based on the first priority. For example, the first signal strength threshold includes a row of thresholds corresponding to $P_j$=2 in Table 1. The at least one message includes a first message. A priority indicated by the first message is $P_i$=3. In this case, the first message corresponds to TH11. The first UE measures the first message to obtain a first value of the first parameter. If the first value does not meet TH11, it is determined that a resource reserved by using the first message does not meet TH11. If the first value meets TH11, it is determined that a resource reserved by using the first message meets TH11.

After determining the first signal strength threshold, the first UE may determine, from the S resources, a resource whose signal strength does not meet the first signal strength threshold. For example, the first UE determines the M resources in total. For example, the first UE separately determines whether the signal strength of the resource reserved by using the at least one message meets the first signal strength threshold, so that the M resources can be determined. How the first UE determines whether a signal strength of a resource reserved by using a message meets the first signal strength threshold has been described above.

S203: If M does not meet a first resource quantity, the first UE adjusts the first signal strength threshold to obtain an adjusted signal strength threshold. In FIG. 2A, this is used as an example. Alternatively, if S-M does not meet a first resource quantity, the first UE adjusts the first signal strength threshold to obtain an adjusted signal strength threshold.

For example, the first resource quantity is determined based on a resource quantity threshold. For example, the first resource quantity is less than or equal to the resource quantity threshold. More content about the first resource quantity is further described in the following other embodiments. For example, the resource quantity threshold is determined based on a message sent by the first UE to the second UE. After determining the unrecommended resource, the first UE may send the message that is, for example, referred to as the first message to the second UE. The first message indicates the unrecommended resource. For example, the first message may carry information of the unrecommended resource. For example, the resource quantity threshold may be determined based on one or more of the following information of the first message: a bearer capability of the first message, a quantity of bits (bits) that can be carried in the first message, or a capacity of the first message. Because a bearer capability of a message is limited, information that is of a resource and that can be carried in the first message is also limited. If the first UE determines excessive unrecommended resources, the first message cannot carry information of the unrecommended resources. As a result, a part of unrecommended resources cannot be indicated to the second UE. If the first UE determines excessively few unrecommended resources, bearing space of the first message is wasted. Therefore, the resource quantity threshold may be determined based on the information of the first message. For example, the resource quantity threshold is equal to a quantity of resources that can be indicated by the first message, and the quantity of resources that can be indicated by the first message may be determined based on the one or more of the foregoing information of the first message. A meaning of the resource quantity threshold is applicable to embodiments of this application.

In addition, it should be noted that if the first UE determines the unrecommended resource based only on a manner corresponding to the first resource quantity (that is, the first UE determines the unrecommended resource depending on whether the signal strength of the resource does not meet a signal strength threshold (for example, the first signal strength threshold, or a fourth signal strength threshold described below), and this manner is a first selection manner described in the following description), that is, the first UE determines the unrecommended resource in the manner provided in embodiments of this application, instead of in another manner, the first resource quantity is the resource quantity threshold. That is, in this case, the first resource quantity and the resource quantity threshold are a same feature.

If the M resources are used as candidate resources of the unrecommended resource, that the signal strengths of the M resources do not meet the first signal strength threshold in S202 may mean that the signal strengths of the M resources are greater than the first signal strength threshold. In this case, S203 may determine whether M meets the first resource quantity. For example, that M meets the first resource quantity means that M is less than or equal to the first resource quantity, and that M does not meet the first resource quantity means that M is greater than the first resource quantity; that M meets the first resource quantity means that M is equal to the first resource quantity, and that M does not meet the first resource quantity means that M is greater than the first resource quantity or M is less than the first resource quantity; that M meets the first resource quantity means that M is greater than or equal to the first resource quantity, and that M does not meet the first resource quantity means that M is less than the first resource quantity; or that M meets the first resource quantity means that M is less than or equal to the first resource quantity, and if M is less than the first resource quantity, M is greater than or equal to a first threshold, and that M does not meet the first resource quantity means that M is greater than the first resource quantity or means that M is less than the first resource quantity and less than a first threshold. The first threshold is less than the first resource quantity. For example, the first resource quantity is 100, and the first threshold is 50. If M is less than 50, it indicates that M is excessively small, and it is considered that M does not meet the first resource quantity. However, if M is less than 100, but M is greater than or equal to 50, it is still considered that M meets the first resource quantity. Because the signal strengths of the M resources are greater than the first signal strength threshold, it indicates that the M resources may be used as candidate resources of the unrecommended resource. If M is greater than the first resource quantity, it indicates that excessive unrecommended resources are determined, and the first message may not carry information of the unrecommended resources. If M is less than the first resource quantity (or M is less than the first resource quantity and less than the first threshold), it indicates that excessively few unrecommended resources are determined, and bearing space of the first message is wasted. Therefore, no matter whether M is greater than the first resource quantity or M is less than the first resource quantity (or M is less than the first resource quantity and less than the first threshold), it may be considered that M does not meet the first resource quantity. Alternatively, if M is less than the first resource quantity, although bearing space of the first message is wasted, a case in which the first message cannot be sent or all unrecommended resources cannot be indicated to the second UE is not caused. Therefore, if M is less than the first resource quantity, it is considered that the M resources meet the first resource quantity. Only if M is greater than the first resource quantity, it is considered that the M resources do not meet the first resource quantity.

If M does not meet the first resource quantity, the first UE may adjust the first signal strength threshold. For example, the first UE may perform one or more adjustments until the adjusted signal strength threshold enables a determined quantity of unrecommended resources to meet the first resource quantity. For example, during each adjustment, the first UE adds an adjustment amount to the first signal strength threshold (if the adjustment manner is to decrease the signal strength threshold, the adjustment amount may be a negative number) to obtain the adjusted threshold. For example, the adjustment amount is predefined in a protocol, determined by the first UE, or preconfigured in the first UE. For example, the adjustment amount is 3 dB, or may be another value. If the first signal strength threshold includes only one threshold, the first UE only needs to adjust the threshold. If the first signal strength threshold includes a plurality of thresholds, the first UE may adjust each of the plurality of thresholds. For example, during each adjustment, a same adjustment amount is added to each of the plurality of thresholds. For example, if the first UE determines that M does not meet the first resource quantity, the first UE may adjust the first signal strength threshold to obtain an adjusted first signal strength threshold, for example, referred to as a signal strength threshold $B_1$. The first UE determines, from the S resources based on the signal strength threshold $B_1$, a resource whose signal strength does not meet the signal strength threshold $B_1$, for example, determines $A_1$ resources. If $A_1$ meets the first resource quantity, the adjustment process ends, and the signal strength threshold $B_1$ is used as the adjusted signal strength threshold. If $A_1$ still does not meet the first resource quantity, the first UE continues to adjust the signal strength threshold $B_1$ to obtain an adjusted signal strength threshold $B_1$, for example, referred to as a signal strength threshold $B_2$. The first UE determines, from the S resources based on the signal strength threshold $B_2$, a resource whose signal strength does not meet the signal strength threshold $B_2$, for example, determines $A_2$ resources. The first UE continues to determine whether $A_2$ meets the first resource quantity. The rest can be done in the same manner until after a specific adjustment is completed, a quantity of resources determined based on an adjusted signal strength threshold (for example, referred to as a signal strength threshold $B_3$) can meet the first resource quantity. In this case, the signal strength threshold $B_3$ is determined as the adjusted signal strength threshold. That is, the first UE may perform one or more adjustments, and the adjusted signal strength threshold is a signal strength threshold obtained after all adjustment processes are completed, or a signal strength threshold obtained after a last adjustment is completed. It should be understood that the signal strength threshold $B_1$ herein may include one or more thresholds. Similarly, the signal strength threshold $B_2$, the signal strength threshold $B_3$, and the like are also similar. When the signal strength threshold $B_1$ includes a plurality of thresholds, when it is determined whether a signal strength of a resource meets the signal strength threshold $B_1$, it is determined whether the resource meets one threshold included in the signal strength threshold $B_1$. A priority indicated by a message for reserving the resource is used as $P_i$ to determine the threshold.

The two names of the "adjusted signal strength threshold" and the "adjusted first signal strength threshold" should be noted. The "adjusted signal strength threshold" is a signal strength threshold obtained after a last adjustment is completed. The "adjusted first signal strength threshold" is a signal strength threshold obtained after one adjustment is performed on the first signal strength threshold. The two are different. In addition, in S202, that the first signal strength threshold is an initial threshold is used as an example. The "adjusted signal strength threshold" may be a signal strength threshold obtained after one or more adjustments are performed based on the first signal strength threshold. The "adjusted first signal strength threshold" is a signal strength threshold obtained after one adjustment is performed on the first signal strength threshold. After the adjustment, the adjusted first signal strength threshold may be further adjusted to obtain the adjusted signal strength threshold. In this case, the adjusted first signal strength threshold is different from the adjusted signal strength threshold. The adjustment process may alternatively be stopped after the adjustment. In this case, the adjusted first signal strength threshold may be used as the adjusted signal strength threshold. Alternatively, the first signal strength threshold may not be an initial threshold. For example, if the first UE performs multiple adjustments, the first signal strength threshold may be a signal strength threshold obtained after one of the adjustments is completed. The adjustment may be an intermediate adjustment process. In other words, after the adjustment, the adjusted first signal strength threshold is further continuously adjusted to obtain the adjusted signal strength threshold. In this case, the adjusted first signal strength threshold is different from the adjusted signal strength threshold. Alternatively, the adjustment may be the last adjustment. In other words, after the adjustment, the adjustment process is stopped. In this case, the adjusted first signal strength threshold may be used as the adjusted signal strength threshold.

For example, if that M does not meet the first resource quantity is specifically that M is greater than the first resource quantity, a manner in which the first UE adjusts the first signal strength threshold is to increase the first signal strength threshold. For example, the first UE may increase the threshold one or more times until an increased signal strength threshold enables the determined quantity of unrecommended resources to be less than or equal to the first resource quantity. For example, if M is greater than the first resource quantity, the first UE increases the first signal strength threshold, and the increased first signal strength threshold is, for example, a signal strength threshold 1. The first UE then determines, from the S resources, a resource whose signal strength is greater than the signal strength threshold 1, for example, determines a resources. If a is less than or equal to the first resource quantity, the first UE does not perform an adjustment, and the signal strength threshold 1 may be used as the adjusted signal strength threshold. If a is still greater than the first resource quantity, the first UE increases the signal strength threshold 1. An increased signal strength threshold 1 is, for example, a signal strength threshold 2. The first UE then determines, from the S resources, a resource whose signal strength is greater than the signal strength threshold 2, for example, determines b resources. The first UE continues to determine whether b is greater than the first resource quantity. The rest can be done in the same manner until after a specific increase of the signal strength threshold is completed (for example, an obtained signal strength threshold is a signal strength threshold 3), a quantity of resources whose signal strengths are greater than the signal strength threshold 3 in the S resources is less than or equal to the first resource quantity. In this case, the signal strength threshold 3 is used as the adjusted signal strength threshold.

For another example, if that M does not meet the first resource quantity is specifically that M is less than the first resource quantity, a manner in which the first UE adjusts the first signal strength threshold is to decrease the first signal strength threshold. For example, the first UE may decrease the threshold one or more times until a decreased signal strength threshold enables the determined quantity of unrecommended resources to be greater than or equal to the first resource quantity. Alternatively, that M does not meet the first resource quantity means that M is less than the first resource quantity and less than the first threshold. In this case, a manner in which the first UE adjusts the first signal strength threshold is to decrease the first signal strength threshold. For example, the first UE may decrease the threshold one or more times until a decreased signal strength threshold enables M to be less than or equal to the first resource quantity, and if M is less than the first resource quantity, M needs to be greater than or equal to the first threshold. For example, that M does not meet the first resource quantity means that M is less than the first resource quantity. For example, if M is less than the first resource quantity, the first UE decreases the first signal strength threshold, and a decreased first signal strength threshold is, for example, a signal strength threshold 4. The first UE then determines, from the S resources, a resource whose signal strength is greater than the signal strength threshold 4, for example, determines c resources. If c is greater than or equal to the first resource quantity, the first UE does not perform an adjustment, and the signal strength threshold 4 may be used as the adjusted signal strength threshold. If c is still less than the first resource quantity, the first UE decreases the signal strength threshold 4, where a decreased signal strength threshold 4 is, for example, a signal strength threshold 5. The first UE then determines, from the S resources, a resource whose signal strength is greater than the signal strength threshold 5, for example, determines d resources. The first UE continues to determine whether d is less than the first resource quantity. The rest can be done in the same manner until after a specific decrease of the signal strength threshold is completed (for example, an obtained signal strength threshold is a signal strength threshold 6), a quantity of resources whose signal strengths are greater than the signal strength threshold 6 in the S resources is greater than or equal to the first resource quantity. In this case, the signal strength threshold 6 is used as the adjusted signal strength threshold.

The foregoing description provides a case in which the M resources are used as a candidate resource of the unrecommended resource. In another possibility, the M resources are used as a candidate resource of a recommended resource, and S-M resources are used as a candidate resource of the unrecommended resource. The recommended resource may be used by the second UE to send data to the first UE. For example, when selecting a resource for sending data to the first UE, the second UE may preferentially select the recommended resource. That the signal strengths of the M resources do not meet the first signal strength threshold in S202 may mean that the signal strengths of the M resources are less than or equal to the first signal strength threshold. Correspondingly, in this case, signal strengths of the S-M resources may be greater than the first signal strength threshold. Therefore, in this case, S203 may determine whether S-M meets the first resource quantity. For example, that S-M meets the first resource quantity means that S-M is less than or equal to the first resource quantity, and that S-M does not meet the first resource quantity means that S-M is greater than the first resource quantity; that S-M meets the first resource quantity means that S-M is equal to the first resource quantity, and that S-M does not meet the first resource quantity means that S-M is greater than the first resource quantity or S-M is less than the first resource quantity; that S-M meets the first resource quantity means that S-M is greater than or equal to the first resource quantity, and that S-M does not meet the first resource quantity means that S-M is less than the first resource quantity; or that S-M meets the first resource quantity means that S-M is less than or equal to the first resource quantity, and if S-M is less than the first resource quantity, M is greater than or equal to a first threshold, and that S-M does not meet the first resource quantity means that S-M is greater than the first resource quantity or means that S-M is less than the first resource quantity and less than a first threshold. The first threshold is less than the first resource quantity. Because the signal strengths of the S-M resources are greater than the first signal strength threshold, it indicates that the S-M resources are a candidate resource of the unrecommended resource. If S-M is greater than the first resource quantity, it indicates that excessive unrecommended resources are determined, and the first message may not carry information of the unrecommended resources. If S-M is less than the first resource quantity (or S-M is less than the first resource quantity and less than the first threshold), it indicates that excessively few unrecommended resources are determined, and bearing space of the first message is wasted. Therefore, no matter whether S-M is greater than the first resource quantity or S-M is less than the first resource quantity (or S-M is less than the first resource quantity and less than the first threshold), it may be considered that S-M does not meet the first resource quantity. Alternatively, if S-M is less than the first resource quantity, although bearing space of the first message is wasted, a case in which the first message cannot be sent or all unrecommended resources cannot be indicated to the second UE is not caused. Therefore, if S-M is less than the first resource quantity, it is considered that the S-M resources meet the first resource quantity. Only if S-M is greater than the first resource quantity, it is considered that the S-M resources do not meet the first resource quantity.

If S-M does not meet the first resource quantity, the first UE may adjust the first signal strength threshold. For example, the first UE may perform one or more adjustments until the adjusted signal strength threshold enables a determined quantity of unrecommended resources to meet the first resource quantity. For example, during each adjustment, the first UE adds an adjustment amount to the first signal strength threshold (if the adjustment manner is to decrease the signal strength threshold, the adjustment amount may be a negative number) to obtain the adjusted threshold. For example, the adjustment amount is predefined in a protocol, determined by the first UE, or preconfigured in the first UE. In this case, the adjustment amount may be the same as or may be different from an adjustment amount corresponding to a case in which M does not meet the first resource quantity. If the first signal strength threshold includes only one threshold, the first UE only needs to adjust the threshold. If the first signal strength threshold includes a plurality of thresholds, the first UE may adjust each of the plurality of thresholds. For example, during each adjustment, a same adjustment amount is added to each of the plurality of thresholds. For example, if the first UE determines that S-M does not meet the first resource quantity, the first UE may adjust the first signal strength threshold to obtain an adjusted first signal strength threshold, for example, referred to as a signal strength threshold $D_1$. The first UE determines, from the S resources based on the signal strength threshold $D_1$, a resource whose signal strength does not meet the signal strength threshold $D_1$, for example, determines $C_1$ resources. If $C_1$ meets the first resource quantity, the adjustment process ends, and the signal strength threshold $D_1$ is used as the adjusted signal strength threshold. If $C_1$ still does not meet the first resource quantity, the first UE continues to adjust the signal strength threshold $D_1$ to obtain an adjusted signal strength threshold $D_1$, for example, referred to as a signal strength threshold $D_2$. The first UE determines, from the S resources based on the signal strength threshold $D_2$, a resource whose signal strength does not meet the signal strength threshold $D_2$, for example, determines $C_2$ resources. The first UE continues to determine whether $C_2$ meets the first resource quantity. The rest can be done in the same manner until after a specific adjustment is completed, a quantity of unrecommended resources determined based on an adjusted signal strength threshold (for example, referred to as a signal strength threshold $D_3$) can meet the first resource quantity. In this case, the signal strength threshold $D_3$ is determined as the adjusted signal strength threshold. That is, the first UE may perform one or more adjustments, and the adjusted signal strength threshold is a signal strength threshold obtained after all adjustment processes are completed, or a signal strength threshold obtained after a last adjustment is completed.

For example, if that S-M does not meet the first resource quantity is specifically that S-M is greater than the first resource quantity, a manner in which the first UE adjusts the first signal strength threshold is to increase the first signal strength threshold. For example, the first UE may increase the threshold one or more times until an increased signal strength threshold enables the determined quantity of unrecommended resources to be less than or equal to the first resource quantity. For example, if S-M is greater than the first resource quantity, the first UE increases the first signal strength threshold, and the increased first signal strength threshold is, for example, a signal strength threshold 7. The first UE then determines, from the S resources, a resource whose signal strength is less than or equal to the signal strength threshold 7, for example, determines e resources. If S-e is less than or equal to the first resource quantity, the first UE does not perform an adjustment, and the signal strength threshold 7 may be used as the adjusted signal strength threshold. If S-e is still greater than the first resource quantity, the first UE increases the signal strength threshold 7. An increased signal strength threshold 7 is, for example, a signal strength threshold 8. The first UE then determines, from the S resources, a resource whose signal strength is less than or equal to the signal strength threshold 8, for example, determines f resources. The first UE continues to determine whether S-f is greater than the first resource quantity. The rest can be done in the same manner until after a specific increase of the signal strength threshold is completed (for example, an obtained signal strength threshold is a signal strength threshold 9), a difference between S and a quantity of resources whose signal strengths are less than or equal to the signal strength threshold 9 is less than or equal to the first resource quantity. In this case, the signal strength threshold 9 is used as the adjusted signal strength threshold.

For another example, if that S-M does not meet the first resource quantity is specifically that S-M is less than the first resource quantity, a manner in which the first UE adjusts the first signal strength threshold is to decrease the first signal strength threshold. For example, the first UE may decrease the threshold one or more times until a decreased signal strength threshold enables the determined quantity of unrecommended resources to be greater than or equal to the first resource quantity. Alternatively, that S-M does not meet the first resource quantity means that S-M is less than the first resource quantity and less than the first threshold. In this case, a manner in which the first UE adjusts the first signal strength threshold is to decrease the first signal strength threshold. For example, the first UE may decrease the threshold one or more times until a decreased signal strength threshold enables the determined quantity of unrecommended resources to be greater than or equal to the first resource quantity, or until a decreased signal strength threshold enables the determined quantity of unrecommended resources to be greater than or equal to the first threshold (in this case, the determined quantity of unrecommended resources may be less than or equal to the first resource quantity, or may be greater than the first resource quantity). For example, that S-M does not meet the first resource quantity means that S-M is less than the first resource quantity. For example, if S-M is less than the first resource quantity, the first UE decreases the first signal strength threshold, and a decreased first signal strength threshold is, for example, a signal strength threshold 10. The first UE then determines, from the S resources, a resource whose signal strength is less than or equal to the signal strength threshold 10, for example, determines g resources. If S-g is greater than or equal to the first resource quantity, the first UE does not perform an adjustment, and the signal strength threshold 10 may be used as the adjusted signal strength threshold. If S-g is still less than the first resource quantity, the first UE decreases the signal strength threshold 10. A decreased signal strength threshold 10 is, for example, a signal strength threshold 11. The first UE then determines, from the S resources, a resource whose signal strength is less than or equal to the signal strength threshold 11, for example, determines h resources. The first UE continues to determine whether h is less than the first resource quantity. The rest can be done in the same manner until after a specific decrease of the signal strength threshold is completed (for example, an obtained signal strength threshold is a signal strength threshold 12), a difference between S and a quantity of resources whose signal strengths are less than or equal to the signal strength threshold 12 is greater than or equal to the first resource quantity. In this case, the signal strength threshold 12 is used as the adjusted signal strength threshold.

Optionally, corresponding adjustment amounts by which the first UE increases the signal strength threshold and decreases the signal strength threshold may be the same or different. For example, the first UE increases the signal strength threshold based on a first adjustment amount, that is, increases by the first adjustment amount in each adjustment. The first UE decreases the signal strength threshold based on a second adjustment amount, that is, decreases by the second adjustment amount in each adjustment. The first adjustment amount and the second adjustment amount may be the same or different.

In another special case, if M meets the first resource quantity or S-M meets the first resource quantity, the first UE does not need to adjust the first signal strength threshold, that is, S203 does not need to be performed.

S204: The first UE determines a fourth signal strength threshold based on the adjusted signal strength threshold. The fourth signal strength threshold is used as a final signal strength threshold.

After obtaining the adjusted signal strength threshold, the first UE may determine the finally applied signal strength threshold, for example, referred to as the fourth signal strength threshold. For example, the first UE performs n adjustments. After an $(n-1)^{th}$ adjustment ends, a quantity of resources determined based on a signal strength threshold obtained through the $(n-1)^{th}$ adjustment does not meet the first resource quantity. After an $n^{th}$ adjustment ends, a quantity of resources determined based on a signal strength threshold obtained through the $n^{th}$ adjustment meets the first resource quantity. The signal strength threshold obtained through the $n^{th}$ adjustment is the adjusted signal strength threshold. The first UE may consider that the fourth signal strength threshold is obtained based on the adjusted signal strength threshold, for example, the adjusted signal strength threshold is used as the fourth signal strength threshold.

Alternatively, the first UE may consider that if a quantity of resources obtained based on the adjusted signal strength threshold is excessively small, the fourth signal strength threshold is still obtained based on the signal strength threshold obtained after the $(n-1)^{th}$ adjustment ends. For example, the signal strength threshold obtained after the $(n-1)^{th}$ adjustment ends is used as the fourth signal strength threshold.

Alternatively, the first UE may consider that if a quantity of resources obtained based on the adjusted signal strength threshold is excessively small, the fourth signal strength threshold is obtained based on the signal strength threshold obtained after the $(n-1)^{th}$ adjustment ends and the signal strength threshold obtained after the $n^{th}$ adjustment ends. For example, the first UE obtains an average value of the two signal strength thresholds, and uses the average value as the fourth signal strength threshold. For example, the signal strength threshold obtained after the $(n-1)^{th}$ adjustment ends includes a threshold A and a threshold B, and the signal strength threshold obtained after the $n^{th}$ adjustment ends also includes two thresholds, for example, a threshold A' and a threshold B'. The first UE may obtain an average value of the threshold A and the threshold A', for example, referred to as an average value A, and obtain an average value of the threshold B and the threshold B', for example, referred to as an average value B. The average value A and the average value B may be used as two thresholds included in the fourth signal strength threshold.

Alternatively, the first UE may determine, based on the adjusted signal strength threshold, that the fourth signal strength threshold is obtained based on a signal strength threshold obtained after any one or more of the n adjustments end, or the fourth signal strength threshold is obtained based on the initial threshold and a signal strength threshold obtained after any one or more of the n adjustments end.

S204 may be completed when S203 is performed. Therefore, S204 is an optional step.

S205: The first UE determines, from the S resources based on the at least one message, N resources whose signal strengths do not meet the fourth signal strength threshold as the unrecommended resource. That is, the N resources are resources non-preferred for sending data to the first UE.

For example, the first UE may determine, from the S resources, N resources whose signal strengths are greater than the adjusted signal strength threshold. Because the fourth signal strength threshold is the determined signal strength threshold, the N resources may be the finally determined unrecommended resource. Alternatively, when determining the fourth signal strength threshold, the first UE may simultaneously determine the N resources. Therefore, S205 and/or S204 and S203 may be a same step. For example, S203 to S205 are a same step, or S205 may not be performed and S205 is completed when S203 or S204 is performed. Therefore, S205 is an optional step.

S206: The first UE sends the first message to the second UE. Correspondingly, the second UE receives the first message from the first UE.

The first message may indicate the N resources. For example, the first message may carry information of the N resources to indicate the N resources. The N resources are unrecommended resources. After receiving the first message, the second UE may use the N resources as a reference when selecting a resource for sending data to the first UE. For example, when sending data to the first UE, the second UE may avoid selecting the N resources as much as possible. This reduces transmission interference, and improves transmission reliability. In embodiments of this application, the first message may also be referred to as auxiliary information or the like, or it is considered that the first message is used to carry auxiliary information. For example, the information that is of the unrecommended resource and that is carried in the first message is a type of auxiliary information.

In this embodiment of this application, the signal strength threshold for determining the unrecommended resource may be adjusted. An appropriate threshold (namely, the fourth signal strength threshold) can be determined through adjustment, the threshold is neither excessively high nor excessively low, and the unrecommended resources are determined based on the threshold. In this way, resources that should be determined as unrecommended resources may be determined as many as possible, and resources that should not be determined as unrecommended resources may not be determined. That is, a case of omitting a part of resources can be reduced, and the second UE has sufficient optional resources.

In the embodiment shown in FIG. 2A, the fourth signal strength threshold is finally determined, and the first UE may determine the unrecommended resource based on the fourth signal strength threshold. However, it is still possible that a quantity (namely, N) of unrecommended resources determined by the first UE based on the fourth signal strength threshold still does not meet the first resource quantity. Therefore, the following embodiment of this application provides a second communication method, to resolve a problem that N does not meet the first resource quantity. FIG. 3 is a flowchart of the method.

S301: The first UE determines K resources from the N resources. For example, K is less than or equal to the first resource quantity, and K is a positive integer.

For example, after the N resources are determined according to the embodiment shown in FIG. 2A, the first UE does not determine a value relationship between N and the first resource quantity, but determines only the K resources from the N resources. In this case, if N is less than or equal to the first resource quantity, the N resources may be determined as the K resources, that is, K=N. If N is greater than the first resource quantity, a part of resources in the N resources may be determined as the K resources, that is, K is less than N. Alternatively, after the N resources are determined according to the embodiment shown in FIG. 2A, the first UE may determine a value relationship between N and the first resource quantity, for example, determine whether N is greater than the first resource quantity. S301 is performed if N is greater than the first resource quantity. If N is less than or equal to the first resource quantity, S301 does not need to be performed, or the embodiment shown in FIG. 3 does not need to be performed.

The first UE may determine the K resources from the N resources in different determining manners. For example, a determining manner is that the first UE randomly selects the K resources from the N resources. This manner is simple.

Alternatively, another determining manner is that the first UE selects the K resources with highest signal strengths from the N resources, where the highest signal strength may be highest interference. Equivalently, the first UE notifies the second UE of the resources with highest interference. In this way, interference caused when the second UE sends data to the first UE is reduced. For example, the first UE sorts the N resources in descending order of corresponding signal strengths, and selects first K resources from the N resources. For example, each of the N resources corresponds to the first parameter. That the first parameter is an RSRP is used as an example. The first UE sorts N RSRPs, and selects first K resources from the N RSRPs. In this case, signal strengths of the K resources are greater than or equal to signal strengths of N-K resources.

Alternatively, still another determining manner is that the first UE selects, from the N resources, the K resources whose signal strengths are greater than a second signal strength threshold, where the second signal strength threshold may be predefined in a protocol, preconfigured in the first UE, or set by the first UE. For example, if a quantity of resources whose signal strengths are greater than the second signal strength threshold in the N resources is less than or equal to the first resource quantity, the K resources may include all or a part of resources whose signal strengths are greater than the second signal strength threshold in the N resources. Alternatively, if a quantity of resources whose signal strengths are greater than the second signal strength threshold in the N resources is greater than the first resource quantity, the K resources may include a part of the N resources, and K is less than or equal to the first resource quantity.

For the description of the first resource quantity, refer to the embodiment shown in FIG. 2A. In addition, it should be noted that if the first UE determines the unrecommended resource based only on the manner corresponding to the first resource quantity (that is, the first UE determines the unrecommended resource depending on whether the signal strength of the resource is greater than a signal strength threshold (for example, the first signal strength threshold or the fourth signal strength threshold), and this manner is the first selection manner described in the following description), that is, the first UE determines the unrecommended resource in the manner provided in embodiments of this application, instead of in another manner, the first resource quantity is the resource quantity threshold. That is, in this case, the first resource quantity and the resource quantity threshold are the same feature.

S302: The first UE sends the first message to the second UE. Correspondingly, the second UE receives the first message from the first UE.

The first message may indicate the K resources. For example, the first message may carry information of the K resources to indicate the K resources. The K resources are unrecommended resources. After receiving the first message, the second UE may use the K resources as a reference when selecting a resource for sending data to the first UE. For example, when sending data to the first UE, the second UE may avoid selecting the K resources as much as possible. This can reduce transmission interference, and improve transmission reliability.

If N is less than or equal to the first resource quantity, S302 and S206 in the embodiment shown in FIG. 2A may be a same step. If N is greater than the first resource quantity, S206 may be performed, and the embodiment shown in FIG. 3 is not performed. Alternatively, S206 may not be performed, and the embodiment shown in FIG. 3 is performed.

Considering that a quantity of resources determined based on the fourth signal strength threshold may not meet the first resource quantity either, this embodiment of this application provides a manner of determining, from the N resources, the K resources that can meet the first resource quantity, so that a determined quantity of unrecommended resources meets the first resource quantity as much as possible, and the first UE can better indicate the unrecommended resource to the second UE.

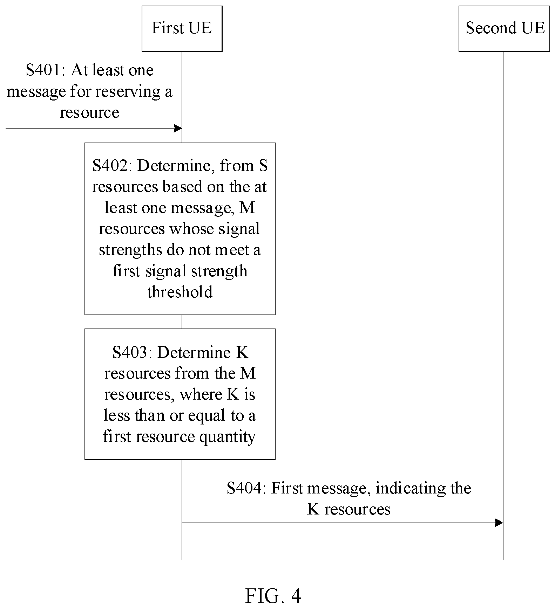

If the first UE determines the unrecommended resource depending on whether a signal strength of a resource is greater than a signal strength threshold (for example, the fourth signal strength threshold), the determined quantity of unrecommended resources may meet the first resource quantity, or may not meet the first resource quantity. In the embodiment shown in FIG. 3, when the signal strength threshold may be adjusted, if the quantity of unrecommended resources does not meet the first resource quantity, how to perform processing is described. The following embodiment of this application provides a third communication method. In the method, if the signal strength threshold does not need to be adjusted, if the determined quantity of unrecommended resources does not meet the first resource quantity, how to perform processing is described. FIG. 4 is a flowchart of the method.

S401: The first UE receives at least one message for reserving a resource.

For more content of S401, refer to S201 in the embodiment shown in FIG. 2A.

S402: The first UE determines, from S resources based on the at least one message, M resources whose signal strengths do not meet a first signal strength threshold, where M is a positive integer, and S is an integer greater than or equal to M. For example, the S resources include all resources in a resource selection window. The M resources are, for example, all or a part of resources reserved by using the at least one message.

For more content of S402, refer to S202 in the embodiment shown in FIG. 2A.

S403: The first UE determines K resources from the M resources. Alternatively, the first UE determines K resources from S-M resources. In FIG. 4, an example in which the first UE determines the K resources from the M resources is used. For example, K is less than or equal to the first resource quantity, and K is a positive integer.

In this embodiment of this application, the first signal strength threshold is not adjusted, and a resource determined based on the first signal strength threshold is directly used as a candidate resource of an unrecommended resource. It may be learned from S203 in the embodiment shown in FIG. 2A that, that the signal strengths of the M resources do not meet the first signal strength threshold may mean that the signal strengths of the M resources are greater than the first signal strength threshold. The M resources are used as the candidate resource of the unrecommended resource. Therefore, in S403, the first UE may determine the K resources from the M resources. Alternatively, that the signal strengths of the M resources do not meet the first signal strength threshold may mean that the signal strengths of the M resources are less than or equal to the first signal strength threshold. The S-M resources are used as the candidate resource of the unrecommended resource. Therefore, in S403, the first UE may determine the K resources from the S-M resources.

For a manner in which the first UE determines the K resources from the M resources, refer to S301 shown in FIG. 3. Similarly, for a manner in which the first UE determines the K resources from the S-M resources, also refer to S301 shown in FIG. 3.

S404: The first UE sends the first message to the second UE. Correspondingly, the second UE receives the first message from the first UE.

The first message may indicate the K resources. For example, the first message may carry information of the K resources to indicate the K resources. The K resources are unrecommended resources. After receiving the first message, the second UE may use the K resources as a reference when selecting a resource for sending data to the first UE. For example, when sending data to the first UE, the second UE may avoid selecting the K resources as much as possible. This can reduce transmission interference, and improve transmission reliability.

Considering that a quantity of resources determined based on the first signal strength threshold may not meet the first resource quantity, this embodiment of this application provides a manner of determining, from the M resources, the K resources that can meet the first resource quantity, so that a determined quantity of unrecommended resources meets the first resource quantity as much as possible, and the first UE can better indicate the unrecommended resource to the second UE. In addition, in this embodiment of this application, the first signal strength threshold does not need to be adjusted. This reduces processing complexity.

For the description of the first resource quantity, refer to the embodiment shown in FIG. 2A. In addition, it should be noted that if the first UE determines the unrecommended resource based only on the manner corresponding to the first resource quantity (that is, the first UE determines the unrecommended resource depending on whether the signal strength of the resource is greater than a signal strength threshold (for example, the first signal strength threshold or the fourth signal strength threshold), and this manner is the first selection manner described in the following description), that is, the first UE determines the unrecommended resource in the manner provided in embodiments of this application, instead of in another manner, the first resource quantity is the resource quantity threshold. That is, in this case, the first resource quantity and the resource quantity threshold are the same feature.

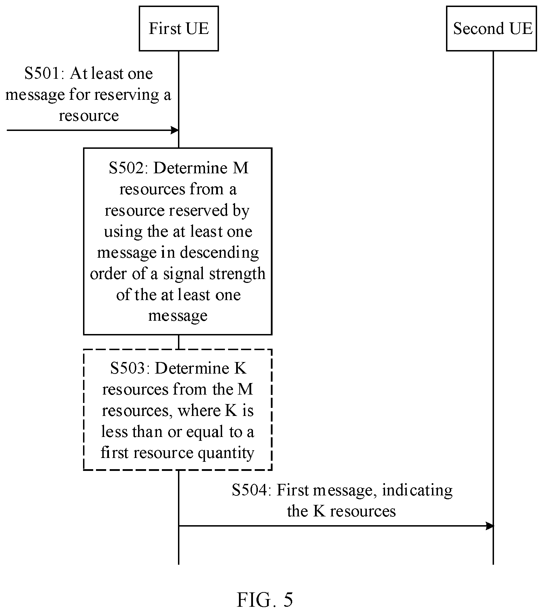

In the foregoing embodiment, the first UE needs to determine the unrecommended resource based on the signal strength threshold (for example, the first signal strength threshold or the fourth signal strength threshold). In the following, an embodiment of this application provides a fourth communication method. In the method, the first UE can determine the unrecommended resource without using a signal strength threshold. FIG. 5 is a flowchart of the method.

S501: The first UE receives at least one message for reserving a resource.

For more content of S501, refer to S201 in the embodiment shown in FIG. 2A.

S502: The first UE determines M resources from a resource reserved by using the at least one message in descending order of a signal strength of the at least one message, where M is a positive integer.

For example, the first UE may measure the at least one message to obtain at least one measurement result, where each measurement result is, for example, a value of a first parameter, and the first parameter is, for example, an RSRP, an RSRQ, or the like. In this case, the first UE may sort at least one value of the first parameter in descending order, and select first M values. The M values correspond to M messages in the at least one message. Resources reserved by using the M messages are candidate resources of the unrecommended resource. For example, the M resources are reserved by using the M messages (that one resource is reserved by using one message is used as an example, and in practice, one or more resources may be reserved by using one message).

S503: The first UE determines K resources from the M resources. K is less than or equal to a first resource quantity.

For more content of S503, refer to S301 in the embodiment shown in FIG. 3. S503 is also an optional step.

S504: The first UE sends the first message to the second UE. Correspondingly, the second UE receives the first message from the first UE.

The first message may indicate the K resources. For example, the first message may carry information of the K resources to indicate the K resources. The K resources are unrecommended resources. After receiving the first message, the second UE may use the K resources as a reference when selecting a resource for sending data to the first UE. For example, when sending data to the first UE, the second UE may avoid selecting the K resources as much as possible. This can reduce transmission interference, and improve transmission reliability. Alternatively, if S503 is not performed, the first message may indicate the M resources.

In this embodiment of this application, a signal strength threshold may not need to be set, and the first UE can determine an unrecommended resource based on a signal strength of a message for reserving a resource. An implementation process is simple. In addition, the quantity of resources indicated by the first UE to the second UE meets the first resource quantity as much as possible, so that the first UE can better indicate the unrecommended resource to the second UE.

This application relates to two selection manners. One selection manner is a manner of determining, based on a signal strength threshold (for example, the foregoing first signal strength threshold or fourth signal strength threshold), a resource non-preferred for sending data to the first UE, where a signal strength of the determined resource non-preferred for sending data to the first UE is greater than the first signal strength threshold or the fourth signal strength threshold. This selection manner may be referred to as a first selection manner, a first determining manner, or the like, and this is also the selection manner in the foregoing several embodiments. For example, in the foregoing embodiment, the first UE determines the unrecommended resource depending on whether the signal strength of the resource is greater than (or higher than) the signal strength threshold (for example, the first signal strength threshold or the fourth signal strength threshold). This means that the first selection manner is applied. In addition, another selection manner is a manner of determining, based on a signal strength threshold (for example, a third signal strength threshold described below), a resource non-preferred for sending data to the first UE, where a signal strength of the resource non-preferred for sending data to the first UE is less than or equal to the first signal strength threshold, and the resource is used to send data to the first UE. This selection manner may be referred to as a second selection manner, a second determining manner, or the like. For example, the first UE may determine a resource (or a resource that uses the first UE as a receiver) whose signal strength is less than or equal to (or lower than or equal to) a signal strength threshold and that is used to send data to the first UE. The resource is used as the unrecommended resource. This means that the second selection manner is applied.

It may be learned that if the first UE uses the second selection manner, the signal strength threshold is also used. For example, the signal strength threshold used by the first UE in the first selection manner is referred to as a threshold 1 (for example, the first signal strength threshold or the fourth signal strength threshold). The signal strength threshold used by the UE in the second selection manner is referred to as a threshold 2. The foregoing embodiment describes a manner of determining the threshold 1. Currently, no manner of determining the threshold 2 is provided. If the threshold 2 is excessively low, insufficient resources are determined by the first UE, and many resources that should be determined as unrecommended resources may not be determined. If the threshold 2 is excessively high, excessive resources are determined as unrecommended resources. As a result, the second UE has a few optional resources. It may be learned that how to determine the threshold 2 is also a problem that needs to be resolved.

When determining the unrecommended resource, the first UE may determine the resource in both the first selection manner and the second selection manner. In this case, if the threshold 1 is higher than the threshold 2, a part of resources that should be determined as the unrecommended resources may be omitted. For example, the threshold 1 is -50 dBm, and the threshold 2 is -60 dBm. The first UE determines, in the first selection manner, that a resource whose signal strength is greater than -50 dBm is an unrecommended resource, and determines, in the second selection manner, that a resource whose signal strength is less than -60 dBm and that uses the first UE as a receiver is an unrecommended resource. However, a higher signal strength of a resource indicates a higher power of a signal transmitted on the resource. For a resource whose signal strength is [-60 dBm, -50 dBm] and that uses the first UE as a receiver, the first UE does not determine the resource as an unrecommended resource. However, compared with the resource determined in the second selection manner (namely, the resource whose signal strength is less than -60 dBm and that uses the first UE as a receiver), the resource whose signal strength is [-60 dBm, -50 dBm] and that uses the first UE as a receiver has a higher transmission power and higher interference. It may be learned that the resource whose signal strength is [-60 dBm, -50 dBm] and that uses the first UE as a receiver should be determined as an unrecommended resource, but is omitted.

If the threshold 1 is lower than the threshold 2, repeated determining is caused. For example, the first UE determines the unrecommended resource in the first selection manner and the second selection manner, and a resource whose signal strength is greater than the threshold 1 and less than the threshold 2 is determined in both the first selection manner and the second selection manner, causing repeated determining. When sending the first message to the second UE, the first UE separately indicates a resource determined in the first selection manner and a resource determined in the second selection manner. Therefore, a same resource is repeatedly indicated in the first message, and bearing space of the first message is wasted.

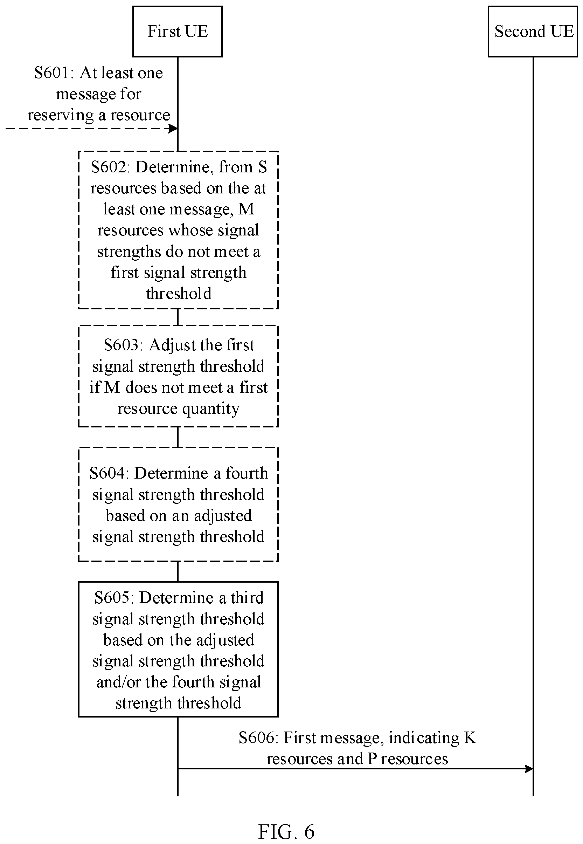

Therefore, an embodiment of this application provides a fifth communication method. In the method, a manner of determining the threshold 2 may be provided, and the threshold 1 and the threshold 2 are as appropriate as possible. This reduces resource omission, and avoids repeated resource determining as much as possible. FIG. 6 is a flowchart of the method.

S601: The first UE receives at least one message for reserving a resource.

For more content of S601, refer to S201 in the embodiment shown in FIG. 2A.

S602: The first UE determines, from S resources based on the at least one message, M resources whose signal strengths do not meet a first signal strength threshold, where M is a positive integer, and S is an integer greater than or equal to M.

For more content of S602, refer to S202 in the embodiment shown in FIG. 2A.

S603: The first UE adjusts the first signal strength threshold if M does not meet the first resource quantity. Alternatively, the first UE adjusts the first signal strength threshold if S-M does not meet the first resource quantity. The first signal strength threshold is a signal strength threshold used in the first selection manner.

For more content of S603, refer to S203 in the embodiment shown in FIG. 2A.

S604: The first UE determines a fourth signal strength threshold based on an adjusted signal strength threshold. The fourth signal strength threshold is used as a final signal strength threshold. The fourth signal strength threshold is also a signal strength threshold used in the first selection manner.

For more content of S604, refer to S204 in the embodiment shown in FIG. 2A.

S605: The first UE determines a third signal strength threshold based on the adjusted signal strength threshold and/or the fourth signal strength threshold. The third signal strength threshold is a signal strength threshold used in the second selection manner.

The adjusted signal strength threshold is also associated with the fourth signal strength threshold. Therefore, in this manner, the fourth signal strength threshold used in the first selection manner may be associated with the third signal strength threshold used in the second selection manner. This can reduce resource omission, and avoid repeated resource determining as much as possible.

For example, if the first UE determines the third signal strength threshold based on the fourth signal strength threshold, the third signal strength threshold is, for example, equal to the fourth signal strength threshold. The fourth signal strength threshold may include one or more thresholds. Regardless of a quantity of thresholds included in the fourth signal strength threshold, the third signal strength threshold is equal to the fourth signal strength threshold. Alternatively, if the fourth signal strength threshold includes a plurality of thresholds, the third signal strength threshold may be equal to a largest value in the plurality of thresholds, so that the third signal strength threshold is as large as possible to cover more transmissions in which the first UE is used as a receiver. This reduces problems such as resource omission caused by mismatch of two thresholds (namely, the fourth signal strength threshold and the third signal strength threshold).

Alternatively, the first UE may determine the fourth signal strength threshold based on the adjusted signal strength threshold. A determining manner is similar to the manner of determining the third signal strength threshold based on the fourth signal strength threshold.

Alternatively, the first UE may determine the third signal strength threshold based on the fourth signal strength threshold and the adjusted signal strength threshold. For example, a determining manner is that the first UE determines a larger value between the fourth signal strength threshold and the adjusted signal strength threshold as the third signal strength threshold. This manner is applicable to a case in which the fourth signal strength threshold includes one threshold. In this case, the first UE may use a larger value between the fourth signal strength threshold and the adjusted signal strength threshold as the third signal strength threshold. For another example, another determining manner is that the first UE determines a largest value in the fourth signal strength threshold and the adjusted signal strength threshold as the third signal strength threshold. This manner is applicable to a case in which the fourth signal strength threshold includes a plurality of thresholds. In this case, the first UE may use a largest value in the plurality of thresholds included in the fourth signal strength threshold and a plurality of thresholds included in the adjusted signal strength threshold as the third signal strength threshold. For still another example, the first UE obtains an average value of the fourth signal strength threshold and the adjusted signal strength threshold. If a quantity of obtained average values is 1, the first UE uses the average value as the third signal strength threshold. If a quantity of obtained average values is greater than 1, the first UE uses a largest value in these average values as the third signal strength threshold, or uses these average values as thresholds included in the third signal strength threshold. For a manner in which the first UE obtains the average value of the fourth signal strength threshold and the adjusted signal strength threshold, refer to the foregoing embodiment. The first UE uses a larger value as the third signal strength threshold, so that problems such as resource omission caused by mismatch between the fourth signal strength threshold and the third signal strength threshold can be reduced. However, in this manner, the resource determined in the first selection manner and the resource determined in the second selection manner may overlap (or be repeated). In this case, the first UE may sort out the repeated resource. For example, when indicating to the second UE, the first UE may indicate the repeated resource only once, to reduce space waste of the first message. Certainly, the first UE may determine the third signal strength threshold based on the fourth signal strength threshold and the adjusted signal strength threshold. There may also be other determining manners, which fall within the protection scope of embodiments of this application.

If the first UE determines the third signal strength threshold in the manner provided in embodiments of this application, the first selection manner may be complementary to the second selection manner. For example, when the resource whose signal strength is greater than the fourth signal strength threshold is used as the unrecommended resource in the first selection manner, the resource whose signal strength is less than or equal to the third signal strength threshold and that uses the first UE as a receiver may be used as the unrecommended resource in the second selection manner. When a remaining resource other than the resource whose signal strength is less than or equal to the fourth signal strength threshold in the S resources is used as the unrecommended resource in the first selection manner, the resource whose signal strength is less than or equal to the third signal strength threshold and that uses the first UE as a receiver is used as the unrecommended resource in the second selection manner.

S606: The first UE sends the first message to the second UE. Correspondingly, the second UE receives the first message from the first UE.

The first message may indicate K resources and P resources. For example, the first message may carry information of the K resources and the P resources to indicate the K resources and the P resources. The K resources and the P resources are unrecommended resources. After receiving the first message, when selecting a resource for sending data to the first UE, the second UE may use the K resources and the P resources as a reference. For example, when sending data to the first UE, the second UE may avoid selecting the K resources and the P resources as much as possible. This can reduce transmission interference, and improve transmission reliability.

For example, the K resources include the resource determined in the first selection manner. For this, refer to the description of the foregoing embodiment. For example, the P resources include the resource determined in the second selection manner. To be specific, the first UE may determine, from the S resources, the P resources that do not meet the third signal strength threshold and that use the first UE as a receiver, where P is a positive integer.

Alternatively, the first UE may separately indicate the K resources and the P resources to the second UE by using different messages. For example, the first UE sends a first message to the second UE to indicate the K resources, and the first UE sends a second message to the second UE to indicate the P resources.

For this embodiment of this application, how to determine the signal strength threshold in the second selection manner is mainly described. Therefore, S601 to S604 are optional steps.

According to the solution in this embodiment of this application, the first signal strength threshold and the second signal strength threshold can be associated. This can reduce resource omission, and avoid repeated resource determining as much as possible.

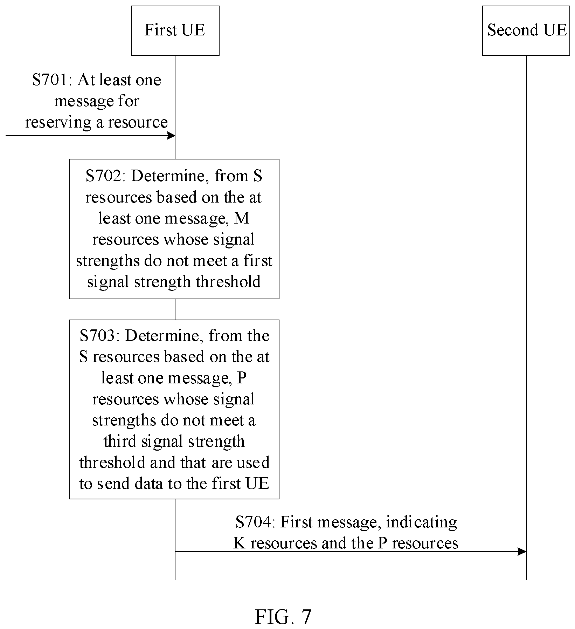

In the embodiment shown in FIG. 6, the signal strength threshold (the fourth signal strength threshold) used in the first selection manner is determined in the manner provided in the embodiment shown in FIG. 2A. Alternatively, it is possible that both the signal strength threshold used in the first selection manner and the signal strength threshold used in the second selection manner are thresholds that are preconfigured or predefined in a protocol, and the two thresholds may be equal. The following describes a sixth communication method provided in an embodiment of this application. In the method, both the signal strength threshold used in the first selection manner and the signal strength threshold used in the second selection manner are thresholds that are preconfigured or predefined in a protocol. FIG. 7 is a flowchart of the method.

S701: The first UE receives at least one message for reserving a resource.

For more content of S701, refer to S201 in the embodiment shown in FIG. 2A.

S702: The first UE determines, from S resources based on the at least one message, M resources whose signal strengths do not meet a first signal strength threshold, where M is a positive integer, and S is an integer greater than or equal to M. For example, the S resources include all resources in a resource selection window. The M resources are, for example, all or a part of resources reserved by using the at least one message.

The first signal strength threshold may be predefined in a protocol, or may be preconfigured in the first UE. For content of this part, refer to S202 in the embodiment shown in FIG. 2A.

S703: The first UE determines, from the S resources based on the at least one message, P resources whose signal strengths do not meet a third signal strength threshold and that are used to send data to the first UE, where P is a positive integer.

The third signal strength threshold may be predefined in a protocol, or may be preconfigured in the first UE. For example, the third signal strength threshold is equal to the first signal strength threshold. For example, the second UE determines, from the S resources, a resource whose signal strength is less than or equal to the third signal strength threshold and that uses the first UE as a receiver, and determines the P resources in total.

Because the first signal strength threshold may be equal to the third signal strength threshold, the first selection manner may be complementary to the second selection manner. For example, when the resource whose signal strength is greater than the first signal strength threshold is used as the unrecommended resource in the first selection manner, the resource whose signal strength is less than or equal to the third signal strength threshold and that uses the first UE as a receiver may be used as the unrecommended resource in the second selection manner. When a remaining resource other than the resource whose signal strength is less than or equal to the first signal strength threshold in the S resources is used as the unrecommended resource in the first selection manner, the resource whose signal strength is less than or equal to the third signal strength threshold and that uses the first UE as a receiver is used as the unrecommended resource in the second selection manner.

S704: The first UE sends the first message to the second UE. Correspondingly, the second UE receives the first message from the first UE.

The first message may indicate K resources and P resources. For example, the first message may carry information of the K resources and the P resources to indicate the K resources and the P resources. The K resources and the P resources are unrecommended resources. After receiving the first message, when selecting a resource for sending data to the first UE, the second UE may use the K resources and the P resources as a reference. For example, when sending data to the first UE, the second UE may avoid selecting the K resources and the P resources as much as possible. This can reduce transmission interference, and improve transmission reliability.

For example, the K resources include the resource determined in the first selection manner. After determining the M resources, the first UE may not adjust the first signal strength threshold. In other words, the first signal strength threshold is a fixed value. In this case, K=M. Alternatively, after determining the M resources, the first UE may adjust the first signal strength threshold based on a relationship between M and a first resource quantity. In this case, K may not be equal to M. For this, refer to the description in the foregoing embodiment. For example, the P resources include the resource determined in the second selection manner. To be specific, the first UE may determine, from the S resources, the P resources that do not meet the third signal strength threshold and that use the first UE as a receiver, where P is a positive integer.

Alternatively, the first UE may separately indicate the K resources and the P resources to the second UE by using different messages. For example, the first UE sends a first message to the second UE to indicate the K resources, and the first UE sends a second message to the second UE to indicate the P resources.

According to the solution in this embodiment of this application, the first signal strength threshold and the second signal strength threshold can be equal. This can reduce resource omission, and avoid repeated resource determining as much as possible.

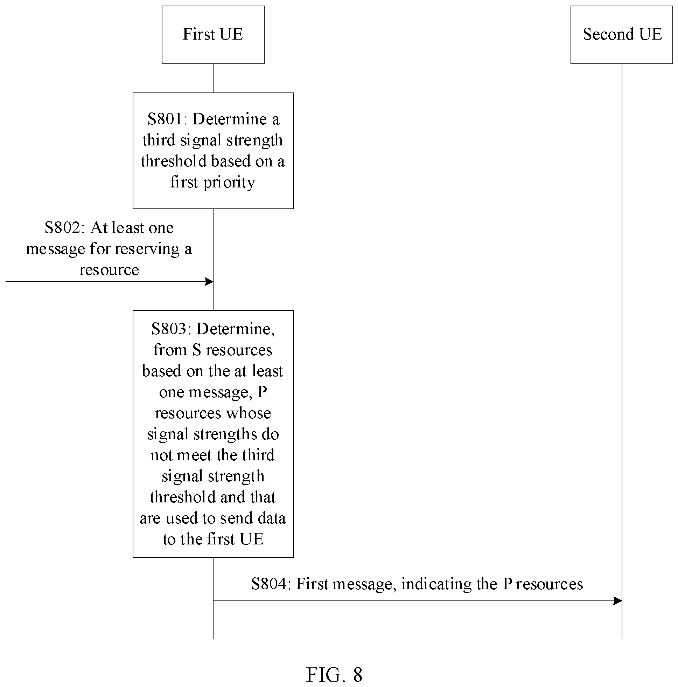

In the embodiment shown in FIG. 6 or the embodiment shown in FIG. 7, the signal strength threshold used in the first selection manner is related to the signal strength threshold used in the second selection manner. Alternatively, it is possible that the signal strength thresholds used in the two selection manners may not be associated, so that the solution is more flexible. The following describes a seventh communication method provided in an embodiment of this application, to describe a manner of determining the signal strength threshold used in the second selection manner. In the method, the signal strength threshold used in the second selection manner may not be determined based on the signal strength threshold used in the first selection manner. FIG. 8 is a flowchart of the method.

S801: The first UE determines a third signal strength threshold based on a first priority.

The first priority is, for example, a preset priority (for example, predefined in a protocol, determined by the first UE, or preconfigured in the first UE), or the first priority is, for example, a priority indicated by the second UE. For example, if the second UE indicates the priority to the first UE, the priority is used as the first priority. If the second UE does not indicate the priority to the first UE, the preset priority is used as the first priority. Alternatively, the first priority may also be decoupled from the foregoing determining condition. For example, regardless of whether the second UE indicates the priority to the first UE, the preset priority is used as the first priority. For the description of the first priority, refer to S202 in the embodiment shown in FIG. 2A.

Optionally, the preset priority may use a priority corresponding to a larger threshold in first information as much as possible, or a value of the preset priority may be as small as possible. For example, the first information is implemented by using Table 1. In Table 1, a row of thresholds corresponding to $P_j=1$ may be greater than a row of thresholds corresponding to $P_j=2$. Therefore, the preset priority is, for example, $P_j=1$. Alternatively, the preset priority may be any priority.

For example, the first UE determines the third signal strength threshold based on the first priority and the first information. It may be learned from the embodiment shown in FIG. 2A that, in the first information, the first priority may correspond to a plurality of message priorities, each message priority corresponding to the first priority and the first priority jointly correspond to one threshold, and the first priority may correspond to a plurality of thresholds. For example, the plurality of thresholds corresponding to the first priority (or a group of thresholds corresponding to the first priority) may be used as the third signal strength threshold, a threshold with a largest value in the plurality of thresholds corresponding to the first priority may be used as the third signal strength threshold, or a threshold corresponding to a largest value of a message priority (or corresponding to a lowest message priority) in the plurality of thresholds corresponding to the first priority may be used as the third signal strength threshold. For example, the first information is implemented by using Table 1. For example, if the first priority is $P_j=1$, a row of thresholds corresponding to $P_j=1$ may be used as the third signal strength threshold, a threshold with a largest value in the row of thresholds is used as the third signal strength threshold, for example, the threshold with a largest value is TH8, or a threshold corresponding to a largest value of a message priority in the row of thresholds may be used as the third signal strength threshold, and the message priority with a largest value is $P_i=8$. Therefore, TH8 corresponding to $P_j=1$ and $P_i=8$ may be used as the third signal strength threshold.

A lower message priority indicates a higher value of the message priority and a larger corresponding threshold. Therefore, according to the method provided in this embodiment of this application, equivalently the signal strength threshold used in the second selection manner is maximized, to cover more transmissions in which the first UE is used as a receiver.

S802: The first UE receives at least one message for reserving a resource.

For more content of S801, refer to S201 in the embodiment shown in FIG. 2A.

S803: The first UE determines, from S resources based on the at least one message, P resources whose signal strengths do not meet the third signal strength threshold and that are used to send data to the first UE, where P is a positive integer.

For example, the first UE may determine, from the S resources, the P resources whose signal strengths are less than or equal to the third signal strength threshold and that use the first UE as a receiver.

S804: The first UE sends the first message to the second UE. Correspondingly, the second UE receives the first message from the first UE.

The first message may indicate the P resources. For example, the first message may carry information of the P resources to indicate the P resources. P is a positive integer, for example, P is less than or equal to a resource quantity threshold, or it is understood that P may be determined based on the resource quantity threshold. For example, in an optional scenario, if the first UE determines an unrecommended resource only in the second selection manner, and no longer determines the unrecommended resource in another selection manner (for example, the first selection manner), P is the resource quantity threshold. The P resources are unrecommended resources. After receiving the first message, the second UE may use the P resources as a reference when selecting a resource for sending data to the first UE. For example, when sending data to the first UE, the second UE may avoid selecting the P resources as much as possible. This can reduce transmission interference, and improve transmission reliability.

According to the method provided in this embodiment of this application, the signal strength threshold used in the second selection manner can be maximized, to cover more transmissions in which the first UE is used as a receiver.

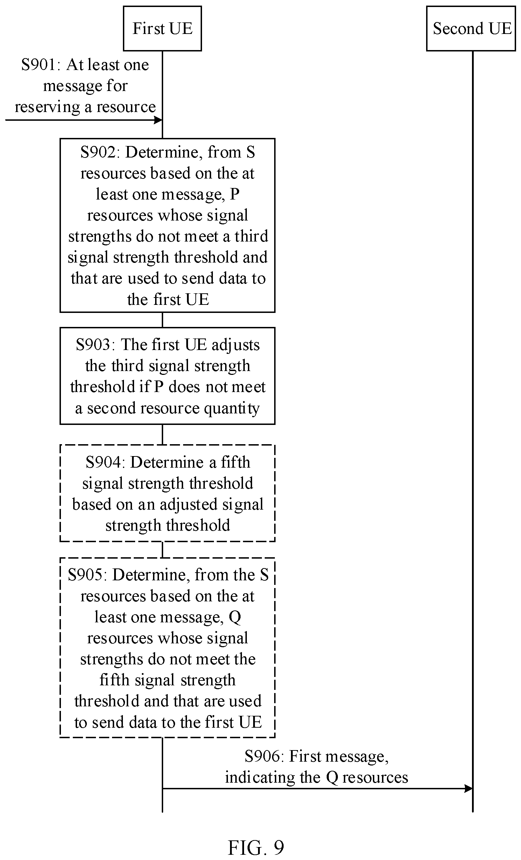

In any one of the embodiment shown in FIG. 6 to the embodiment shown in FIG. 8, the first UE determines the unrecommended resource in the second selection manner. In a description process of the foregoing embodiment, a problem of whether the signal strength threshold in the second selection manner may be adjusted is not involved. However, in practice, after the first UE determines the third signal strength threshold, the third signal strength threshold may be used as a fixed threshold and is no longer adjusted, or the first UE may adjust the third signal strength threshold based on a selected resource quantity or the like, so that the signal strength threshold used in the second selection manner is more appropriate. The following describes an eighth method provided in an embodiment of this application. A manner of adjusting the signal strength threshold used in the second selection manner is described by using the method. FIG. 9 is a flowchart of the method.

S901: The first UE receives at least one message for reserving a resource.

For more content of S901, refer to S201 in the embodiment shown in FIG. 2A.

S902: The first UE determines, from S resources based on the at least one message, P resources whose signal strengths do not meet a third signal strength threshold and that are used to send data to the first UE.

For a manner of determining the third signal strength threshold, refer to the embodiment shown in FIG. 6. For more content of S902, refer to S605 in the embodiment shown in FIG. 6. Alternatively, for a manner of determining the third signal strength threshold, refer to the embodiment shown in FIG. 7. For more content of S902, refer to S703 in the embodiment shown in FIG. 7. Alternatively, for a manner of determining the third signal strength threshold, refer to the embodiment shown in FIG. 8. For more content of S902, refer to S803 in the embodiment shown in FIG. 8.

After determining the third signal strength threshold, the first UE may determine, from the S resources, a resource whose signal strength does not meet the third signal strength threshold and a resource for sending data to the first UE. For example, the first UE determines the P resources in total. For example, the first UE separately determines whether a signal strength of a resource reserved by using the at least one message meets the third signal strength threshold and whether the first UE is used as a receiver, to determine the P resources. If the third signal strength threshold includes one threshold, it is determined whether the threshold is met regardless of which message is used to reserve a resource. However, if the third signal strength threshold includes a plurality of thresholds, different messages in the at least one message may correspond to different thresholds in the plurality of thresholds, or may correspond to a same threshold in the plurality of thresholds. For example, a threshold corresponding to one of the at least one message is related to a priority indicated by the message and a first priority. For content of this part, refer to S202 in the embodiment shown in FIG. 2A.

S903: If P does not meet a second resource quantity, the first UE adjusts the third signal strength threshold.

For example, the second resource quantity is determined based on a resource quantity threshold. For example, the second resource quantity is less than or equal to the resource quantity threshold. The second resource quantity is further described in the following other embodiments. In addition, it should be noted that if the first UE determines an unrecommended resource based only on a manner corresponding to the second resource quantity (that is, determines the unrecommended resource in the second selection manner), and no longer determines the unrecommended resource in another manner (for example, the first selection manner), the second resource quantity is the resource quantity threshold. That is, in this case, the second resource quantity and the resource quantity threshold are a same feature.

For the description of the resource quantity threshold, refer to S203 in the embodiment shown in FIG. 2A.

For example, that signal strengths of the P resources do not meet the third signal strength threshold in S903 may mean that the signal strengths of the P resources are less than or equal to the third signal strength threshold. For example, that P meets the second resource quantity means that P is less than or equal to the second resource quantity, and that P does not meet the second resource quantity means that M is greater than the second resource quantity; that P meets the second resource quantity means that P is equal to the second resource quantity, and that P does not meet the second resource quantity means that P is greater than the second resource quantity or P is less than the second resource quantity; that P meets the second resource quantity means that P is greater than or equal to the second resource quantity, and that P does not meet the second resource quantity means that P is less than the second resource quantity; or that P meets the second resource quantity means that P is less than or equal to the second resource quantity, if P is less than the second resource quantity, P is greater than or equal to a second threshold, and that P does not meet the second resource quantity means that P is greater than the second resource quantity or means that P is less than the second resource quantity and less than a second threshold. The second threshold is less than the second resource quantity. The second threshold may be equal to or unequal to the first threshold mentioned in the embodiment shown in FIG. 2A. For example, the second resource quantity is 100, and the second threshold is 50. If P is less than 50, it indicates that P is excessively small, and it is considered that P does not meet the second resource quantity. However, if P is less than 100, but P is greater than or equal to 50, it is still considered that P meets the second resource quantity. Because the signal strengths of the P resources are less than or equal to the third signal strength threshold, and the first UE is used as a receiver, it indicates that the P resources may be used as candidate resources of the unrecommended resource. If P is greater than the second resource quantity, it indicates that excessive unrecommended resources are determined, and a message sent by the first UE to the second UE (the message indicates an unrecommended resource, and is, for example, referred to as a first message) may not carry information of the unrecommended resources. If P is less than the second resource quantity (or P is less than the second resource quantity and less than the first threshold), it indicates that excessively few unrecommended resources are determined, and bearing space of the first message is wasted. Therefore, no matter whether P is greater than the second resource quantity or P is less than the second resource quantity (or P is less than the second resource quantity and less than the first threshold), it may be considered that P does not meet the second resource quantity. Alternatively, if P is less than the second resource quantity, although bearing space of the first message is wasted, a case in which the first message cannot be sent or all unrecommended resources cannot be indicated to the second UE is not caused. Therefore, if P is less than the second resource quantity, it is considered that the P resources meet the second resource quantity. Only if P is greater than the second resource quantity, it is considered that the P resources do not meet the second resource quantity.

If P does not meet the second resource quantity, the first UE may adjust the third signal strength threshold. For example, the first UE may perform one or more adjustments until an adjusted signal strength threshold enables a determined quantity of unrecommended resources to meet the second resource quantity. For example, during each adjustment, the first UE adds an adjustment amount to the third signal strength threshold (if the adjustment manner is to decrease the signal strength threshold, the adjustment amount may be a negative number) to obtain the adjusted threshold. For example, the adjustment amount is predefined in a protocol, determined by the first UE, or preconfigured in the first UE. For example, the adjustment amount is 3 dB, or may be another value. If the third signal strength threshold includes only one threshold, the first UE only needs to adjust the threshold. If the third signal strength threshold includes a plurality of thresholds, the first UE may adjust each of the plurality of thresholds. For example, during each adjustment, a same adjustment amount is added to each of the plurality of thresholds. For example, if the first UE determines that P does not meet the second resource quantity, the first UE may adjust the third signal strength threshold to obtain an adjusted third signal strength threshold, for example, referred to as a signal strength threshold $E_1$. The first UE determines, from the S resources based on the signal strength threshold $E_1$, a resource whose signal strength does not meet the signal strength threshold $E_1$ and that uses the first UE as a receiver, for example, determines $F_1$ resources. If $F_1$ meets the second resource quantity, the adjustment process ends, and the signal strength threshold $E_1$ is used as the adjusted signal strength threshold. If $F_1$ still does not meet the second resource quantity, the first UE continues to adjust the signal strength threshold $E_1$ to obtain an adjusted signal strength threshold $E_1$, for example, referred to as a signal strength threshold $E_2$. The first UE determines, from the S resources based on the signal strength threshold $E_2$, a resource whose signal strength does not meet the signal strength threshold $E_2$ and that uses the first UE as a receiver, for example, determines $F_2$ resources. The first UE continues to determine whether $F_2$ meets the second resource quantity. The rest can be done in the same manner until after a specific adjustment is completed, a quantity of resources determined based on an adjusted signal strength threshold (for example, referred to as a signal strength threshold $E_3$) can meet the second resource quantity. In this case, the signal strength threshold E is determined as the adjusted signal strength threshold. That is, the first UE may perform one or more adjustments, and the adjusted signal strength threshold is a signal strength threshold obtained after all adjustment processes are completed, or a signal strength threshold obtained after a last adjustment is completed. A relationship between the "adjusted signal strength threshold" and the "adjusted third signal strength threshold" is similar to that between the "adjusted signal strength threshold" and the "adjusted first signal strength threshold" in the embodiment shown in FIG. 2A. For corresponding description, refer to S203 in the embodiment shown in FIG. 2A. It should be noted that in this embodiment of this application, the adjusted signal strength threshold is for the second selection manner, and the adjusted signal strength threshold in the foregoing embodiment is for the first selection manner. The two are different.

For example, if that P does not meet the second resource quantity is specifically that P is greater than the second resource quantity, a manner in which the first UE adjusts the third signal strength threshold is to increase the third signal strength threshold. For example, the first UE may increase the signal strength threshold one or more times until an increased signal strength threshold enables the determined quantity of unrecommended resources to be less than or equal to the second resource quantity. For example, if P is greater than the second resource quantity, the first UE increases the third signal strength threshold, and the increased third signal strength threshold is, for example, a signal strength threshold 13. The first UE then determines, from the S resources, a resource whose signal strength is greater than the signal strength threshold 13 and that uses the first UE as a receiver, for example, determines k resources. If k is less than or equal to the second resource quantity, the first UE does not perform an adjustment, and the signal strength threshold 13 may be used as the adjusted signal strength threshold. If k is still greater than the second resource quantity, the first UE increases the signal strength threshold 13. An increased signal strength threshold 13 is, for example, a signal strength threshold 14. The first UE then determines, from the S resources, a resource whose signal strength is greater than the signal strength threshold 14 and that uses the first UE as a receiver, for example, determines q resources. The first UE continues to determine whether q is greater than the second resource quantity. The rest can be done in the same manner until after a specific increase of the signal strength threshold is completed (for example, an obtained signal strength threshold is a signal strength threshold 15), a quantity of resources whose signal strengths are greater than the signal strength threshold 15 and that use the first UE as a receiver in the S resources is less than or equal to the second resource quantity. In this case, the signal strength threshold 15 is used as the adjusted signal strength threshold.

For another example, if that P does not meet the second resource quantity is specifically that P is less than the second resource quantity, a manner in which the first UE adjusts the third signal strength threshold is to decrease the third signal strength threshold. For example, the first UE may decrease the signal strength threshold one or more times until a decreased signal strength threshold enables the determined quantity of unrecommended resources to be greater than or equal to the second resource quantity. Alternatively, that P does not meet the second resource quantity means that P is less than the second resource quantity and less than the second threshold. In this case, a manner in which the first UE adjusts the third signal strength threshold is to decrease the third signal strength threshold. For example, the first UE may decrease the signal strength threshold one or more times until a decreased signal strength threshold enables the determined quantity of unrecommended resources to be less than or equal to the second resource quantity, and if P is less than the second resource quantity, P needs to be greater than or equal to the second threshold. For example, that P does not meet the second resource quantity means that P is less than the second resource quantity. For example, if P is less than the second resource quantity, the first UE decreases the third signal strength threshold, and a decreased third signal strength threshold is, for example, a signal strength threshold 16. The first UE then determines, from the S resources, a resource whose signal strength is less than or equal to the signal strength threshold 16 and that uses the first UE as a receiver, for example, determines r resources. If r is greater than or equal to the second resource quantity, the first UE does not perform an adjustment, and the signal strength threshold 16 may be used as the adjusted signal strength threshold. If 4 is still less than the second resource quantity, the first UE decreases the signal strength threshold 16. A decreased signal strength threshold 16 is, for example, a signal strength threshold 17. The first UE then determines, from the S resources, a resource whose signal strength is less than or equal to the signal strength threshold 17 and that uses the first UE as a receiver, for example, determines s resources. The first UE continues to determine whether s is less than the second resource quantity. The rest can be done in the same manner until after a specific decrease of the signal strength threshold is completed (for example, an obtained signal strength threshold is a signal strength threshold 18), a quantity of resources whose signal strengths are less than or equal to the signal strength threshold 18 and that use the first UE as a receiver in the S resources is greater than or equal to the second resource quantity. In this case, the signal strength threshold 18 is used as the adjusted signal strength threshold.

Optionally, corresponding adjustment amounts by which the first UE increases the signal strength threshold and decreases the signal strength threshold may be the same or different. For example, the first UE increases the signal strength threshold based on a third adjustment amount, that is, increases by the third adjustment amount in each adjustment. The first UE decreases the signal strength threshold based on a fourth adjustment amount, that is, decreases by the fourth adjustment amount in each adjustment. The third adjustment amount and the fourth adjustment amount may be the same or different.

In another special case, if P meets the second resource quantity, the first UE does not need to adjust the third signal strength threshold, that is, S903 does not need to be performed.

S904: The first UE determines a fifth signal strength threshold based on the adjusted signal strength threshold. The fifth signal strength threshold is used as a final signal strength threshold. The fifth signal strength threshold corresponds to the second selection manner.

For a manner in which the first UE determines the fifth signal strength threshold based on the adjusted signal strength threshold, refer to a manner in which the first UE determines the fourth signal strength threshold based on the adjusted signal strength threshold in the embodiment shown in FIG. 2A. Therefore, for more content of S904, refer to S204.

S904 may be completed when S903 is performed. Therefore, S904 is an optional step.

S905: The first UE determines, from the S resources based on the at least one message, Q resources whose signal strengths do not meet the fifth signal strength threshold and that use the first UE as a receiver. The Q resources are unrecommended resources determined in the second selection manner. That is, the Q resources are resources that are determined in the second selection manner and that are non-preferred for sending data to the first UE.

For example, the first UE may determine, from the S resources, the Q resources whose signal strengths are less than or equal to the fifth signal strength threshold and that use the first UE as a receiver. Because the fifth signal strength threshold is a determined signal strength threshold, the Q resources may be finally determined unrecommended resources. Alternatively, when determining the fifth signal strength threshold in S904, the first UE may simultaneously determine the Q resources. Therefore, S905 and S904 may be a same step. Alternatively, in S903, the first UE may determine the fifth signal strength threshold and determine the Q resources in a process of adjusting the third signal strength threshold. In this case, S903 to S905 may be completed by using one step, for example, this step is S903. In a process of adjusting the third signal strength threshold, the first UE can determine the fifth signal strength threshold and determine the Q resources. Therefore, S905 is an optional step.

S906: The first UE sends the first message to the second UE. Correspondingly, the second UE receives the first message from the first UE.

The first message may indicate the Q resources. For example, the first message may carry information of the Q resources to indicate the N resources. After receiving the first message, the second UE may use the Q resources as a reference when selecting a resource for sending data to the first UE. For example, when sending data to the first UE, the second UE may avoid selecting the Q resources as much as possible. This reduces transmission interference, and improves transmission reliability.

In this embodiment of this application, the signal strength threshold for determining the unrecommended resource may be adjusted in the second selection manner. An appropriate threshold (namely, the fifth signal strength threshold) can be determined through adjustment, the threshold is neither excessively high nor excessively low, and the unrecommended resources are determined based on the threshold. In this way, resources that should be determined as unrecommended resources may be determined as many as possible, and resources that should not be determined as unrecommended resources may not be determined. That is, a case of omitting a part of resources can be reduced, and the second UE has sufficient optional resources.

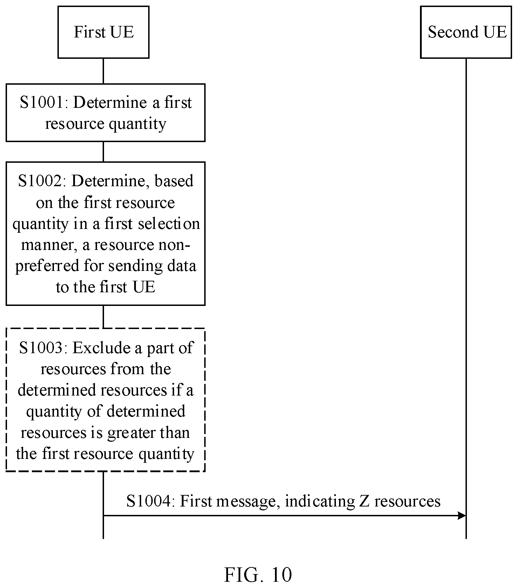

As described above, this embodiment of this application relates to the first selection manner and the second selection manner. If the first UE determines a resource in both the first selection manner and the second selection manner, the message sent by the first UE to the second UE may indicate the unrecommended resource determined in the two selection manners. However, bearing space of the message sent by the first UE to the second UE is limited. Therefore, the following provides a ninth communication method according to an embodiment of this application, to describe how to determine a quantity of resources determined in the two selection manners. FIG. 10 is a flowchart of the method.

S1001: The first UE determines a first resource quantity. The first resource quantity in this embodiment of this application and the first resource quantity in the foregoing embodiment may be a same feature.

For example, the first resource quantity is an upper limit of a quantity of resources that can be determined when the first selection manner is used to determine a resource non-preferred for sending data to the first UE. In other words, if the first selection manner is used to determine an unrecommended resource, a maximum of the first resource quantity of resources are determined. It is equivalent to that the first UE first determines the upper limit of the quantity of resources that can be determined in the first selection manner, and may determine the resource in the first selection manner based on the first resource quantity, to avoid an excessive quantity of resources determined in the first selection manner.

The first UE may determine the first resource quantity in different manners. The following describes an example.

A first optional manner in which the first UE determines the first resource quantity is that the first UE may determine a first-type resource. The first-type resource includes, for example, a reserved resource for sending data to the first UE (or described as a resource reserved for sending data to the first UE, or described as a resource having been reserved for sending data to the first UE, or described as a resource for sending data to the first UE, or described as a detected resource for sending data to the first UE, or described as a resource that is detected by the first UE and that is reserved by using a message using the first UE as a destination address (where the message is used to reserve a resource)); or the first-type resource includes a resource that is detected by the first UE and that is reserved by using a message using the first UE as a receiver, and the message is used to reserve a resource. Herein, the receiver of the message is the first UE, and the message is used to reserve a resource. In this case, the resource reserved by using the message may be included in the first-type resource. For example, if the first-type resource includes the reserved resource that is determined by the first UE and that is used to send data to the first UE, the first-type resource may include all or a part of resources in the reserved resource for sending data to the first UE. The first UE then determines the first resource quantity based on a resource quantity threshold and the reserved resource for sending data to the first UE. Alternatively, if the first-type resource includes the resource that is detected by the first UE and that is reserved by using the message using the first UE as a receiver, the first-type resource may include all or a part of resources in the resource that is detected by the first UE and that is reserved by using the message using the first UE as the receiver. In the following description, an example in which the first-type resource includes the reserved resource for sending data to the first UE is used.

Optionally, the first resource quantity is equal to a difference between the resource quantity threshold and a quantity of reserved resources for sending data to the first UE. In other words, the first resource quantity is a value obtained by subtracting, from the resource quantity threshold, the quantity of reserved resources for sending data to the first UE. For example, the first UE may receive at least one message for reserving a resource. In the resource reserved by using the at least one message, all or a part of resources in the resource for sending data to the first UE are the reserved resource that is determined by the first UE and that is used to send data to the first UE. For example, the quantity of reserved resources that are determined by the first UE and that are used to send data to the first UE is $N_A$. For the description of the resource quantity threshold, refer to the embodiment shown in FIG. 2A. For example, the resource quantity threshold is $N_M$, and the first resource quantity may be determined based on $N_A$ and $N_M$. For example, a manner is that the first resource quantity=$N_M - N_A$.

A second optional manner in which the first UE determines the first resource quantity is that the first UE may determine a second resource quantity, and then determine the first resource quantity based on the resource quantity threshold and the second resource quantity. Optionally, the first resource quantity is equal to a difference between the resource quantity threshold and the second resource quantity. For example, the second resource quantity is represented by $N_S$. Optionally, the first resource quantity=$N_M - N_S$. For example, the second resource quantity is a quantity of resources that are determined in the second selection manner and that are non-preferred for sending data to the first UE. For example, the first UE determines the unrecommended resource in the second selection manner, and the determined quantity of unrecommended resources is the second resource quantity. For the determining manner, refer to the embodiment shown in FIG. 6, the embodiment shown in FIG. 7, the embodiment shown in FIG. 8, or the embodiment shown in FIG. 9. After determining the second resource quantity, the first UE may determine the first resource quantity.

S1002: The first UE determines, based on the first resource quantity in the first selection manner, the resource non-preferred for sending data to the first UE.

The first UE may determine, in the first selection manner, the resource non-preferred for sending data to the first UE. For a determining manner, refer to the embodiment shown in FIG. 2A, the embodiment shown in FIG. 3, the embodiment shown in FIG. 4, the embodiment shown in FIG. 5, the embodiment shown in FIG. 6, or the embodiment shown in FIG. 7. For example, a quantity of unrecommended resources determined by the first UE in the first selection manner is $N_Y$.

S 1003: If $N_Y$ is greater than the first resource quantity, the first UE excludes a part of resources from the $N_Y$ resources. For example, a quantity of a part of excluded resources is E, and $N_Y$ - E resources are unrecommended resources determined by the first UE.

The first resource quantity is an upper limit of the quantity of resources determined in the first selection manner. When the first UE determines the resource in the first selection manner, the determined quantity of resources should be less than or equal to the first resource quantity. Therefore, if $N_Y$ is greater than the first resource quantity, the first UE may exclude a part of resources from the $N_Y$ resources, so that $N_Y$-E is less than or equal to the first resource quantity.

The first UE may exclude the E resources from the $N_Y$ resources in a plurality of exclusion manners. For example, an exclusion manner is that the first UE randomly determines the E resources from the $N_Y$ resources. This manner is simple.

Alternatively, another determining manner is that the first UE excludes E resources with lowest signal strengths from the $N_Y$ resources, where the lowest signal strengths may be lowest interference. Equivalently, the first UE does not need to notify the second UE of the resources with the lowest interference. Even if the second UE uses these resources, interference may not be quite high. For example, the first UE sorts the $N_Y$ resources in descending order of corresponding signal strengths, and excludes last E resources. For example, each of the $N_Y$ resources corresponds to a first parameter. That the first parameter is an RSRP is used as an example. The first UE sorts $N_Y$ RSRPs, and excludes last E resources. In this case, signal strengths of the E resources are less than or equal to signal strengths of $N_Y$-E resources.

Alternatively, still another determining manner is that the first UE selects, from the $N_Y$ resources, E resources whose signal strengths are less than or equal to a sixth signal strength threshold, where the sixth signal strength threshold may be predefined in a protocol, preconfigured in the first UE, or set by the first UE. The sixth signal strength may be equal to or unequal to the second signal strength mentioned in the foregoing embodiment. For example, if a quantity of resources whose signal strengths are less than the sixth signal strength threshold in the $N_Y$ resources is less than or equal to the resource quantity threshold, the E resources may include all or a part of resources whose signal strengths are less than or equal to the sixth signal strength threshold in the $N_Y$ resources; or if a quantity of resources whose signal strengths are less than or equal to the sixth signal strength threshold in the $N_Y$ resources is greater than the resource quantity threshold, the E resources may include a part of resources in the $N_Y$ resources, where E is less than or equal to the resource quantity threshold.

Alternatively, if the first UE determines the first resource quantity in the first optional manner in S1001, a manner in which the first UE excludes a part of resources from the $N_Y$ resources is that the first UE excludes, from the $N_Y$ resources, the reserved resource for sending data to the first UE. Because the reserved resource for sending data to the first UE is excluded when the first resource quantity is determined, it indicates that the resource for sending data to the first UE may fall within the range of consideration of the second selection manner. Both the resource determined in the first selection manner and the resource determined in the second selection manner may be indicated by the first UE to the second UE. Therefore, if the resources for sending data to the first UE may be determined in the second selection manner, these resources may not need to be determined when the resource is determined in the first selection manner. This reduces a quantity of repeatedly determined resources, and reduces consumption of bearing space of the message (for indicating the unrecommended resource) sent by the first UE to the second UE.

Alternatively, if the first UE determines the first resource quantity in the second optional manner in S1001, a manner in which the first UE excludes a part of resources from the $N_Y$ resources is that the resource for sending data to the first UE is not excluded. That is, the resource for sending data to the first UE in the $N_Y$ resources may be reserved as many as possible, and other resources may be excluded. When the first resource quantity is determined in the second optional manner, the second resource quantity is determined, indicating that the first UE has determined a part of resources whose signal strengths are low and that use the first UE as a receiver. Resources whose signal strengths are high and that use the first UE as a receiver are not determined by the first UE. If the second UE sends data to the first UE by using these resources, high interference may be caused. Therefore, these resources may be reserved, and indicated to the second UE. This reduces a probability of using these resources by the second UE.

In another case, if $N_Y$ is less than or equal to the resource quantity threshold, S 1003 does not need to be performed, but the $N_Y$ resources are used as unrecommended resources. Therefore, S1003 is an optional step.

S 1004: The first UE sends the first message to the second UE. Correspondingly, the second UE receives the first message from the first UE.

The first message may indicate Z resources. For example, the first message may carry information of the Z resources to indicate the Z resources. The Z resources are unrecommended resources. After receiving the first message, the second UE may use the Z resources as a reference when selecting a resource for sending data to the first UE. For example, when sending data to the first UE, the second UE may avoid selecting the Z resources as much as possible. This can reduce transmission interference, and improve transmission reliability.

In this embodiment of this application, a quantity of resources that can be selected in the first selection manner may be determined, and correspondingly a quantity of resources that can be selected in the second selection manner may also be determined, so that the quantities of resources that can be selected in both selection manners can be determined, and a selection process may be clearer. In addition, all finally determined unrecommended resources can be indicated to the second UE.

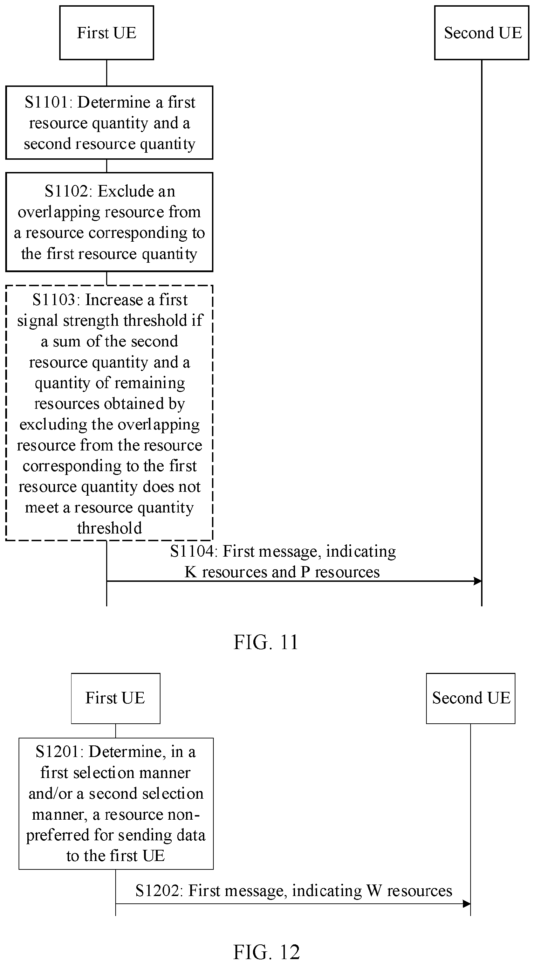

The following provides a tenth communication method according to an embodiment of this application. The method provides another solution for determining a quantity of resources determined in two selection manners. FIG. 11 is a flowchart of the method.

S1101: The first UE determines a first resource quantity and a second resource quantity. For example, the first resource quantity is a quantity of resources that are determined in the first selection manner and that are non-preferred for sending data to the first UE. The second resource quantity is a quantity of resources that are determined in the second selection manner and that are non-preferred for sending data to the first UE. The first resource quantity in this embodiment of this application and the first resource quantity in the foregoing embodiment may be a same feature. The second resource quantity in this embodiment of this application and the second resource quantity in the foregoing embodiment may be a same feature.

For example, the first UE may determine an unrecommended resource in the first selection manner, and a determined quantity of unrecommended resources is the first resource quantity. For example, the first resource quantity is represented by $N_F$. For a manner of determining the unrecommended resource in the first selection manner, refer to the embodiment shown in FIG. 2A, the embodiment shown in FIG. 3, the embodiment shown in FIG. 4, the embodiment shown in FIG. 5, the embodiment shown in FIG. 6, or the embodiment shown in FIG. 7. The first UE may determine an unrecommended resource in the second selection manner, and a determined quantity of unrecommended resources is the second resource quantity. For example, the second resource quantity is represented by $N_S$. For a manner of determining the unrecommended resource in the second selection manner, refer to the embodiment shown in FIG. 6, the embodiment shown in FIG. 7, the embodiment shown in FIG. 8, or the embodiment shown in FIG. 9.

For example, the $N_F$ resources and the $N_S$ resources overlap.

S 1102: The first UE excludes an overlapping resource from a resource corresponding to the first resource quantity. The resource corresponding to the first resource quantity is the $N_F$ resources, and the first UE excludes the overlapping resource from the $N_F$ resources.

Alternatively, S 1102 may be replaced with: The first UE excludes an overlapping resource from the resource corresponding to the second resource quantity. The resource corresponding to the second resource quantity is the $N_S$ resources, and the first UE excludes the overlapping resource from the $N_S$ resources.

S1103 : Increase a first signal strength threshold if a sum of the second resource quantity and a quantity of remaining resources obtained by excluding the overlapping resource from the $N_F$ resources does not meet a resource quantity threshold. Alternatively, if S1102 is that the first UE excludes the overlapping resource from the resource corresponding to the second resource quantity, S1103 may be replaced with: increase a third signal strength threshold If a sum of the second resource quantity and a quantity of remaining resources obtained by excluding the overlapping resource from the $N_S$ resources does not meet a resource quantity threshold. Because the two implementations of S1103 are similar, the following uses S1103 of "if a sum of the second resource quantity and a quantity of remaining resources obtained by excluding the overlapping resource from the $N_F$ resources does not meet a resource quantity threshold, increase a first signal strength threshold" as an example.

The first signal strength threshold is a signal strength threshold corresponding to the first selection manner. It may be understood that the first signal strength threshold in this embodiment of this application may be the first signal strength threshold or the fourth signal strength threshold in the foregoing embodiment. Alternatively, the first signal strength threshold in this embodiment of this application may be predefined in a protocol, preconfigured in the first UE, or determined by the first UE. For example, the first UE may determine the first signal strength threshold based on a first priority. For this process, refer to S202 in the embodiment shown in FIG. 2A. For the resource quantity threshold, refer to the description of the foregoing embodiment.

After the overlapping resource is excluded from the $N_F$ resources, if the sum of the quantity of remaining resources and the second resource quantity does not meet the resource quantity threshold, the first UE may use a corresponding manner.

In a first optional implementation, after the overlapping resource is excluded from the $N_F$ resources, if the sum of the quantity of remaining resources and the second resource quantity is greater than the resource quantity threshold, the first UE may increase the signal strength threshold corresponding to the first selection manner, to reselect a resource in the first selection manner. For example, if the quantity of remaining resources is greater than the resource quantity threshold, the first UE increases the first signal strength threshold, and an increased first signal strength threshold is, for example, a signal strength threshold 19. The first UE then determines a resource whose signal strength is greater than the signal strength threshold 19, for example, determines t resources. The first UE determines an overlapping resource of the t resources and the $N_S$ resources (the overlapping resource of the t resources and the $N_S$ resources and the overlapping resource of the $N_F$ resources and the $N_S$ resources may be a same resource, or may be completely different or not completely the same). If a sum of the second resource quantity and a quantity of resources obtained by excluding the overlapping resource from the t resources is less than or equal to the resource quantity threshold, the first UE does not perform an adjustment, and the signal strength threshold 19 may be used as an adjusted signal strength threshold. However, if the sum of the quantity of resources obtained by excluding the overlapping resource from the t resources and the second resource quantity is still greater than the resource quantity threshold, the first UE increases the signal strength threshold 19. An increased signal strength threshold 19 is, for example, a signal strength threshold 20. The first UE then determines a resource whose signal strength is greater than the signal strength threshold 20, for example, determines u resources. The first UE determines an overlapping resource between the u resources and the $N_S$ resources, and continues to determine whether a sum of the second resource quantity and a quantity of resources obtained by excluding the overlapping resource from the u resources is less than or equal to the resource quantity threshold. The rest can be done in the same manner until after a specific increase of the signal strength threshold is completed (for example, an obtained signal strength threshold is a signal strength threshold 21), a sum of the second resource quantity and a quantity of resources obtained by excluding the overlapping resource from the resources whose signal strengths are greater than the signal strength threshold 21 is less than or equal to the resource quantity threshold. The signal strength threshold 21 is used as the adjusted signal strength threshold.

In a second optional implementation, after the overlapping resource is excluded from the $N_F$ resources, if the sum of the quantity of remaining resources and the second resource quantity is less than the resource quantity threshold, or is less than the resource quantity threshold and less than a first threshold, the first UE may decrease the signal strength threshold corresponding to the first selection manner, to reselect a resource in the first selection manner. For example, the quantity of remaining resources is less than the resource quantity threshold. For example, if the sum of the quantity of remaining resources and the second resource quantity is less than the resource quantity threshold, the first UE decreases the first signal strength threshold, and a decreased first signal strength threshold is, for example, a signal strength threshold 22. The first UE then determines a resource whose signal strength is greater than the signal strength threshold 22, for example, determines v resources. The first UE determines an overlapping resource of the v resources and the $N_S$ resources (the overlapping resource of the v resources and the $N_S$ resources and the overlapping resource of the $N_F$ resources and the $N_S$ resources may be a same resource, or may be completely different or not completely the same). If a sum of the second resource quantity and a quantity of resources obtained by excluding the overlapping resource from the v resources is less than or equal to the resource quantity threshold, the first UE does not perform an adjustment, and the signal strength threshold 22 may be used as the adjusted signal strength threshold. However, if the sum of the quantity of resources obtained by excluding the overlapping resource from the v resources and the second resource quantity is still greater than the resource quantity threshold, the first UE decreases the signal strength threshold 22. A decreased signal strength threshold 22 is, for example, a signal strength threshold 23. The first UE then determines a resource whose signal strength is greater than the signal strength threshold 23, for example, determines w resources. The first UE determines an overlapping resource between the w resources and the $N_S$ resources, and continues to determine whether a sum of the second resource quantity and a quantity of resources obtained by excluding the overlapping resource from the w resources is less than or equal to the resource quantity threshold. The rest can be done in the same manner until after a specific increase of the signal strength threshold is completed (for example, an obtained signal strength threshold is a signal strength threshold 24), a sum of the second resource quantity and a quantity of resources obtained by excluding the overlapping resource from the resources whose signal strengths are greater than the signal strength threshold 24 is less than or equal to the resource quantity threshold. The signal strength threshold 24 is used as the adjusted signal strength threshold.

After determining the adjusted signal strength threshold according to any one of the foregoing optional implementations, the first UE may determine the unrecommended resource based on the adjusted signal strength threshold in the first selection manner. For example, a determined quantity of unrecommended resources is $N_B$. A quantity of remaining resources obtained by excluding an overlapping resource with the $N_S$ resources from the $N_B$ resources is, for example, $N_C$. If a sum of $N_C$ and $N_S$ is less than or equal to the resource quantity threshold, the $N_C$ resources and the $N_S$ resources are determined as unrecommended resources. However, if a sum of $N_C$ and $N_S$ is greater than the resource quantity threshold, the first UE may exclude a part of resources from the $N_C$ resources, so that a sum of $N_S$ and a quantity of remaining resources obtained by excluding the part of resources from the $N_C$ resources is less than or equal to the resource quantity threshold. For example, a quantity of the part of resources excluded by the first UE from the $N_C$ resources is G.

The first UE may exclude the G resources from the $N_C$ resources in a plurality of exclusion manners. For example, an exclusion manner is that the first UE randomly determines the G resources from the $N_C$ resources. This manner is simple.

Alternatively, another exclusion manner is that the first UE selects G resources with lowest signal strengths from the $N_C$ resources, where the lowest signal strengths may be lowest interference. Equivalently, the first UE does not need to notify the second UE of the resources with the lowest interference. Even if the second UE uses these resources, interference may not be quite high. For example, the first UE sorts the $N_C$ resources in descending order of corresponding signal strengths, and selects last G resources. For example, each of the $N_C$ resources corresponds to a first parameter. That the first parameter is an RSRP is used as an example. The first UE sorts $N_C$ RSRPs, and selects last G resources. In this case, signal strengths of the G resources are less than or equal to signal strengths of $N_C$-G resources.

Alternatively, still another exclusion manner is that the first UE selects, from the $N_C$ resources, G resources whose signal strengths are less than or equal to a sixth signal strength threshold, where the sixth signal strength threshold may be predefined in a protocol, preconfigured in the first UE, or set by the first UE. The sixth signal strength may be equal to or unequal to the second signal strength mentioned in the foregoing embodiment. For example, if a quantity of resources whose signal strengths are less than the sixth signal strength threshold in the $N_C$ resources is less than or equal to the resource quantity threshold, the G resources may include all or a part of resources whose signal strengths are less than or equal to the sixth signal strength threshold in the $N_C$ resources; or if a quantity of resources whose signal strengths are less than or equal to the sixth signal strength threshold in the $N_C$ resources is greater than the resource quantity threshold, the G resources may include a part of resources in the $N_C$ resources, where a resource quantity of the part of resources is less than or equal to the resource quantity threshold, that is, G is less than or equal to the resource quantity threshold.

In the foregoing description, after the overlapping resource is excluded from the $N_F$ resources, if the quantity of remaining resources does not meet the resource quantity threshold, the first UE may adjust the signal strength threshold corresponding to the first selection manner. In addition, the first UE may further use another manner to enable the determined unrecommended resource to meet the resource quantity threshold. For example, the first UE determines F resources from the $N_F$ resources, or the first UE determines F resources from the remaining resources obtained by excluding the overlapping resource from the $N_F$ resources, where a sum of F and the second resource quantity is less than or equal to the resource quantity threshold, and F is a positive integer.

For example, the first UE determines the F resources from the $N_F$ resources. If the first UE determines the F resources from the remaining resources, a manner is also similar. The first UE may determine the F resources from the $N_F$ resources in a plurality of determining manners. For example, a determining manner is that the first UE randomly determines the F resources from the $N_F$ resources. This manner is simple.

Alternatively, another determining manner is that the first UE selects the F resources with a highest signal strength from the $N_F$ resources, where the highest signal strength may be highest interference. Equivalently, the first UE notifies the second UE of the resources with highest interference. Therefore, interference caused when the second UE sends data to the first UE is reduced. For example, the first UE sorts the $N_F$ resources in descending order of corresponding signal strengths, and selects first F resources. For example, each of the $N_F$ resources corresponds to the first parameter. That the first parameter is an RSRP is used as an example. The first UE sorts $N_F$ RSRPs, and selects first F resources. In this case, signal strengths of the F resources are greater than or equal to signal strengths of $N_F$-F resources.

Alternatively, still another determining manner is that the first UE selects, from the $N_F$ resources, the F resources whose signal strengths are greater than a second signal strength threshold, where the second signal strength threshold may be predefined in a protocol, preconfigured in the first UE, or set by the first UE. For example, if a quantity of resources whose signal strengths are greater than the second signal strength threshold in the $N_F$ resources is less than or equal to the resource quantity threshold, the F resources may include all or a part of resources whose signal strengths are greater than the second signal strength threshold in the $N_F$ resources; or if a quantity of resources whose signal strengths are greater than the second signal strength threshold in the $N_F$ resources is greater than the resource quantity threshold, the F resources may include a part of resources in the $N_F$ resources, where a resource quantity of the part of resources is less than or equal to the resource quantity threshold, that is, F is less than or equal to the resource quantity threshold.

However, if the sum of the second resource quantity and the remaining resources obtained by excluding the overlapping resource from the $N_F$ resources meets the resource quantity threshold, for example, is less than or equal to the resource quantity threshold, the first UE may determine that the remaining resources and the $N_S$ resources are unrecommended resources, that is, S1103 may not need to be performed. Therefore, S1103 is an optional step.

S1104: The first UE sends the first message to the second UE. Correspondingly, the second UE receives the first message from the first UE.

The first message may indicate K resources and P resources. For example, the first message may carry information of the K resources and the P resources to indicate the K resources and the P resources. The K resources and the P resources are unrecommended resources. After receiving the first message, when selecting a resource for sending data to the first UE, the second UE may use the K resources and the P resources as a reference. For example, when sending data to the first UE, the second UE may avoid selecting the K resources and the P resources as much as possible. This can reduce transmission interference, and improve transmission reliability.

For example, the K resources include the resource finally determined in the first selection manner in S1103. For example, the P resources include the resource finally determined in the second selection manner in S1103.

Alternatively, the first UE may separately indicate the K resources and the P resources to the second UE by using different messages. For example, the first UE sends a first message to the second UE to indicate the K resources, and the first UE sends a second message to the second UE to indicate the P resources.

In this embodiment of this application, the overlapping resource may be excluded from the determined unrecommended resource as many as possible, so that the first UE does not need to indicate a same resource twice. This reduces consumption of bearing space of the first message.

It may be learned from the foregoing embodiment that, this embodiment of this application relates to the first selection manner and the second selection manner, which may involve determining of a selection manner by the first UE. For example, the first UE needs to learn of the selection manner. The following provides an eleventh communication method according to an embodiment of this application. How the first UE determines a selection manner is described by using the method. FIG. 12 is a flowchart of the method.

S1201: The first UE determines, in the first selection manner and/or the second selection manner, a resource non-preferred for sending data to the first UE.

Alternatively, S1201 may be described as follows: The first UE determines, based on a first signal strength threshold, the resource non-preferred for sending data to the first UE, where signal strength of the determined resource non-preferred for sending data to the first UE is greater than the first signal strength threshold; and/or the first UE determines, based on a third signal strength threshold, the resource non-preferred for sending data to the first UE, where the signal strength of the determined resource non-preferred for sending data to the first UE is less than or equal to the first signal strength threshold, and the determined resource non-preferred for sending data to the first UE is used to send data to the first UE. The first UE determines, based on the first signal strength threshold, the resource non-preferred for sending data to the first UE, where the signal strength of the determined resource non-preferred for sending data to the first UE is greater than the first signal strength threshold. This is the first selection manner. The first UE determines, based on the third signal strength threshold, the resource non-preferred for sending data to the first UE, where the signal strength of the determined resource non-preferred for sending data to the first UE is less than or equal to the first signal strength threshold, and the determined resource non-preferred for sending data to the first UE is used to send data to the first UE. This is the second selection manner. Optionally, S1201 may be further specifically described as follows: The first UE determines that a resource whose signal strength is greater than the first signal strength threshold is the resource non-preferred for sending data to the first UE; and/or the first UE determines that a resource whose signal strength is less than or equal to the third signal strength threshold and that is used to send data to the first UE is the resource non-preferred for sending data to the first UE. Optionally, the first signal strength threshold in this embodiment of this application may be the first signal strength threshold or the fourth signal strength threshold in the foregoing embodiment. Alternatively, the first signal strength threshold in this embodiment of this application may be predefined in a protocol, preconfigured in the first UE, or determined by the first UE. For example, the first UE may determine the first signal strength threshold based on a first priority. For this process, refer to S202 in the embodiment shown in FIG. 2A.

For example, the first UE determines the selection manner based on the first parameter. That is, whether the first UE uses the first selection manner, the second selection manner, or the first selection manner and the second selection manner may be determined based on the first parameter.

For example, the first parameter includes one or more of the following: a resource quantity threshold, a quantity of reserved resources for sending data to the first UE (or described as a quantity of resources having been reserved for sending data to the first UE, or described as a quantity of resources reserved for sending data to the first UE, or described as a quantity of resources for sending data to the first UE, or described as a detected resource for sending data to the first UE, or described as a detected resource reserved by using a message using the first UE as a destination address (where the message is used to reserve a resource), or described as a resource that is detected by the first UE and that is reserved by using a message using the first UE as a receiver (where the message is used to reserve a resource)), a priority indicated by the second UE, and a quantity of resources determined in the first selection manner, or a quantity of resources determined in the second selection manner. For example, the resource quantity threshold is referred to as a parameter A, the quantity of reserved resources for sending data to the first UE is referred to as a parameter B, the priority indicated by the second UE is referred to as a parameter C, the quantity of resources determined in the first selection manner is referred to as a parameter D, and the quantity of resources determined in the second selection manner is referred to as a parameter E. When the first parameter includes different parameters, processes of determining the selection manner may also be different. The following uses an example for description.

If the first parameter includes the parameter A, if a value of the parameter A is less than a first threshold, the second selection manner may be used to determine the resource non-preferred for sending data to the first UE; if a value of the parameter A is greater than or equal to a first threshold and less than a second threshold, the first selection manner may be used to determine the resource non-preferred for sending data to the first UE; or if a value of the parameter A is greater than a second threshold, the first selection manner and the second selection manner may be used to determine the resource non-preferred for sending data to the first UE. The first threshold and the second threshold may be predefined in a protocol, preconfigured in the first UE, or determined by the first UE. The first threshold is less than the second threshold. If the value of the parameter A is less than the first threshold, it indicates that the resource quantity threshold is low, and the first UE is allowed to determine a small quantity of unrecommended resources. In this case, the first UE may determine the unrecommended resources in the second selection manner. In the second selection manner, resources that use the first UE as a receiver may be considered as many as possible, and resources that have great interference to the first UE may be determined as many as possible. If the value of the parameter A is greater than the second threshold, it indicates that the resource quantity threshold is high, and the first UE is allowed to determine a large quantity of unrecommended resources. In this case, the first UE may determine the unrecommended resources in the two selection manners. The two thresholds (for example, the first threshold and the second threshold) are set to enable the two selection manners, so that the determined quantity of resources can match a resource quantity carried in a first message as much as possible.

Alternatively, if the first parameter includes the parameter A, the determining manner may be another one. For example, if a value of the parameter A is less than a sixth threshold, the second selection manner may be used to determine the resource non-preferred for sending data to the first UE; or if a value of the parameter A is greater than or equal to a sixth threshold, the first selection manner is used to determine the resource non-preferred for sending data to the first UE, or the first selection manner and the second selection manner are used to determine the resource non-preferred for sending data to the first UE. The sixth threshold may be predefined in a protocol, preconfigured in the first UE, or determined by the first UE. In this manner, only one threshold needs to be used for determining. This manner is simple. In addition, a quantity of the resources using the first UE as a receiver is generally limited. In this method, sufficient interference resources can be screened out as many as possible.

If the first parameter includes the parameter B, if a value of the parameter B is greater than or equal to a third threshold, the second selection manner is used to determine the resource non-preferred for sending data to the first UE; or if a value of the parameter B is less than a third threshold, the first selection manner is used to determine the resource non-preferred for sending data to the first UE, or the first selection manner and the second selection manner are used to determine the resource non-preferred for sending data to the first UE. If the value of the parameter B is greater than or equal to the third threshold, it indicates that the quantity of reserved resources for sending data to the first UE is large, and the resources that use the first UE as a receiver can be determined as many as possible in the second selection manner. Therefore, the second selection manner may be used to determine the unrecommended resource. However, if the value of the parameter B is small, it indicates that the quantity of reserved resources for sending data to the first UE is small, and the first selection manner (the first selection manner does not consider the receiver) may be used to determine the unrecommended resource, or the first selection manner and the second selection manner may be used to determine the unrecommended resource. The third threshold may be predefined in a protocol, preconfigured in the first UE, or determined by the first UE.

If the first parameter includes the parameter C, if the parameter C is higher than or equal to a second priority, the first selection manner and the second selection manner are used to determine the resource non-preferred for sending data to the first UE; or if the parameter C is lower than a second priority, the first selection manner or the second selection manner or both are used to determine the resource non-preferred for sending data to the first UE. The second priority may be predefined in a protocol, preconfigured in the first UE, or determined by the first UE. If the priority indicated by the second UE is high, it indicates that a priority of data to be transmitted by the second UE is high, or it indicates that data to be transmitted by the second UE is important. Therefore, the first selection manner and the second selection manner may be used to determine the unrecommended resource. In this way, all resources that can cause interference are determined as many as possible. This reduces interference caused when the second UE sends data to the first UE. However, if the priority indicated by the second UE is low, the first selection manner and/or the second selection manner may be used.

If the first parameter includes the parameter D, if a value of the parameter D is greater than a fourth threshold, the first selection manner is used to determine the resource non-preferred for sending data to the first UE; or if a value of the parameter D is less than or equal to a fourth threshold, the first selection manner and the second selection manner are used to determine the resource non-preferred for sending data to the first UE, or the second selection manner is used to determine the resource non-preferred for sending data to the first UE. If the value of the parameter D is large, it indicates that the quantity of resources that need to be determined in the first selection manner is large. Therefore, the first selection manner may be used to determine the unrecommended resource, and a large quantity of unrecommended resources are determined as many as possible in the first selection manner. However, if the value of the parameter D is small, it indicates that the quantity of resources that need to be determined in the first selection manner is small. In this case, the second selection manner is used, or both the first selection manner and the second selection manner may be used.

If the first parameter includes the parameter E, if a value of the parameter E is greater than a fifth threshold, the second selection manner is used to determine the resource non-preferred for sending data to the first UE; or if a value of the parameter E is less than or equal to a fifth threshold, the first selection manner and the second selection manner are used to determine the resource non-preferred for sending data to the first UE, or the first selection manner is used to determine the resource non-preferred for sending data to the first UE. If the value of the parameter E is large, it indicates that the quantity of resources that need to be determined in the second selection manner is large. Therefore, the second selection manner may be used to determine the unrecommended resource, and a large quantity of unrecommended resources are determined as many as possible in the first selection manner. However, if the value of the parameter E is small, it indicates that the quantity of resources that need to be determined in the second selection manner is small. In this case, the first selection manner is used, or both the first selection manner and the second selection manner may be used.

The first parameter may further include a plurality of parameters. For example, the first parameter includes the parameter A and the parameter B, or includes the parameter A, the parameter C, the parameter D, and the like.

For example, the first parameter includes the parameter A and the parameter C. If the value of the parameter A is greater than a seventh threshold, and the parameter C is higher than a third priority, the first selection manner and the second selection manner are used to determine the unrecommended resource; if the value of the parameter A is less than or equal to a seventh threshold, and the parameter C is higher than a third priority, the second selection manner is used to determine the unrecommended resource; or if the value of the parameter A is greater than a seventh threshold, and the parameter C is lower than or equal to a third priority, the first selection manner is used to determine the unrecommended resource.

For another example, the first parameter includes the parameter A and the parameter B. If the value of the parameter A is greater than the value of the parameter B, the first selection manner and the second selection manner are used to determine the unrecommended resource; if the value of the parameter A is less than or equal to the value of the parameter B, the second selection manner is used to determine the unrecommended resource; or if the value of the parameter A is less than or equal to the value of the parameter B, all or a part of resources that correspond to the parameter B and that are in the reserved resources for sending data to the first UE are used as unrecommended resources.

For another example, the first parameter includes the parameter A, the parameter C, and the parameter D. If the parameter C is higher than a fourth priority, and the value of the parameter A is greater than the value of the parameter D, the first selection manner and the second selection manner are used to determine the unrecommended resource; if the parameter C is higher than a fourth priority, and the value of the parameter B is less than or equal to the value of the parameter D, the first selection manner is used to determine the unrecommended resource; or in a case other than the foregoing two cases, the second selection manner may be used to determine the unrecommended resource.

Optionally, in this embodiment of this application, the quantity of resources determined in the first selection manner, and/or the quantity of resources determined in the second selection manner may be further determined. For example, when the first parameter includes the parameter A, if it is determined to use the second selection manner, it may be determined that the quantity of resources determined in the second selection manner should be less than or equal to the value of the parameter A. If it is determined to use the first selection manner and the second selection manner, it may be determined that a sum of the quantity of resources determined in the first selection manner and the quantity of resources determined in the second selection manner should be less than or equal to the value of the parameter A.

S1202: The first UE sends the first message to the second UE. Correspondingly, the second UE receives the first message from the first UE.

The first message may indicate W resources. For example, the first message may carry information of the W resources to indicate the W resources. The W resources are unrecommended resources. The first UE determines the selection manner in S1201. The W resources are unrecommended resources determined by the first UE in the determined selection manner. The determined selection manner is the first selection manner and/or the second selection manner. If a quantity of resources determined by the first UE in the determined selection manner does not meet the resource quantity threshold, the first UE may further perform an adjustment. For example, the first UE may perform an adjustment through random selection, signal strength sorting, signal strength threshold adjustment, or the like, so that the finally determined quantity of resources can meet the resource quantity threshold. For these content, refer to the description of the foregoing embodiment.

After receiving the first message, the second UE may use the W resources as a reference when selecting a resource for sending data to the first UE. For example, when sending data to the first UE, the second UE may avoid selecting the W resources as much as possible. This can reduce transmission interference, and improve transmission reliability.

According to the method provided in this embodiment of this application, the selection manner may be determined, so that the first UE can select an unrecommended resource based on a corresponding selection manner. In addition, in this embodiment of this application, a quantity of resources that can be determined in a corresponding selection manner can be further determined, so that a resource selection process is clearer.

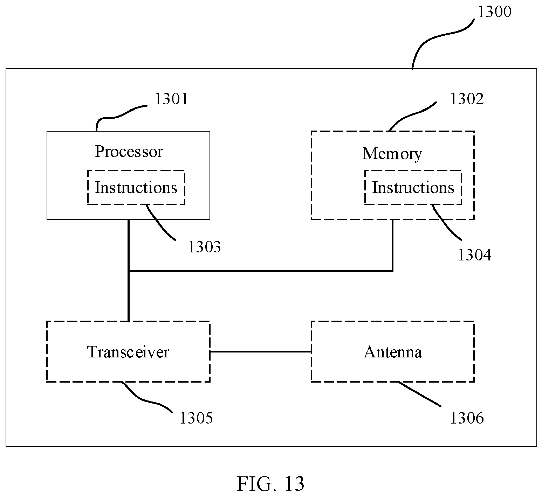

FIG. 13 is a schematic diagram of a structure of a communication apparatus 1300 according to an embodiment of this application. The communication apparatus 1300 may be the first UE in any one of the embodiment shown in FIG. 2A, and the embodiment shown in FIG. 3 to the embodiment shown in FIG. 12, and is configured to implement the method performed by the first UE in the foregoing method embodiment. For a specific function, refer to the description in the method embodiments.

The communication apparatus 1300 includes one or more processors 1301. The processor 1301 may also be referred to as a processing unit, and may implement a specific control function. The processor 1301 may be a general-purpose processor, a special-purpose processor, or the like. For example, the processor 1301 includes a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 1300, execute a software program, and/or process data. Different processors may be independent components, or may be integrated into one or more processors, for example, integrated into one or more application-specific integrated circuits.

Optionally, the communication apparatus 1300 includes one or more memories 1302, configured to store instructions 1304. The instructions 1304 may be run on the processor, so that the communication apparatus 1300 performs the method described in the foregoing method embodiments. Optionally, the memory 1302 may further store data. The processor and the memory may be separately disposed, or may be integrated together.

Optionally, the communication apparatus 1300 may store instructions 1303 (which may also be referred to as code or a program sometimes). The instructions 1303 may be run on the processor, so that the communication apparatus 1300 performs the method described in the foregoing embodiments. The processor 1301 may store data.

Optionally, the communication apparatus 1300 may further include a transceiver 1305 and an antenna 1306. The transceiver 1305 may be referred to as a transceiver unit, a transceiver machine, a transceiver circuit, a transceiver, an input/output interface, or the like, and is configured to implement a transceiver function of the communication apparatus 1300 by using the antenna 1306.

Optionally, the communication apparatus 1300 may further include one or more of the following components: a wireless communication module, an audio module, an external memory interface, an internal memory, a universal serial bus (universal serial bus, USB) port, a power management module, an antenna, a speaker, a microphone, an input/output module, a sensor module, a motor, a camera, a display, or the like. It may be understood that, in some embodiments, the communication apparatus 1300 may include more or fewer components, or some components are integrated, or some components are split. These components may be implemented by hardware, software, or a combination of software and hardware.

The processor 1301 and the transceiver 1305 described in embodiments of this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

An embodiment of this application provides a terminal device. The terminal device (referred to as a UE for ease of description) may be used in the foregoing embodiments. The terminal device includes a corresponding means (means), unit, and/or circuit, configured to implement a function of the first UE in any one of the embodiment shown in FIG. 2A, and the embodiment shown in FIG. 3 to the embodiment shown in FIG. 12. For example, the terminal device includes a transceiver module, configured to support the terminal device in implementing a transceiver function, and a processing module, configured to support the terminal device in processing a signal.

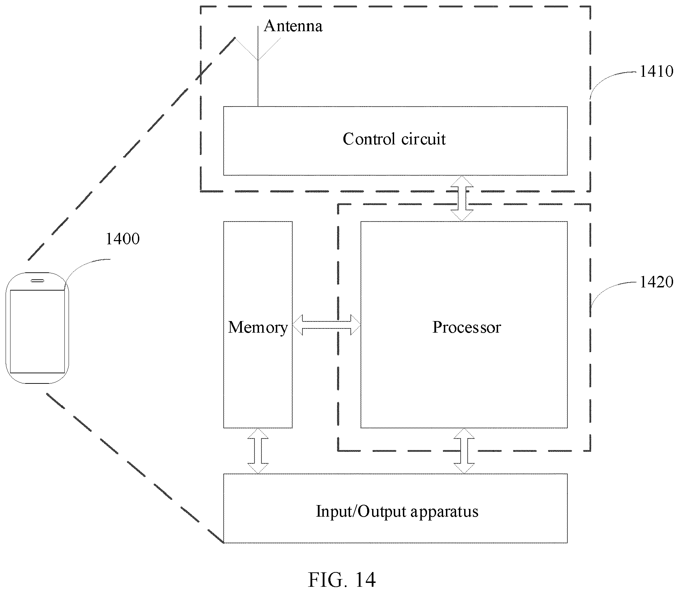

FIG. 14 is a schematic diagram of a structure of a terminal device according to an embodiment of this application.

The terminal device 1400 may be applicable to the architecture shown in FIG. 1. For ease of description, FIG. 14 shows only main components of the terminal device 1400. As shown in FIG. 14, the terminal device 1400 includes a processor, a memory, a control circuit, an antenna, and an input/output apparatus. The processor is mainly configured to process a communication protocol and communication data, control the entire terminal device 1400, execute a software program, and process data of the software program. The memory is mainly configured to store a software program and data. The control circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user.

For example, the terminal device 1400 is a mobile phone. After the terminal device 1400 is powered on, the processor may read the software program in the storage unit, explain and execute instructions of the software program, and process data of the software program. When data needs to be sent in a wireless manner, the processor performs baseband processing on the to-be-sent data and then outputs a baseband signal to the control circuit. The control circuit performs radio frequency processing on the baseband signal and then sends a radio frequency signal in a form of an electromagnetic wave by using the antenna. When data is sent to the terminal device 1400, the control circuit receives a radio frequency signal by using the antenna, converts the radio frequency signal into a baseband signal, and outputs the baseband signal to the processor. The processor converts the baseband signal into data, and processes the data.

A person skilled in the art may understand that for ease of description, FIG. 14 shows only one memory and one processor. In some embodiments, the terminal device 1400 may include a plurality of processors and memories. The memory may also be referred to as a storage medium, a storage device, or the like. This is not limited in embodiments of the present invention.

In an optional implementation, the processor may include a baseband processor and a central processing unit. The baseband processor is mainly configured to process a communication protocol and communication data. The central processing unit is mainly configured to control the entire terminal device 1400, execute a software program, and process data of the software program. The processor in FIG. 14 integrates functions of the baseband processor and the central processing unit. A person skilled in the art may understand that the baseband processor and the central processing unit may alternatively be processors independent of each other, and are interconnected by using a technology, for example, through a bus. The terminal device 1400 may include a plurality of baseband processors to adapt to different network standards, the terminal device 1400 may include a plurality of central processing units to enhance a processing capability of the terminal device, and components of the terminal device 1400 may be connected through various buses. The baseband processor may also be expressed as a baseband processing circuit or a baseband processing chip. The central processing unit may also be expressed as a central processing circuit or a central processing chip. A function of processing the communication protocol and the communication data may be embedded in the processor, or may be stored in a storage unit in a form of the software program. The processor executes the software program to implement a baseband processing function.

In an example, the antenna and the control circuit that have a transceiver function may be considered as a transceiver unit 1410 of the terminal device 1400, and the processor having a processing function may be considered as a processing unit 1420 of the terminal device 1400. As shown in FIG. 14, the terminal device 1400 includes the transceiver unit 1410 and the processing unit 1420. The transceiver unit may also be referred to as a transceiver, a transceiver machine, a transceiver apparatus, or the like. Optionally, a component that is in the transceiver unit 1410 and that is configured to implement a receiving function may be considered as a receiving unit, and a component that is in the transceiver unit 1410 and that is configured to implement a sending function may be considered as a sending unit. In other words, the transceiver unit 1410 includes the receiving unit and the sending unit. For example, the receiving unit may also be referred to as a receiver, a receiver machine, a receiver circuit, or the like, and the sending unit may be referred to as a transmitter, a transmitter machine, a transmitter circuit, or the like.

In another embodiment of this application, with evolution of communication technologies, the Internet of Everything is accelerating. In the 3rd generation partnership project (3rd Generation Partnership Project, 3GPP) Release 14 (Release, Rel-14) and Release 15, support for vehicle-to-vehicle (vehicle-to-vehicle, V2V) and vehicle-to-everything (vehicle-to-everything, V2X) services is introduced in long term evolution (Long Term Evolution, LTE) to extend a 3GPP platform to an automotive industry. According to a sensing mechanism proposed in Rel-14 V2X, a terminal senses a spectrum usage status that is used as a basis for selecting a sidelink resource for subsequently transmitting data by the terminal on the sidelink resource.

Although a transmit terminal may sense a sidelink resource to obtain one or more sidelink resources, the transmit terminal may determine, from the one or more sidelink resources, a sidelink resource that carries data when the data is sent to a receive terminal. However, when the transmit terminal selects the sidelink resources, most of the sidelink resources are considered based on a transmission requirement of the transmit terminal. Although the transmit terminal can successfully send data, the receive terminal may fail to receive the data due to various factors. In this way, power consumption of the transmit terminal is wasted.

Specifically, currently the two terminals may directly perform a data transmission on a sidelink without forwarding by a base station. For example, the two terminals are a terminal A and a terminal B. Before the terminal A sends data to the terminal B on a sidelink, the terminal A may sense sidelink resources, and then select a sidelink resource from the sensed sidelink resources. Then, the terminal A sends data to the terminal B on the selected sidelink resource on the sidelink. Currently, to reduce power consumption of the terminal B, a DRX mechanism may be configured for the terminal B. That is, the terminal B is in an active state in a time period and can receive data, and is in a dormant state in another time period. When the terminal B is in the dormant state, the terminal B may be unable to receive data sent by another terminal to the terminal B. Therefore, if a time range indicated by the sidelink resource selected by the terminal A is within the time period in which the terminal B is in the dormant state, if the terminal A sends data to the terminal B on the selected sidelink resource, the terminal B may not correctly receive the data. As a result, a transmission of data sent by the terminal A to the terminal B fails, and power consumption caused when the terminal A sends data is wasted.

Based on this, an embodiment of this application provides a communication method. In the method, a first terminal first determines one or more sidelink resources. Then, the first terminal sends data to a second terminal by using a first sidelink resource in the one or more sidelink resources. The first sidelink resource is within discontinuous reception-active time of the second terminal, and the second terminal is in an active state in the discontinuous reception-active time of the second terminal. In this way, it can be ensured that when the first terminal sends the data on the first sidelink resource, the second terminal is in a state in which the data can be received. This can avoid a data transmission failure, and also avoid waste of power consumed when the first terminal sends the data.

Before the following embodiments are described, nouns used in the following embodiments are first described.

(1) Sidelink (Sidelink, SL): The sidelink is defined for direct communication between terminals, that is, a link on which direct communication is performed between the terminals without forwarding by a base station.

(2) Sidelink resource: The sidelink resource is a resource used by a terminal 1 to transmit sidelink information to a terminal 2 on a sidelink.

(3) Sidelink information: The sidelink information is sidelink data or control information transmitted by any two terminals on a sidelink, and may also be referred to as a data packet or a V2X service.

(4) Discontinuous reception (discontinuous reception, DRX): The discontinuous reception means that a terminal turns on a receiver only in necessary time and enters an active state (which may also be referred to as an activity state) to receive data and signaling, and turns off the receiver in another time and enters a dormant state (which may also be referred to as an inactivity state). When the terminal is in the dormant state, the terminal stops receiving data and signaling. DRX is a working mode in which a terminal reduces power consumption of the terminal. DRX is classified into idle state DRX and connected state DRX. Idle state DRX is implemented on a sensing paging channel due to the lack of an RRC connection or a dedicated bearer for terminals. For example, the DRX mechanism is a DRX mechanism on a Uu interface. Connected state DRX is a DRX feature of the terminal in an RRC connected state, and is implemented by monitoring a physical downlink control channel (Physical downlink control channel, PDCCH).

Typical application scenarios of DRX are as follows: Services that are delay-insensitive and do not have data to be received and sent at most of time, for example, web browsing, email, and FTP; services that generate rare packets, for example, a presence (Presence) service; and periodic and continuous small-packet services, for example, VoIP (Voice over IP) services, and automatic neighbor relation (Automatic Neighbor Relation, ANR) measurement.

For example, the DRX mechanism is a DRX mechanism on a Uu interface. The terminal monitors the PDCCH in active time, including running time of a drx-onDurationTimer at the beginning of a DRX cycle defined in the standard. The terminal is in an active state (which may also be referred to as a wakeup state or an activity state) in the active time.

For example, the DRX mechanism is a DRX mechanism on a Uu interface. The terminal may not monitor the PDCCH in inactive time (which may also be referred to as a dormant period). The terminal may be in an inactive state (which may also be referred to as a dormant state or an inactivity state) in the inactive time.

(5) Active state: For example, the DRX mechanism is a DRX mechanism on a Uu interface. The active state is a state in which a terminal can monitor service data/a PDCCH, that is, a state in which the terminal receives data/a PDCCH, and the active state is a variable concept. In the active state, the terminal needs to detect the PDCCH.

(6) Dormant state: For example, the DRX mechanism is a DRX mechanism on a Uu interface. The dormant state means that a terminal cannot monitor service data/a PDCCH, and the terminal does not perform PDCCH detection in the dormant state, to save power.

Device-to-device (Device-to-Device, D2D) communication based on a cellular network is also referred to as a proximity-based service (Proximity-based Service, ProSe) in 3 GPP, and is a technology in which terminals directly communicate with each other under control of a network. This technology can increase spectral efficiency of a cellular communication system, reduce a transmit power of a terminal, and resolve a problem of insufficient spectrum resources in a wireless communication system to some extent.

ProSe direct communication (Direct Communication): Two or more adjacent ProSe UEs directly communicate with each other without passing through any network node.

ProSe direct communication is implemented through a sidelink communication (sidelink communication) access layer function. Sidelink communication is direct communication between two or more adjacent terminals without passing through any network node. ProSe direct communication is implemented by establishing a direct link (direct link) between two terminals through a PC5 interface.

Sidelink communication uses the E-UTRA or NR technology. NR sidelink communication: NR sidelink communication is sidelink communication using the NR technology and enables a V2X communication access layer function. NR sidelink communication can also enable ProSe direct communication, including 5G ProSe direct communication.

V2X communication: V2X communication is communication that supports V2X services through Uu and/or PC5 reference points/interfaces. V2X services are implemented through various types of V2X applications, for example, vehicle-to-vehicle (Vehicle-to-Vehicle, V2V), vehicle-to-pedestrian (Vehicle-to-Pedestrian, V2P), vehicle-to-infrastructure (Vehicle-to-Infrastructure, V2I), and vehicle-to-network (Vehicle-to-Network, V2N). V2X communication is implemented through a sidelink communication access layer function.

To improve security and intelligence of a transportation system, an idea of an intelligent transportation system gradually emerges. In a recent phase, development of an intelligent transportation system mainly focuses on the field of intelligent road transportation systems, that is, vehicle-to-everything (vehicle-to-everything, V2X). V2X communication includes vehicle-to-vehicle (Vehicle-to-Vehicle, V2V) communication, vehicle-to-infrastructure (Vehicle-to-Infrastructure, V2I) communication, and vehicle-to-pedestrian (Vehicle-to-Pedestrian, V2P) communication. V2X applications improve driving safety, reduce congestion and vehicle energy consumption, and improve traffic efficiency, for example, communication with infrastructures such as a traffic light, a campus, and a railway crossing. A vehicle-to-everything system is a sidelink transmission technology based on long term evolution (Long Term Evolution, LTE) V2V or new radio V2V, and is different from a manner in which communication data is received or sent by a network device in a conventional LTE system or NR. A terminal-to-terminal direct communication manner is used in the vehicle-to-everything system.

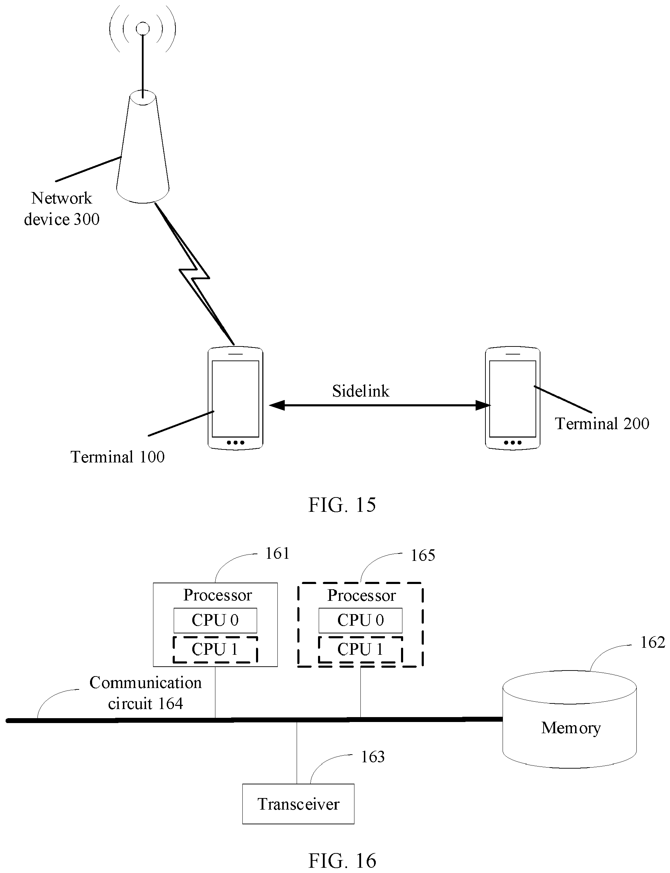

As shown in FIG. 15, FIG. 15 shows a communication system to which a communication method is applicable according to an embodiment of this application. The system includes a terminal 100 and a terminal 200. The terminal 100 and the terminal 200 can perform a data transmission by using a sidelink resource on a sidelink between the terminal 100 and the terminal 200.

Optionally, the system may further include a network device 300. The terminal 100 communicates with the network device 300 on a Uu interface. The network device 300 may allocate a sidelink resource for a sidelink transmission to the terminal 100.

The terminal 200 is a terminal that performs sidelink communication with the terminal 100. The terminal 200 may be considered as a receive terminal (Rx UE), and the terminal 100 may be considered as a transmit terminal (Tx UE).

A first interface for direct communication exists between the terminal 100 and the terminal 200, and the first interface may be referred to as a PC5 interface. A transmission link that is on the PC5 interface and that is used for communication between the terminal 100 and the terminal 200 may be referred to as a sidelink.

For example, the PC5 interface may use a dedicated frequency band (for example, 5.9 GHz).

The terminal 100 may directly communicate with the terminal 200 on the PC5 interface. The terminal 200 performs sidelink communication and/or sidelink discovery (discovery) with the terminal 100. The terminal 200 may also be connected to/communicate with the network device, or may not be connected to/communicate with the network device. The terminal 100 may further perform SL communication with another terminal other than the terminal 200. A scenario in which the another terminal is an Rx UE and the terminal 100 is a Tx UE is considered. The terminal 100 may directly communicate with the another terminal on the PC5 interface. The terminal 100 performs sidelink communication and/or sidelink discovery with the another terminal. The another terminal is a terminal out of coverage of the network device 300. For a manner of establishing a sidelink between the terminal 100 and the terminal 200, refer to descriptions in a conventional technology. Details are not described herein again.

A sidelink transmission is performed between a pair of a source device (source) and a destination (destination). The source may be identified by using a source layer (layer)-2 ID. The destination may be identified by using a destination layer-2 ID. The source layer-2 ID identifies a data sender (sender) in sidelink communication. The destination layer-2 ID identifies a data target (target) or receiver in sidelink communication.

For example, the terminal 100 is a transmit terminal, and the terminal 200 is a receive terminal. In other words, the terminal 100 is a source of sidelink communication (or a MAC PDU), and the receive terminal is a destination of sidelink communication (or a MAC PDU).

A PC5-radio resource control (radio resource control, RRC) connection is a logical connection between two terminals corresponding to the source and destination pair. After a PC5 unicast link (PC5 unicast link) is established, a corresponding PC5 RRC connection is established. There is a one-to-one correspondence between the PC5-RRC connection and the PC5 unicast link. The PC5-RRC connection may be used when the transmit terminal transmits a capability and/or sidelink configuration of the transmit terminal, for example, an SL-data radio bearer (data radio bearer, DRB) configuration, to the receive terminal in a PC5-RRC process.

The terminal 100 and the terminal 200 may communicate on a sidelink between the terminal 100 and the terminal 200 by using a resource. In this embodiment of this application, a scenario in which the terminal 100 and the terminal 200 communicate with each other on the sidelink may be referred to as a sidelink communication scenario. For example, in this embodiment of this application, the resource used by the terminal 100 and the terminal 200 to communicate with each other on the sidelink may be referred to as a sidelink resource. A specific name of the resource is not limited in embodiments of this application, and may be set based on a requirement.

A sidelink resource is required for communication between terminals on the sidelink. For example, the terminal 100 sends data to the terminal 200 by using the sidelink resource. Currently, the terminal 100 may obtain the sidelink resource in the following mode.

Mode 1 (mode 1): Resource allocation mode scheduled by a base station. That is, a sidelink resource of the terminal 100 is received by the terminal 100 from the base station. For example, the base station sends a sidelink grant (SL grant) to the terminal 100. The SL grant includes information such as sidelink resource allocation. The terminal 100 may perform a transmission on an SL by using a sidelink resource indicated/allocated by the SL grant. The SL grant includes/indicates/schedules a time-frequency resource for transmitting a physical sidelink control channel (Physical sidelink control channel, PSCCH) and/or a physical sidelink shared channel (Physical sidelink shared channel, PSSCH). For example, one SL grant may include information of at least one sidelink resource.

Mode 1: The terminal 100 performs a data transmission with the network device in a radio resource control (radio resource control, RRC) connected state. In this case, the network device communicating with the terminal 100 may schedule, for the terminal 100, the sidelink resource for transmitting sidelink service data. For example, the terminal 100 sends a scheduling request (scheduling request, SR) and a sidelink buffer status report (buffer status report, BSR) to the network device. The sidelink BSR is used to determine a sidelink communication data amount of the terminal 100. The network device may determine the sidelink communication data amount of the terminal 100 based on the sidelink BSR, and schedule, for the terminal 100, the sidelink resource required for transmitting the sidelink service data. The network device schedules, by using a configured sidelink radio network temporary identifier (SL-radio network temporary identifier, SL-RNTI), the sidelink resource for sidelink communication.

In mode 1, a physical downlink control channel (physical downlink control channel, PDCCH) may be used to schedule a transmission of the terminal on the SL. Downlink control information (downlink control information, DCI) on the PDCCH includes the SL grant. The mode 1 supports a dynamic grant (dynamic grant), a configured grant type (configured grant type) 1, and a configured grant type 2. The dynamic grant means that the SL grant is dynamically received by the terminal on the PDCCH. The configured grant type 1 and the configured grant type 2 are configured grant configurations semi-statically configured by the base station for the terminal via RRC signaling. The base station may configure a plurality of SL configured grant configurations (SL-ConfiguredGrantConfig) for the terminal. For example, the base station configures an SL configured grant configuration list for the terminal. The SL configured grant configuration list includes SL configured grant configurations that may be released, added, or modified. Each SL configured grant configuration corresponds to one index. The index may be included in the SL configured grant configuration. The SL configured grant configuration includes SL configured grant periodicity indication information. For the configured grant type 1, the configured grant configuration includes time domain resource position information, frequency domain resource position information, and the like of the SL grant. In this way, it is convenient for the terminal to determine a time domain position and a frequency domain position of the SL grant. The SL configured grant periodicity indication information indicates a periodicity of the SL grant.

For the configured grant type 2, a configured SL grant is activated/deactivated by using DCI transmitted on the PDCCH. The DCI includes configured grant configuration index information, and the time domain resource position information, the frequency domain resource position information, and the like of the SL grant.

It should be noted that, for the configured grant type 2, when the base station determines that the terminal needs to use the configured SL grant, the configured SL grant is activated by using DCI, and after activation, the terminal may use an activated configured SL grant.

Mode 2 (mode 2): Resource selection mode autonomously selected by a terminal. In other words, an SL grant is autonomously selected by the terminal. The SL grant includes information such as resource allocation. The terminal may perform a transmission on an SL by using a sidelink resource indicated/allocated by the SL grant. The SL grant includes/indicates/schedules a time-frequency resource for transmitting a physical sidelink control channel (physical sidelink control channel, PSCCH) and/or a physical sidelink shared channel (physical sidelink shared channel, PSSCH).

In mode 2, the terminal 100 selects a sidelink resource from one or more sidelink resources generally included in a resource pool. That is, the terminal 100 selects an SL grant from one or more SL grants, and determines the sidelink resource based on the selected SL grant.

For example, when the terminal 100 is in coverage of a network, the resource pool is a resource broadcast by the network device in system information. When the terminal 100 is out of coverage of the network, the resource pool is a resource preconfigured for the terminal 100. The resource pool may be a specific resource pool for the terminal 100, that is, only the terminal 100 may select a sidelink resource from the resource pool. Alternatively, the resource pool may be a resource pool shared by a plurality of terminals including the terminal 100, that is, a terminal other than the terminal 100 may also select a resource from the resource pool. For the latter, when the terminal 100 autonomously selects a resource from the resource pool, the terminal 100 may perform listening on the resource pool to select a sidelink resource.

A sidelink transmission is based on a resource pool. The resource pool is a logical concept. One resource pool includes a plurality of physical resources, and any physical resource thereof is used to transmit data. A terminal may transmit data by using a resource in the resource pool.

Specifically, to ensure quality of the sidelink resource used for the sidelink service data sent by the terminal 100, and avoid a resource collision caused because the plurality of terminals randomly select a sidelink resource from the resource pool when the terminal 100 autonomously selects a sidelink resource, that is, avoid communication quality deterioration caused because the resource selected by the terminal 100 is occupied by the plurality of other terminals, the terminal 100 may predict usage of a sidelink resource in a future time period 1 through listening, and use the usage of the sidelink resource in the time period 1 as a listening result. The usage of the sidelink resource may include: whether the another terminal occupies the sidelink resource in the future time period 1, and/or a receive power or receive strength of a signal sent by the another terminal that occupies the sidelink resource in the future time period 1. Therefore, based on the listening result, the terminal 100 may select or reserve a sidelink resource in the time period 1, to ensure communication quality of the terminal 100. In addition, the sidelink resource reserved by the terminal 100 through listening has a validity period. For example, in 5G NR, a validity period of a listening result of a periodic service and a validity period of a listening result of an aperiodic service are different, and both are within specific millisecond time.

In LTE-based or NR-based V2X communication, the terminal 100 may obtain a listening result by using or based on a listening process defined in the LTE Release (Release) 14 standard protocol. For example, a listening result of a sidelink resource may indicate any one or more of the following: an identifier or a position of a specific sidelink resource in the resource pool, a signal strength on the sidelink resource, a signal power on the sidelink resource, and a channel busy ratio (channel busy ratio, CBR) of the sidelink resource.

In mode 2, for each sidelink process (process), a resource selection/reselection check is triggered after a logical channel has data. If a check result is to trigger resource selection/reselection, a MAC entity of the terminal notifies a PHY layer of the terminal to provide a group of sidelink resources. Then, the MAC entity randomly selects a sidelink resource from the group of sidelink resources provided by the PHY layer. If the MAC entity performs at least one reselection, the MAC entity continues to randomly select a sidelink resource from resources other than the selected sidelink resource in the group of sidelink resources provided by the PHY layer. In a plurality of sidelink resources selected by the MAC entity, a sidelink resource that is earliest in time domain is an initial transmission resource, and a sidelink resource later than the initial transmission resource may be considered as a retransmission resource. Transmission opportunities corresponding to the plurality of sidelink resources selected by the MAC entity are selected SL grants. If the MAC entity chooses to create selected SL grants for transmitting a plurality of MAC PDUs, the MAC entity selects a sidelink resource A from the group of sidelink resources provided by the PHY layer. The MAC entity determines a group of periodic sidelink resources based on the sidelink resource A. The sidelink resource A and a transmission opportunity corresponding to the group of periodic resources selected based on the resource A are used as the selected SL grant. Each transmission opportunity corresponds to one SL grant. For each SL grant, the MAC entity delivers, to a sidelink HARQ entity, each SL grant, a modulation and coding scheme (modulation and coding scheme, MCS), and hybrid automatic repeat request (hybrid automatic repeat request, HARQ) information associated with each SL grant.

For each SL grant, if the SL grant is used for an initial transmission, the sidelink HARQ entity obtains a to-be-sent MAC PDU from a multiplexing and assembly (Multiplexing and assembly) entity. If a MAC protocol data unit (protocol data unit, PDU) is obtained, the sidelink HARQ entity sends the MAC PDU, the SL grant, and sidelink transmission information to an associated sidelink process (sidelink process). The sidelink HARQ entity notifies the sidelink process to trigger a new transmission (the new transmission means triggering a transmission of a data packet, and the data packet is a data packet transmitted for the first/1st time). If the sidelink HARQ entity does not obtain the MAC PDU, a HARQ buffer (buffer) of the sidelink process is flushed away. If the SL grant is used for a retransmission, the sidelink HARQ entity delivers the SL grant to the sidelink process associated with the SL grant, and notifies the sidelink process to trigger a retransmission (the retransmission means triggering a transmission of a data packet, the data packet is a data packet transmitted for a $c^{th}$ time, c is an integer greater than or equal to 2, and c is less than or equal to a maximum quantity of retransmissions of the terminal, or c is less than or equal to a maximum quantity of retransmissions of the sidelink HARQ process of the data packet).

The sidelink process is associated with the HARQ buffer. If the sidelink HARQ entity requires a new transmission, the sidelink process stores the MAC PDU in the associated HARQ buffer, stores the SL grant, and generates a transmission. If the sidelink HARQ entity requires a retransmission, the sidelink process stores the SL grant and generates a transmission. That the sidelink process generates a transmission includes: notifying the physical layer to transmit sidelink control information (sidelink control information, SCI) based on the stored SL grant, and generating a transmission.

That the sidelink HARQ entity obtains a to-be-sent MAC PDU from a multiplexing and assembly entity specifically includes: The multiplexing and assembly entity selects, according to a rule, a destination for an SL grant associated with each piece of SCI corresponding to a new transmission. Then, the multiplexing and assembly entity selects a logical channel that belongs to the destination. The multiplexing and assembly entity allocates a resource to the selected logical channel. A rule for selecting a destination is that at least one of a logical channel (logical channel, LCH) and a medium access control (medium access control, MAC) control element (control element, CE) of the destination has a highest priority in all logical channels and MAC CEs that meet the condition. There may be one or more LCHs for each destination, and each LCH has a corresponding priority (priority). The MAC CE also has a corresponding priority.

FIG. 16 is a schematic diagram of a hardware structure of a communication device according to an embodiment of this application. For hardware structures of a first terminal and a second terminal in embodiments of this application, refer to the structure shown in FIG. 16. The communication device includes a processor 161, a communication line 164, and at least one transceiver (in FIG. 16, only an example in which the transceiver 163 is included is used for description).

The processor 161 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 164 may include a channel for transmitting information between the foregoing components.

The transceiver 163 is any apparatus such as a transceiver, and is configured to communicate with another device or a communication network, for example, an Ethernet, a radio access network (radio access network, RAN), or a wireless local area network (wireless local area network, WLAN).

Optionally, the communication device may further include a memory 162.

The memory 162 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer, but is not limited thereto. The memory may exist independently, and is connected to the processor through the communication line 164. Alternatively, the memory 162 may be integrated with the processor 161.

The memory 162 is configured to store computer-executable instructions for performing the solutions in this application, and the processor 161 controls execution. The processor 161 is configured to execute the computer-executable instructions stored in the memory 162, to implement the communication method provided in the foregoing embodiments of this application.

Optionally, the computer-executable instructions in embodiments of this application may also be referred to as application program code. This is not specifically limited in embodiments of this application.

During specific implementation, in an embodiment, the processor 161 may include one or more CPUs, for example, a CPU 0 and a CPU 1 in FIG. 16.

During specific implementation, in an embodiment, the communication device may include a plurality of processors, for example, the processor 161 and a processor 165 in FIG. 16. Each of the processors may be a single-core (single-CPU) processor or a multi-core (multi-CPU) processor. Herein, the processor may be one or more devices, circuits, and/or processing cores configured to process data (for example, computer program instructions).

The following describes a process in which a terminal senses and selects a sidelink resource in this application.

A PHY layer of the terminal receives, in n time units (for example, slots), a notification that a MAC entity requests to determine a group of sidelink resources. The physical layer uses, as a candidate sidelink resource, a sidelink resource in [ n T1, n T2 ] in the sensed sidelink resources. The candidate sidelink resources in [ n T1, n T2] constitute a candidate resource set.

It may be understood that [n T1, n T2] is a resource selection window of the terminal.

T1 satisfies $0 \leq T1 \leq T_{proc,1}^{SL}$. A value of T1 depends on implementation of the terminal. A unit of $T_{proc,1}^{SL}$ is a slot, as defined in Table 2 below, where $\mu_{SL}$ is an SCS configuration. If a minimum value of T2 is less than a remaining (remaining) packet delay budget (packet delay budget, PDB) (unit: slot), a value of T2 depends on implementation of the terminal, and satisfies T2min≤T2≤P, where P indicates the remaining PDB. Otherwise, T2 is equal to the remaining PDB. The remaining PDB is provided by the MAC entity for the PHY layer.

**Table 2**

| $\mu_{SL}$ | $T_{proc,1}^{SL}$ [slots] |
|---|---|
| 0 | 3 |
| 1 | 5 |
| 2 | 9 |
| 3 | 17 |

The physical layer determines one or more sidelink resources from the candidate resource set according to a specific rule and reports to the MAC entity.

In an example, a sidelink resource m in the one or more sidelink resources is used as an example. The terminal determines, based on a reference signal received power (reference signal received power, RSRP) of a demodulation reference signal (demodulation reference signal, DMRS) of a PSCCH/PSSCH received on the sidelink resource m, whether a sidelink resource k in the candidate resource set is excluded. k is determined based on m.

For example, if the RSRP of the DMRS of the PSCCH/PSSCH received on the sidelink resource m is greater than a threshold 1, and another condition is met, the physical layer of the terminal determines that the sidelink resource k should be excluded. Finally, the physical layer determines that the one or more sidelink resources do not include the sidelink resource k. If a quantity of the one or more sidelink resources finally determined by the physical layer is less than a total quantity of sidelink resources in the candidate resource set multiplied by M, the terminal determines, based on a threshold 2, whether the sidelink resource k should be excluded. The threshold 2 is greater than the threshold 1. For example, the threshold 2 is a sum of the threshold 1 and a preset value. For example, the preset value is 3 dB.

In an example, in the current 3GPP Release 16 TS38.214 standard, a process in which the terminal senses and selects a sidelink resource is as follows:

(1) A candidate sidelink resource is defined. One candidate sidelink resource is a sidelink resource that is in a single slot in time domain, can cover one or more consecutive subchannels in frequency domain, and is in [ $n$ $T$1, $n$ $T$2 ] in time domain. One candidate resource may be denoted as Rxy. A slot in which the resource is located is a slot $t'^{SL}_y$ . A frequency domain of the resource includes a subchannel x j, where j=0, 1, ..., L-1, and L is a quantity of subchannels. The total quantity of candidate sidelink resources in $n$ $T$1, $n$ $T$2 ] is $M_{total}$.

(2) A sensing window is defined. A time domain is in $[n-T_0, \ n-T^{SL}_{proc,0}]$ , and a UE performs sensing within this time range. A unit of $T_0$ is a slot, and a value of $T_0$ may be configured by a network or preconfigured. A unit of $T^{SL}_{proc,0}$ is a slot, as defined in Table 3 below, where $\mu_{SL}$ is an SCS configuration on an SL. The UE senses slots that belong to the resource pool and are within the sensing window and that are other than a slot in which the UE performs a transmission. The UE performs the actions in the following steps based on a PSCCH decoded in these slots and an RSRP measured in these slots.

**Table 3**

| $\mu_{SL}$ | $T^{SL}_{proc,0}$ [slots] |
|---|---|
| 0 | 1 |
| 1 | 1 |
| 2 | 2 |
| 3 | 4 |

(3) An RSRP threshold Th(pi, pj) is determined according to a threshold table, where the threshold table is configured by a network or preconfigured. pi is a value of a priority field in received SCI, and pj is a transmission priority of a UE that selects a resource.

(4) A set $S_A$ is initialized to all candidate resources.

(5) The UE excludes, from the Sa, the candidate resource Rxy that meets all the following conditions. Condition 1: In step 2, the UE does not sense or monitor in a slot $t'^{SL}_m$ . Condition 2: It is assumed that the SCI is received in the slot $t'^{SL}_m$ , a resource reservation period field included in the SCI is set to any period value in a resource reservation period list, and a frequency domain resource indicated by the SCI includes subchannels in all resource pools. Rxy meets (c) in step 6.

(5a) If a quantity of remaining candidate resources in the $S_A$ is less than X×Mtotal, the set $S_A$ is initialized to all the candidate resources as in step (4).

(6) The UE excludes, from the Sa, the resource Rxy that meets all the following conditions. (a) The UE monitors the SCI in the slot $t'^{SL}_m$ , where in the SCI, a resource reservation period field indicates $P_{rsvp\_RX}$ and a priority field indicates

$prio_{RX}$; (b) a result of related RSRP measurement performed on the received SCI is higher than $Th(prio_{RX}, prio_{TX})$, where $prio_{TX}$ is a priority parameter provided by a MAC layer, and may be understood as a priority of a logical channel that triggers resource selection; and (c) when the SCI is received in the slot $t'^{SL}_m$, or a resource reservation field exists in the received SCI, assuming that SCI the same as the SCI received in the slot $t'^{SL}_m$ is received in a slot $t'^{SL}_{m+q \times P'_{rsvp\_RX}}$, a resource block set and a slot set that are determined based on the SCI overlap with $R_{x,y+j \times P'_{rsvp\_TX}}$, where q=1, 2, ..., Q, j=0, 1, ..., $C_{resel}$ - 1, and $P'_{rsvp\_RX}$ is a logical slot unit converted from $P_{rsvp\_RX}$. If $P_{rsvp\_RX} < T_{scal}$ and

$$n' - m \leq P'_{rsvp\_RX}, \quad Q = \left\lceil \frac{T_{scal}}{P_{rsvp\_RX}} \right\rceil$$

. Otherwise, Q = 1. If a slot n belongs to a set $(t^{SL}_0, t^{SL}_1, ..., t^{SL}_{T_{max}})$, $t^{SL}_{n'} = n$. Otherwise, the slot $t^{SL}_{n'}$ is a first slot that belongs to the set $(t^{SL}_0, t^{SL}_1, ..., t^{SL}_{T_{max}})$ and that is after the slot n. $T_{scal}$ is set to a selection window size T2 converted to a unit of ms.

(7) If the remaining resources in the $S_A$ are less than $X \times M_{total}$, $Th(pi, pj)$ is increased by 3 dB, and step 4 is continued.

The UE reports the resources in the $S_A$.

Currently, when the terminal communicates with a network device, to save unnecessary power consumption of the terminal and shorten monitoring time of the terminal, the terminal may use a discontinuous reception mechanism on a Uu interface (an interface between the terminal and the network device), to help the terminal in a radio resource control (radio resource control, RRC) connected state save energy. A basic principle of DRX is as follows: When the terminal communicates with the network device, the network device may transmit data in a time period, but the network device may not transmit data to the terminal in a subsequent long time period. If the network device does not send data to the terminal, if the terminal still remains in a monitoring state, the terminal is very high in power consumption. Therefore, when the terminal receives no data, the terminal may stop monitoring a physical downlink control channel (physical downlink control channel, PDCCH) to reduce power consumption of the terminal. This prolongs a battery life of the terminal.

In NR, when the terminal is in an RRC connected state, to save unnecessary power consumption, a discontinuous reception (Discontinuous Reception, DRX) function is defined. The terminal using the DRX mechanism monitors the PDCCH in some time periods, and does not monitor the PDCCH in other time periods. Therefore, DRX controls the terminal not to monitor the PDCCH in some time periods to reduce power consumption of the terminal.

In NR, the DRX mechanism configured by the network device for the terminal further includes a corresponding DRX parameter. For example, in the 5G NR Release, parameters mainly included in the DRX mechanism and functions of the parameters are as follows:

- DRX-on duration timer (drx-onDurationTimer) indicates the duration at the beginning of a DRX cycle (the duration at the beginning of a DRX Cycle). When the DRX cycle starts, duration of on duration may be considered that the terminal is in an active state in a running process of the DRX-on duration timer.
- DRX slot offset (drx-SlotOffset) indicates the delay before starting the drx-onDurationTimer.
- DRX-inactivity timer (drx-InactivityTimer) indicates the duration for which the terminal stays in the active state after successfully decoding a PDCCH for scheduling an initial transmission of new data on a Uu interface. That is, after the terminal is scheduled, the drx-InactivityTimer should be enabled to prolong time in which the terminal is in the active state. A corresponding scenario may be understood as follows: When the terminal is currently scheduled, it is quite possible that the terminal continues to be scheduled in a subsequent time period, so that the terminal needs to remain in the active state to wait for receiving data.
- Drx long cycle start offset (drx-LongCycleStartOffset) indicates the long DRX cycle (Long DRX Cycle) and the DRX start offset (drx-StartOffset). The long DRX cycle specifies a subframe quantity/millisecond occupied by the long cycle. The drx-StartOffset specifies the subframe from which the long and short DRX cycle starts.
- DRX downlink retransmission timer (drx-RetransmissionTimerDL) (per HARQ process except for the broadcast process) indicates the maximum duration until the terminal receives downlink retransmission data on the Uu interface. During running of the drx-RetransmissionTimerDL, the terminal waits to receive the downlink retransmission data from the network device.
- DRX uplink retransmission timer (drx-RetransmissionTimerUL) (per uplink HARQ process) indicates the maximum duration until the terminal receives an uplink retransmission resource on the Uu interface (the maximum duration until a grant for an UL retransmission is received). During running of the drx-RetransmissionTimerUL, the terminal retransmits uplink data.

- DRX short cycle (drx-ShortCycle) (optional) indicates the length of a short DRX cycle (Short DRX cycle). The unit is subframe/ms.
- DRX downlink HARQ round trip timer (drx-HARQ-RoundTripTime-TimerDL, drx-HARQ-RTT-TimerDL) (per downlink HARQ process except for the broadcast process) indicates the duration until the terminal expects to receive downlink HARQ retransmission data on the Uu interface. The duration may be understood as a time window. In the time window, a base station does not perform a downlink retransmission on a data packet that fails to be transmitted currently. The terminal can continue to receive downlink retransmission data of the data packet only after the expiry of the drx-HARQ-RTT-TimerDL. When the drx-HARQ-RTT-TimerDL of the terminal expires, the terminal may start to receive the downlink retransmission data, and enable the drx-RetransmissionTimerDL, that is, the minimum duration before a downlink assignment for a HARQ retransmission may occur.
- DRX uplink HARQ round trip timer (drx-HARQ-RTT-TimerUL) (per uplink HARQ process) indicates the duration until the terminal expects to receive an uplink HARQ retransmission resource on the Uu interface. The duration may be understood as a time window. In the time window, the terminal cannot perform an uplink retransmission on a data packet that fails to be transmitted currently. The terminal can continue to upload data of the data packet only after the expiry of the drx-HARQ-RTT-TimerUL. When the drx-HARQ-RTT-TimerUL of the terminal expires, the terminal may start an uplink retransmission, and enable the drx-RetransmissionTimerUL, that is, the minimum duration before an uplink HARQ retransmission grant may occur.

Therefore, after the DRX mechanism is configured for the terminal, that the terminal is in DRX-active time (active time) mainly includes the following cases.

Case 1: Any one timer (timer) of the drx-onDurationTimer, the drx-InactivityTimer, the drx-Retransmission-TimerDL, the drx-RetransmissionTimerUL, or a random access contention resolution timer (ra-ContentionResolution-Timer) is running. The ra-ContentionResolutionTimer is a timer used by the terminal in a random access process, and is used by the terminal to wait to obtain an access resource of the base station.

Case 2: The terminal has sent a scheduling request (scheduling request, SR) on a physical uplink control channel (physical uplink control channel, PUCCH), and the SR is currently in a pending state. The pending may be understood as that the terminal prepares but has not sent an SR to the network device.

Case 3: Similar to the ra-ContentionResolutionTimer, the terminal successfully receives a random access response (random access response, RAR) for a contention-based random access preamble (preamble) not selected by the terminal, but does not receive a PDCCH indicating an initial transmission (using a cell radio network temporary identifier (cell radio network temporary identifier, C-RNTI)).

Correspondingly, in any one or more of the foregoing three cases, the terminal needs to detect the PDCCH. The detecting the PDCCH includes detecting a PDCCH corresponding to the following radio network temporary identifier (radio network temporary identifier, RNTI): a cell-RNTI (cell-RNTI, C-RNTI), a configured scheduling-RNTI (configured scheduling-RNTI, CS-RNTI), an interruption-RNTI (interruption-RNTI, INT-RNTI), a slot format indication-RNTI (slot format indication-RNTI, SFI-RNTI), a semi-persistent channel state information-RNTI (semi-persistent channel state information-RNTI, SP-CSI-RNTI), a transmit power control-PUCCH-RNTI (transmit power control-PUCCH-RNTI, TPC-PUCCH-RNTI), a transmit power control-PUSCH-RNTI (transmit power control-PUSCH-RNTI, TPC-PUSCH-RNTI), or a transmit power control-sounding reference signal-RNTI (transmit power control-sounding reference signal-RNTI, TPC-SRS-RNTI).

In the foregoing description, a PDCCH corresponding to an RNTI may indicate that a cyclic redundancy check (cyclic redundancy check, CRC) bit of DCI carried on the PDCCH is scrambled by the RNTI.

It should be further noted that, in addition to the foregoing several cases, the active time may further include another case specified in a future communication protocol. This is not specifically limited in embodiments of this application.

In the description of this embodiment of this application, a timer is running once the timer is started, until the timer is stopped or expires; otherwise the timer is not running. The timer can be started if the timer is not running. After the timer is stopped or expires, the timer is not running, until the timer is started. The timer can be restarted if the timer is running. A time length of the timer may be understood as a time length in which the timer continuously runs from a starting or restarting moment to an expiration moment. A value of the timer is an initial value of the timer when the timer is started or restarted. The initial value of the timer may be the time length of the timer. The value of the timer is the time length of the timer when the timer is started or restarted.

Names of the timers in embodiments are merely examples. The DRX parameters/timers in the following description are DRX parameters/timers on the SL.

When the DRX cycle is configured or the DRX is configured, the active time includes time in which the drx-onDurationTimer, the drx-InactivityTimer, the drx-RetransmissionTimerDL, or the drx-RetransmissionTimerUL is running.

Within the active time, the terminal needs to monitor the PDCCH. Outside the active time, the terminal does not need to monitor the PDCCH. Therefore, the terminal may not monitor the PDCCH.

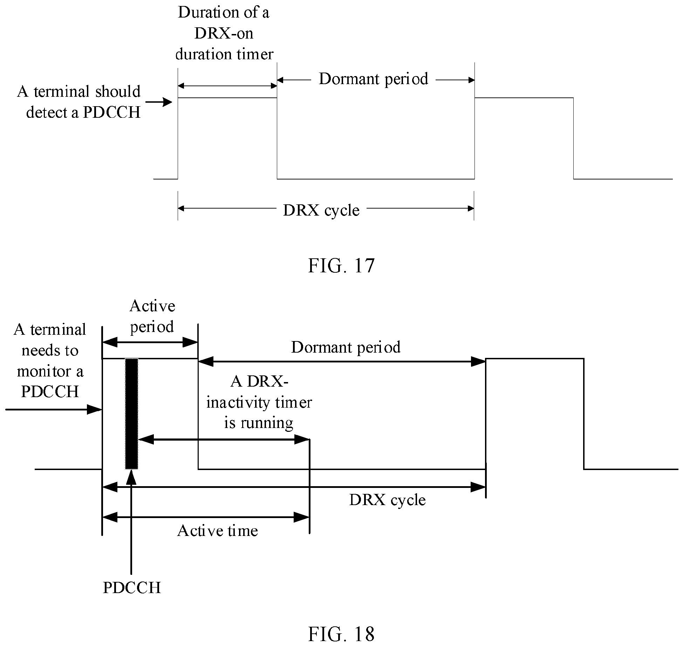

The DRX cycle is shown in FIG. 17. The on duration (On Duration) is periodically repeated. The DRX cycle is a periodicity in which the on duration is repeated. The drx-onDurationTimer starts at a start moment of the on duration. The duration of the drx-onDurationTimer is the duration of the on duration. In other words, the on duration is time while the drx-onDurationTimer is running. An opportunity for DRX (Opportunity for DRX) is a period of inactivity. If no other timer that causes the DRX active time is running, this period is a dormant period.

A time at which the drx-onDurationTimer is started is determined based on the drx-StartOffset and the drx-SlotOffset. Specifically, a subframe from which the drx-onDurationTimer is started is determined based on the drx-StartOffset. The drx-onDurationTimer is started after the drx-SlotOffset starting from the subframe.

As shown in FIG. 18, if the terminal receives, in the on duration, the PDCCH indicating a new transmission, the terminal starts or restarts the drx-InactivityTimer in the first symbol after the end of the PDCCH reception. As shown in FIG. 18, the active time of the terminal is determined based on a start moment of the on duration and an end moment of the drx-InactivityTimer. In other words, a start moment of the active time of the terminal is the start moment of the on duration, and an end moment of the active time of the terminal is the end moment of the drx-InactivityTimer.

If the terminal receives a MAC PDU in a configured downlink assignment, the terminal starts the drx-HARQ-RTT-TimerDL for the corresponding HARQ process, and stops the drx-RetransmissionTimerDL for the corresponding HARQ process in the first symbol after the end of the transmission carrying the downlink HARQ feedback. If the terminal receives a PDCCH indicating a downlink transmission, the terminal starts the drx-HARQ-RTT-TimerDL for the corresponding HARQ process, and stops the drx-RetransmissionTimerDL for the corresponding HARQ process in the first symbol after the end of the transmission carrying the downlink HARQ feedback. If the drx-HARQ-RTT-TimerDL expires, if data of the corresponding HARQ process is not successfully decoded, the terminal starts the drx-RetransmissionTimerDL for the corresponding HARQ process in the first symbol after the expiry of the drx-HARQ-RTT-TimerDL.

When sidelink communication is currently performed between a transmit terminal (Tx UE) and a receive terminal (Rx UE), specific scenarios that may be considered include but are not limited to sidelink related communication scenarios such as V2X communication, device-to-device (device-to-device, D2D), public safety (public safety), and commercial (commercial) communication. If the Rx UE does not use the DRX mechanism, the Rx UE continuously monitors, in an entire time period, a PSCCH sent by the Tx UE, and the Rx UE stays in an active state and can receive scheduling data sent by the Tx UE. However, the Tx UE does not always send data to the receive terminal. Therefore, if the Rx UE continuously monitors, in the entire time period, the PSCCH sent by the Tx UE, power consumption of the Rx UE is inevitably wasted.

Based on the foregoing description, the 3GPP Release 17 discusses introducing DRX to the sidelink. For details about the SL DRX timer, refer to the DRX timer on the Uu interface. For example, the drx-onDurationTimer, the drx-InactivityTimer, the drx-HARQ-RTT-TimerSL, and the drx-RetransmissionTimerSL are also used on the SL. For ease of differentiation from the various timers on the Uu interface, in this embodiment of this application, various timers used on the SL may be distinguished by adding the SL to the names. For example, the drx-onDurationTimer used on the SL may be named drx-onDurationTimer-SL. The drx-InactivityTimer used on the SL may be named drx-InactivityTimer-SL.

SL DRX-active time includes time while the drx-onDurationTimer-SL (DRX-on duration timer-SL), the drx-InactivityTimer-SL (DRX-inactivity timer-SL), or the drx-RetransmissionTimer-SL (DRX-retransmission timer-SL) is running. The receive terminal (Rx UE) monitors/receives a PSCCH, a PSSCH, SCI, or a MAC PDU within the SL DRX-active time. One possible manner is that each source and destination pair corresponds to one SL DRX-active time. Each source and destination pair corresponds to a set of SL DRX timers.

The drx-onDudrationTimer-SL indicates duration at the beginning of a sidelink DRX cycle, that is, "On Duration" of the DRX cycle. In other words, the "On Duration" indicates a time period, and is determined based on the drx-onDurationTimerPC5, and a length is equal to a size of the drx-onDudrationTimer-SL. At a start moment of the sidelink DRX cycle, the terminal starts the drx-onDudrationTimer-SL, that is, enters the "On Duration". The drx-onDudrationTimer-SL starts to run, that is, enters the sidelink DRX-active time.

The drx-InactivityTimer-SL (which may also be referred to as drx-InactivityTimerPC5) indicates duration after a transmission of a PSCCH, a PSSCH, SCI, or a MAC PDU. The SCI includes first-level SCI, second-level SCI, or first-level SCI and second-level SCI. The first-level SCI may be carried on a PSCCH. The second-level SCI may be carried on a PSSCH. A PSSCH transmission may be a new transmission, and correspondingly the PSCCH or the SCI is used to schedule a new transmission. Alternatively, a PSSCH transmission may be a new transmission or a retransmission, and the PSCCH or the SCI is used to schedule a new transmission or a retransmission. For example, if the terminal device receives a PSCCH or SCI indicating a new sidelink data transmission in the sidelink DRX-active time, the terminal device starts or restarts the drx-InactivityTimerPC5, so that the terminal is always in the sidelink DRX-active time. It may be understood that a time length in which the terminal device is originally in the sidelink DRX-active state is a time length of the "On Duration". The drx-InactivityTimerPC5 can run to prolong the time in which the terminal device is in a sidelink DRX-active state. Until the drx-InactivityTimerPC5 expires, or the terminal device receives related MAC CE signaling, for example, DRX Command PC5 MAC CE, to stop the drx-onDurationTimerPC5 and the drx-InactivityTimerPC5, the terminal ends the sidelink DRX-active time and enters sidelink DRX-inactive time, that is, the terminal changes from the sidelink DRX-active state to a sidelink DRX-inactive state.

The drx-RetransmissionTimer-SL (which may also be referred to as drx-RetransmissionTimerPC5) indicates maximum duration before the reception of the sidelink HARQ retransmission or the SCI for scheduling the side chain HARQ retransmission. Different sidelink processes may correspond to different drx-RetransmissionTimerPC5.

The drx-HARQ-RTT-Timer-SL may also be referred to as drx-HARQ-RTT-TimerPC5, and indicates minimum duration before the sidelink HARQ retransmission or the SCI for scheduling the sidelink HARQ retransmission is expected. Different sidelink processes may correspond to different drx-HARQ-RTT-TimerPC5.

Names of timers used on the SL are not limited in embodiments of this application. The above names are only an example.

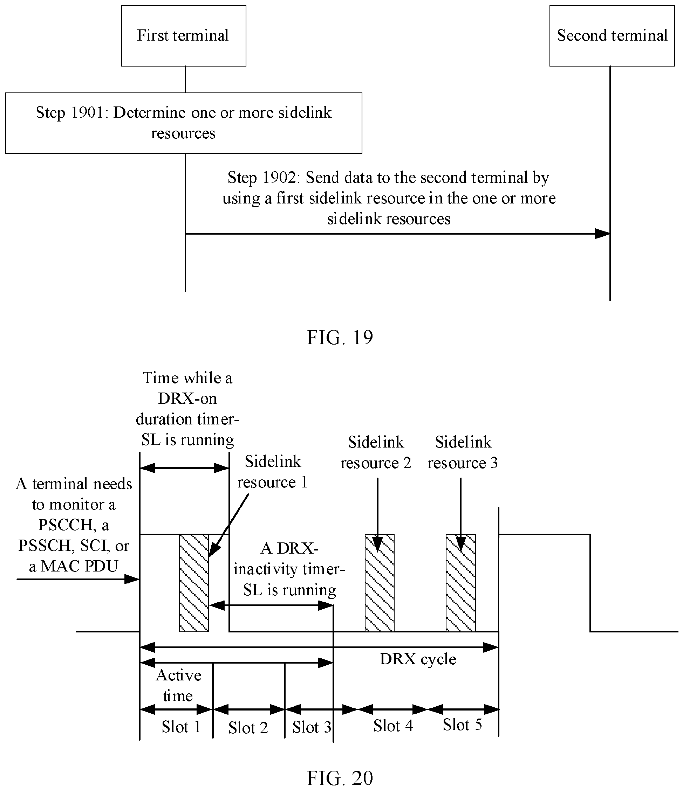

Because SL DRX is not considered in the mode 2 resource selection mechanism in the conventional technology, the transmit terminal is a destination selected for the SL grant according to the foregoing rule. However, a time domain position of a sidelink resource corresponding to/indicated by/allocated by an SL grant may not be within the SL DRX-active time of the destination. If the terminal sends a PSCCH, a PSSCH, SCI, or a MAC PDU to the destination on the sidelink resource corresponding to/indicated by/allocated by the SL grant, and the destination does not monitor/receive the PSCCH, the PSSCH, the SCI, or the MAC PDU, a transmission of the PSCCH, the PSSCH, the SCI, or the MAC PDU fails, and the Tx UE also wastes power consumption. Based on this embodiment of this application, how to avoid a data packet transmission failure and avoid waste of power consumed by the Tx UE is resolved by using the solution described in FIG. 19.

In embodiments of this application, a specific structure of an entity for performing a communication method is not specially limited in embodiments of this application, provided that the entity can run a program that records code of the communication method in embodiments of this application, to perform communication according to the communication method in embodiments of this application. For example, the entity for performing a communication method provided in embodiments of this application may be a functional module that is in the first terminal and that can invoke a program and execute the program, or may be a communication apparatus used in the first terminal, for example, a chip, a chip system, an integrated circuit, or the like. The chip, the chip system, or the integrated circuit may be disposed inside the first terminal, or may be independent of the first terminal. This is not limited in embodiments of this application.

FIG. 19 shows a communication method according to an embodiment of this application. The method includes the following steps.

Step 1901: A first terminal determines one or more sidelink resources.

The one or more sidelink resources may be used to transmit data sent by the first terminal to a second terminal. In other words, the first terminal may send the data to the second terminal by using a resource in the one or more sidelink resources. A sidelink resource within the sidelink discontinuous reception-active time of the second terminal exists in the one or more sidelink resources. The second terminal is in an active state within the sidelink discontinuous reception-active time of the second terminal.

As described above, the sidelink discontinuous reception-active time of the second terminal includes time while any one or more timers of a drx-onDurationTimer-SL, a drx-InactivityTimer-SL, or a drx-RetransmissionTimer-SL of the second terminal are running. For example, when any one or more timers of the drx-InactivityTimer-SL or the drx-RetransmissionTimer-SL of the second terminal are not running, the sidelink discontinuous reception-active time of the second terminal includes at least time while the drx-onDurationTimer-SL is running. When any one or more timers of the drx-InactivityTimer-SL or the drx-RetransmissionTimer-SL of the second terminal are running, the second terminal remains an active state. In this case, the sidelink discontinuous reception-active time of the second terminal is determined based on running duration of the any one or more timers of the drx-onDurationTimer-SL, the drx-InactivityTimer-SL, or the drx-RetransmissionTimer-SL.

The first terminal and the second terminal in this embodiment of this application may perform a data transmission on a sidelink between the first terminal and the second terminal by using a sidelink resource.

In an embodiment of this application, the one or more sidelink resources may be resources special for sending specific data, or the one or more sidelink resources may be resources for sending any data. This is not limited in embodiments of this application.

In an embodiment of this application, the one or more sidelink resources may be obtained by the first terminal from a resource pool through sensing (which may also be referred to as listening, English: sensing). For example, if the first terminal needs to send data, the first terminal may perform a sensing technology in the resource pool, to determine the one or more sidelink resources.

In an embodiment of this application, the one or more sidelink resources may be idle resources, namely, resources not used or reserved by a terminal other than the second terminal. Alternatively, the one or more sidelink resources may be non-idle resources, namely, resources used or reserved by a terminal other than the second terminal. Alternatively, the second terminal predicts, through sensing, that a signal received power or a signal strength on the one or more sidelink resources is small. Even if a terminal other than the second terminal sends data on the one or more sidelink resources, the signal received power or the signal strength measured by the second terminal is small.

In an embodiment of this application, the one or more sidelink resources may be sidelink resources that can be used to send data and that are recommended or scheduled to the first terminal by the terminal other than the second terminal. Because the terminal other than the second terminal may not learn of time in which the second terminal is in the active state and time in which the second terminal is in a dormant state, the recommended or scheduled sidelink resources may include a sidelink resource whose time range is within the sidelink discontinuous reception-active time of the second terminal.

In an embodiment of this application, the one or more sidelink resources may be sidelink resources that can be used to send data and that are allocated to the first terminal by a base station accessed by the first terminal. That is, the one or more sidelink resources may be sidelink resources obtained by the first terminal in the foregoing mode 1.

The second terminal in this embodiment of this application uses a DRX mechanism. The second terminal is in the active state within the sidelink discontinuous reception-active time. When the second terminal is in the active state, that is, when the second terminal is in the sidelink discontinuous reception-active time, the second terminal monitors/receives a PSCCH, a PSSCH, SCI, or a MAC PDU, that is, may receive data from another terminal.

Time of the second terminal other than the sidelink discontinuous reception-active time is discontinuous reception-inactive time that may also be referred to as a sidelink discontinuous reception-dormant period.

The second terminal is in an inactive state in the sidelink discontinuous reception-inactive time, and the inactive state may also be referred to as the dormant state. When the second terminal is in the dormant state, that is, when the second terminal is not in the sidelink discontinuous reception-active time, the second terminal may not monitor/receive a PSCCH, a PSSCH, SCI, or a MAC PDU. When the second terminal is in the sidelink discontinuous reception-inactive time, the second terminal may also monitor/receive a PSCCH, a PSSCH, SCI, or a MAC PDU. This is not limited in embodiments of this application.

For example, the data sent by the first terminal to the second terminal may be one or more of a PSCCH, a PSSCH, SCI, or a MAC PDU sent by the first terminal to the second terminal on a sidelink. The SCI includes first-level SCI, or the SCI includes first-level SCI and second-level SCI. The PSCCH indicates a time-frequency domain resource position for a PSSCH transmission, a modulation and coding scheme, a priority of data carried on a sidelink data channel (Physical Sidelink Shared CHannel, PSSCH), and the like. The PSSCH is used to carry data.

In this embodiment of this application, a discontinuous reception mechanism used when the second terminal performs sidelink communication on a PC5 interface may be referred to as a sidelink discontinuous reception (SL DRX) mechanism.

The SL DRX of the terminal in this embodiment of this application may be understood as SL DRX in which the terminal serves as a receive terminal, or may be understood as SL DRX between the terminal as a transmit terminal and a receive terminal, or SL DRX between a source and destination pair. A source is a transmit terminal identified by using a source layer-2 ID, and a destination is a receive terminal identified by using a destination layer-2 ID. Alternatively, a source is a transmit terminal identified by using a source layer-1 ID, and a destination is a receive terminal identified by using a destination layer-1 ID.

The receive terminal device monitors or receives a PSCCH, a PSSCH, SCI, or a MAC PDU in an SL DRX active state, that is, in an SL DRX active period.

The second terminal may also be understood as a destination, and is identified by using a destination layer-2 ID or a destination layer-1 ID. The first terminal may also be understood as a source, and is identified by using a source layer-2 ID or a source layer-1 ID.

Step 1902: The first terminal sends data to the second terminal by using a first sidelink resource in the one or more sidelink resources. Correspondingly, the second terminal receives the data from the first terminal on the first sidelink resource. The first sidelink resource is located within the sidelink discontinuous reception-active time of the second terminal.

In this embodiment of this application, that the first sidelink resource is located within the sidelink discontinuous reception-active time of the second terminal may mean that a time domain position of the first sidelink resource is located within the sidelink discontinuous reception-active time. In other words, the first sidelink resource is within the sidelink discontinuous reception-active time from a start position to an end position. Alternatively, a part of time domain positions of the first sidelink resource are within the sidelink discontinuous reception-active time. For example, the first sidelink resource is within the sidelink discontinuous reception-active time from a start position to an intermediate position, and a remaining time domain position is not within the sidelink discontinuous reception-active time.

For example, as shown in FIG. 20, time while the drx-onDurationTimer-SL of the second terminal is running includes a slot 1 and a slot 2. The one or more sidelink resources include a sidelink resource 1, a sidelink resource 2, and a sidelink resource 3. The sidelink resource 1 is located in the slot 1. The sidelink resource 2 and the sidelink resource 3 are located in a slot 4 and a slot 5 respectively. Because the sidelink resource 1 is within the sidelink discontinuous reception-active time, the first terminal may determine that the sidelink resource 1 is the first sidelink resource.

In an example, when there are a plurality of sidelink resources within the sidelink discontinuous reception-active time of the second terminal, the first terminal may determine the first sidelink resource based on priorities of the plurality of sidelink resources. For example, a sidelink resource with a highest priority in the plurality of sidelink resources within the sidelink discontinuous reception-active time is determined as the first sidelink resource. Certainly, the first terminal may alternatively randomly select one sidelink resource from the plurality of sidelink resources within the sidelink discontinuous reception-active time, and determine the sidelink resource as the first sidelink resource. This is not limited in embodiments of this application.

An embodiment of this application provides a communication method. In the method, the first terminal first determines one or more sidelink resources. For example, the first terminal may determine a first resource set from a candidate resource set, and then exclude a first part of resources from the first resource set based on a first RSRP threshold. If the first part of resources are excluded, if a quantity of resources whose time range is within a first time period in remaining resources in the first resource set is less than a first threshold, the first terminal determines a second resource set from the candidate resource set. Then, the first terminal determines the one or more sidelink resources from the second resource set based on a second RSRP threshold; or if the first part of resources are excluded, if a quantity of resources whose time range is within a first time period in remaining resources in the first resource set is greater than or equal to a first threshold, the first terminal determines that the one or more sidelink resources include the resources whose time range is within the first time period in the remaining resources in the first resource set. Optionally, the first resource set is the same as the second resource set, or the first resource set and the second resource set are a same resource set.

Optionally, the first resource set includes, for example, all sidelink resources whose time range is within the first time period in the candidate resource set, or the first resource set includes, for example, all sidelink resources in the candidate resource set (in this case, the first resource set may be considered as the candidate resource set). If the first resource set includes all the sidelink resources whose time range is within the first time period in the candidate resource set, the first terminal may determine a third resource set, where the third resource set includes all sidelink resources whose time range is outside the first time period in the candidate resource set. The first terminal excludes a second part of resources from the third resource set based on a third RSRP threshold. If the second part of resources are excluded, if a quantity of remaining resources in the third resource set is less than a second threshold, the first terminal determines a fourth resource set from the candidate resource set. Then, the first terminal determines the one or more sidelink resources from the fourth resource set based on the fourth RSRP threshold; or if the second part of resources are excluded, if a quantity of remaining resources in the third resource set is greater than or equal to a second threshold, the first terminal determines that the one or more sidelink resources include the remaining resources in the third resource set. Optionally, the third resource set is the same as the fourth resource set, or the third resource set and the fourth resource set are a same resource set.

After determining the one or more sidelink resources, the first terminal sends the data to the second terminal on the first sidelink resource in the one or more sidelink resources. The first sidelink resource is within the sidelink discontinuous reception-active time of the second terminal, and the second terminal is in the active state in the sidelink discontinuous reception-active time of the second terminal. In this way, it can be ensured that when the first terminal sends the data on the first sidelink resource, the second terminal is in a state in which the data can be received. This can avoid a data transmission failure, and also avoid waste of power consumed when the first terminal sends the data.

In an embodiment of this application, before step 1902, the method provided in this embodiment of this application may further include: The first terminal determines the sidelink discontinuous reception-active time of the second terminal.

That the first terminal determines the sidelink discontinuous reception-active time of the second terminal may be implemented in the following manner:

Manner 1: The first terminal obtains the sidelink discontinuous reception-active time of the second terminal from the second terminal.

The first terminal obtains the sidelink discontinuous reception-active time of the second terminal from the second terminal through active obtaining and passive obtaining. The active obtaining means that the first terminal first sends a first request message to the second terminal, where the first request message is used to request the sidelink discontinuous reception-active time of the second terminal. Then, the second terminal sends DRX configuration information of the second terminal to the first terminal, where the DRX configuration information includes information for determining the sidelink discontinuous reception-active time of the second terminal. For example, the information for determining the sidelink discontinuous reception-active time of the second terminal is a discontinuous reception related parameter of the second terminal, for example, a DRX cycle, duration of the drx-onDurationTimer-SL, duration of the drx-Inactivity-Timer-SL, duration of the drx-RetransmissionTimer-SL, and a DRX start offset. In this way, the first terminal may determine the sidelink discontinuous reception-active time of the second terminal based on the discontinuous reception related parameter.

The passive obtaining means that the first terminal may not send a first request message to the second terminal, but the second terminal actively sends DRX configuration information of the second terminal to the first terminal. For example, before determining that the data of the first terminal needs to be received, the second terminal may first send the DRX configuration information of the second terminal to the first terminal.

Manner 2: The first terminal obtains the sidelink discontinuous reception-active time of the second terminal from a communication device that configures the DRX mechanism for the second terminal.

For example, the communication device may be the base station, or may be a terminal for configuring the DRX mechanism. This is not limited in embodiments of this application.

The first terminal may also obtain the sidelink discontinuous reception-active time of the second terminal from the communication device in manner 2 through active obtaining and passive obtaining. For a specific implementation, refer to the foregoing manner in which the first terminal obtains the sidelink discontinuous reception-active time of the second terminal from the second terminal. Details are not described herein again.

To ensure that the first terminal can select, from the one or more sidelink resources, the sidelink resource within the sidelink discontinuous reception-active time of the second terminal, and ensure reliability of sending data by the first terminal to the second terminal, in this embodiment of this application, the quantity of the sidelink resources within the first time period in the one or more sidelink resources is greater than or equal to the first threshold. A start moment of the first time period is a start moment corresponding to the candidate resource set, or a start moment of the first time period is a start moment of the sidelink discontinuous reception-active time or later than a start moment of the sidelink discontinuous reception-active time. An end moment of the first time period is an end moment of the sidelink discontinuous reception-active time. Alternatively, the first time period is a time period in which the moment of the candidate resource set overlaps the discontinuous reception-active time. It may be understood that the first time period may be a continuous time period, or may be a discontinuous time set. That is, the first time period may include one or more continuous time periods.

In an embodiment of this application, the first threshold may be a value predefined in a protocol. For example, the first threshold is a fixed value, for example, 2, 3, 4, 5, or the like.

In an embodiment of this application, the first threshold may be configured by a network device or preconfigured. For example, the first threshold is configured via RRC signaling.

In an embodiment of this application, the first threshold is determined based on a total quantity of candidate sidelink resources within the first time period. For example, the first threshold is the total quantity of the candidate sidelink resources within the first time period multiplied by M. M is greater than 0 and less than or equal to 1. M may be determined by the first terminal, predefined in a protocol, configured by the network device, or preconfigured. This is not limited in embodiments of this application. For example, the first time period is $[T1 + n, T3]$. The first threshold is determined by multiplying M by the total quantity of the candidate sidelink resources in $[T1+n, T3]$ in the candidate resource set. M may be determined by the first terminal, predefined in a protocol, configured by the network device, or preconfigured. This is not limited in embodiments of this application. n indicates a moment at which a MAC entity of the first terminal notifies a physical layer to sense a sidelink resource. That is, the PHY layer of the first terminal receives, in a slot n, a request from the MAC entity to determine one or more sidelink resources. $T3$ indicates an end moment of the discontinuous reception-active time. $T1+n$ indicates the start moment corresponding to the candidate resource set.

In an embodiment of this application, the first terminal (the physical layer) may increase an RSRP threshold (for example, Th(pi, pj)) for determining whether a candidate sidelink resource is excluded, to ensure that a quantity of resources within the first time period in the one or more sidelink resources determined by the physical layer is greater than or equal to the first threshold.

A possible implementation in which the first terminal (the physical layer) determines the one or more sidelink resources from the candidate resource set, and enables the quantity of sidelink resources within the first time period in the one or more sidelink resources to be greater than or equal to the first threshold is as follows: The first terminal (the physical layer) initializes a set $S_{A1}$ as a set of all sidelink resources within the first time period in the candidate resource set, excludes a part of resources from the set $S_{A1}$, and enables a quantity of remaining resources in the set $S_{A1}$ to be greater than or equal to the first threshold. The first terminal (the physical layer) determines that the one or more sidelink resources include the remaining resources in the set $S_{A1}$. The part of resources excluded from the set $S_{A1}$ include at least one of the following: a first resource and a second resource. The first resource is determined based on a slot not monitored by the first terminal and a resource reservation period (for example, in step (5), the first resource is the candidate resource Rxy that meets the conditions). The second resource is determined based on SCI detected by the first terminal, an RSRP corresponding to the SCI, and an RSRP threshold (for example, Th(pi, pj)) (for example, in step (6), the second resource is the candidate resource Rxy that meets the conditions). If a quantity of remaining resources obtained by excluding the first resource from the set $S_{A1}$ is less than the first threshold, the set $S_{A1}$ is initialized as a set of all sidelink resources within the first time period in the candidate resource set, and then the second resource is excluded. If a quantity of remaining resources obtained by excluding the second resource from the set $S_{A1}$ is less than the first threshold, the set $S_{A1}$ is initialized as a set of all sidelink resources within the first time period in the candidate resource set, the RSRP threshold is increased, and then the second resource is excluded. It may also be understood that the excluded second resource is put back into the set $S_{A1}$, then a new second resource is determined based on an increased RSRP threshold, and the new second resource is excluded from the set Sai. The first terminal may continuously increase the RSRP threshold until a quantity of remaining resources in the set $S_{A1}$ is greater than or equal to the first threshold.

The first terminal (the physical layer) may further initialize a set $S_{A2}$ as a set of all sidelink resources outside the first time period in the candidate resource set, exclude a part of resources from the set $S_{A2}$, and enable a quantity of remaining resources in the set $S_{A2}$ to be greater than or equal to the second threshold. The second threshold may be configured by the network device or preconfigured. Alternatively, the second threshold may be determined based on a total quantity of candidate sidelink resources outside the first time period in the candidate resource set. For example, the second threshold is the total quantity of the candidate sidelink resources outside the first time period in the candidate resource set multiplied by M1. M1 is greater than 0 and less than or equal to 1. M1 may be determined by the first terminal, predefined in a protocol, configured by the network device, or preconfigured. This is not limited in embodiments of this application. M1 may alternatively be equal to M. The first terminal (the physical layer) determines that the one or more sidelink resources further include the remaining resources in the set $S_{A2}$. The part of resources excluded from the set $S_{A2}$ include at least one of the following: a third resource and a fourth resource. The third resource is determined based on a slot not monitored by the first terminal and a resource reservation period (for example, in step (5), the third resource is the candidate resource Rxy that meets the conditions). The fourth resource is determined based on SCI detected by the first terminal, an RSRP corresponding to the SCI, and an RSRP threshold (for example, Th(pi, pj)) (for example, in step (6), the fourth resource is the candidate resource Rxy that meets the conditions). If a quantity of remaining resources obtained by excluding the third resource from the set $S_{A2}$ is less than the second threshold, the set $S_{A2}$ is initialized as a set of all sidelink resources outside the first time period in the candidate resource set, and then the fourth resource is excluded. If a quantity of remaining resources obtained by excluding the fourth resource from the set $S_{A2}$ is less than the second threshold, the set $S_{A2}$ is initialized as a set of all sidelink resources outside the first time period in the candidate resource set, the RSRP threshold is increased, and then the fourth resource is excluded. It may also be understood that the excluded fourth resource is put back into the set $S_{A2}$, then a new fourth resource is determined based on an increased RSRP threshold, and the new fourth resource is excluded from the set $S_{A2}$. The first terminal may continuously increase the RSRP threshold until a quantity of remaining resources in the set $S_{A2}$ is greater than or equal to the second threshold. The remaining resources in the set $S_{A2}$ may be used by the first terminal to select a retransmission resource.

Another possible implementation in which the first terminal (the physical layer) determines the one or more sidelink resources from the candidate resource set, and enables the quantity of sidelink resources within the first time period in the one or more sidelink resources to be greater than or equal to the first threshold is as follows: The first terminal (the physical layer) initializes the set $S_A$ as a set of all sidelink resources in the candidate resource set, excludes a part of resources from the set $S_A$, and enables a quantity of all sidelink resources within the first time period in remaining resources in the set $S_A$ to be greater than or equal to the first threshold. The first terminal (the physical layer) determines that the one or more sidelink resources include the remaining resources in the set $S_A$. The part of resources excluded from the set $S_A$ include at least one of the following: a fifth resource and a sixth resource. The fifth resource is determined based on a slot not monitored by the first terminal and a resource reservation period (for example, in step (5), the fifth resource is the candidate resource Rxy that meets the conditions). The sixth resource is determined based on SCI detected by the first terminal, an RSRP corresponding to the SCI, and an RSRP threshold (for example, Th(pi, pj)) (for example, in step (6), the sixth resource is the candidate resource Rxy that meets the conditions). If a quantity of resources within the first time period in remaining resources obtained by excluding the fifth resource from the set $S_A$ is less than the first threshold, the set $S_A$ is initialized as a set of all sidelink resources in the candidate resource set, and then the sixth resource is excluded. If a quantity of resources within the first time period in remaining resources obtained by excluding the sixth resource from the set $S_A$ is less than the first threshold, the set $S_A$ is initialized as a set of all sidelink resources in the candidate resource set, the RSRP threshold is increased, and then the sixth resource is excluded. It may also be understood that the excluded sixth resource is put back into the set $S_A$, then a new sixth resource is determined based on an increased RSRP threshold, and the new sixth resource is excluded from the set $S_A$. The first terminal may continuously increase the RSRP threshold until a quantity of resources within the first time period in remaining resources in the set $S_A$ is greater than or equal to the first threshold.

The candidate resource set in this embodiment of this application includes s candidate sidelink resources, where s is an integer greater than or equal to 1. The following describes how the first terminal determines the candidate resource set.

For example, the first terminal determines the s candidate sidelink resources from the sidelink resources as the candidate resource set based on a resource selection window of the first terminal. In this case, the start moment corresponding to the candidate resource set is a start moment of the resource selection window of the first terminal. Correspondingly, a start moment of a sidelink resource whose time domain position is the earliest in the candidate resource set is later than or equal to the start moment of the resource selection window. An end moment corresponding to the candidate resource set is an end moment (for example, $T2+n$) of the resource selection window of the first terminal. In other words, an end moment of a sidelink resource whose time domain position is the latest in the candidate resource set should be earlier than or equal to $T2+n$.

For example, if $[T1+n, T2+n]$ is used as the resource selection window of the first terminal, the first terminal may determine s sidelink resources in $[T1+n, T2+n]$ as the candidate sidelink resources. $T2+n$ indicates the end moment of the resource selection window. In other words, the end moment of the sidelink resource whose time domain position is the latest in the candidate resource set should be earlier than or equal to $T2+n$. The s sidelink resources include all sidelink resources in $[T1+n, T2+n]$. One sidelink resource is a resource of one frequency unit in one slot. It may be understood that, in a full sensing mechanism, the s sidelink resources include all the sidelink resources in $[T1+n, T2+n]$. Alternatively, the s sidelink resources include a part of sidelink resources in $[T1+n, T2+n]$, for example, resources of some frequency units in some slots. The frequency unit may be L consecutive subchannels, and L is an integer greater than or equal to 1. For another example, the s sidelink resources include all sidelink resources in Y slots in $[T1+n, T2+n]$. Y is an integer greater than 0. It may be understood that, in a partial sensing mechanism, the s sidelink resources include the part of sidelink resources in $[T1+n, T2+n]$.

For conditions met by $T1$ and $T2$, refer to the description in the foregoing Table 2, or refer to conditions described below. Details are not described herein again.

In a specific implementation, step 1901 in this embodiment of this application may be implemented in the following manner: The first terminal uses all sidelink resources located in the resource selection window (for example, $[T1+n, T2+n]$) as the candidate resource set. Then, the first terminal determines the one or more sidelink resources from the candidate resource set. Specifically, the physical layer of the first terminal determines the candidate resource set, and determines the one or more sidelink resources from the candidate resource set.

In an embodiment of this application, the first terminal determines the candidate resource set, so that the candidate resource set includes a resource in the sidelink discontinuous reception-active time. In other words, the first terminal determines the candidate resource set, so that a moment at which the candidate resource set is located overlaps the sidelink discontinuous reception-active time.

In an embodiment of this application, when $T2+n$ is greater than or equal to $T3$, that is, the end moment corresponding to the candidate resource set is later than or equal to the end moment of the sidelink discontinuous reception-active time, the quantity of the sidelink resources within the first time period in the one or more sidelink resources is greater than or equal to the first threshold.

For example, the candidate resource set includes 10 sidelink resources. A total quantity of sidelink resources in $[T1+n, T3]$ in the 10 sidelink resources is 6. M=0.5. In this case, a quantity of sidelink resources in $[T1+n, T3]$ in the one or more sidelink resources should be greater than or equal to 3.

In a possible embodiment of this application, the one or more sidelink resources are sidelink resources determined from the candidate resource set. The start moment corresponding to the candidate resource set is later than or equal to the start moment of the sidelink discontinuous reception-active time; or the start moment of the sidelink discontinuous reception-active time is earlier than or equal to the start moment corresponding to the candidate resource set. In this solution, to ensure that the sidelink resources in the sidelink discontinuous reception-active time exist in the candidate resource set, and ensure that the sidelink resource in the sidelink discontinuous reception-active time exists in the one or more sidelink resources subsequently determined from the candidate resource set, the first terminal may update the start moment corresponding to the candidate resource set.

For example, the first terminal sets the start moment corresponding to the candidate resource set to be later than or equal to the start moment of the discontinuous reception-active time. Because the start moment corresponding to the candidate resource set is determined based on $T1+n$, the first terminal may adjust a condition met by $T1$ from

$$0 \le T1 \le T_{proc,1}^{SL} \text{ to } T4-n \le T1 \le T_{\text{proc},1}^{SL}, \text{ where } T4 \text{ is less than } n+T_{\text{proc},1}^{SL}. \text{ If T4 is greater than or equal to } n \quad n+T_{\text{proc},1}^{SL}$$

, $T1 = T4-n$. $T4$ indicates the start moment of the discontinuous reception-active time.

In a possible embodiment of this application, the end moment corresponding to the candidate resource set is earlier than or equal to the end moment of the sidelink discontinuous reception-active time. In this way, it can be ensured that the sidelink resource in the candidate resource set is earlier than or equal to the end moment of the sidelink discontinuous reception-active time.

It should be noted that the candidate resource set meets one or more of the following conditions: The start moment is later than or equal to the start moment of the sidelink discontinuous reception-active time, or the end moment is earlier than or equal to the end moment of the sidelink discontinuous reception-active time.

When the start moment corresponding to the candidate resource set is later than or equal to the start moment of the sidelink discontinuous reception-active time, and the end moment corresponding to the candidate resource set is earlier than or equal to the end moment of the sidelink discontinuous reception-active time, it can be ensured that all the sidelink resources in the candidate resource set are within the sidelink discontinuous reception-active time.

In an example, the first terminal determines the start moment of the resource selection window based on the start moment of the discontinuous reception-active time of the first terminal. Then, the first terminal determines, from the sidelink resources based on the start moment and the end moment of the resource selection window, the s candidate sidelink resources in the resource selection window as the candidate resource set. The end moment of the resource selection window is determined based on $T2+n$.

In an embodiment of this application, the one or more sidelink resources are sidelink resources determined from the candidate resource set. The end moment corresponding to the candidate resource set is earlier than or equal to a retransmission end moment of data. In this way, it can be ensured that a sidelink resource for retransmitting the data exists in the candidate resource set. For example, a possible retransmission end moment may be determined based on at least one of the following: a quantity of retransmissions, duration of an RTT timer (timer), duration of a retransmission timer, and the end moment of the discontinuous reception-active time. The RTT timer may be drx-HARQ-RTT-Timer-SL. The retransmission timer may be drx-RetransmissionTimer-SL.

For example, the first terminal sets the end moment corresponding to the candidate resource set to be earlier than or equal to the retransmission end moment of the data. Because the end moment corresponding to the candidate resource set is determined based on $T2+n$, the first terminal may adjust a condition met by T2 from $T2min \leq T2 \leq P$ to 72 min T2 retransmission end moment- n or T2 min T2 min(retransmission end moment- n, P ), where T2min <retransmission end moment-n. If T2min is greater than or equal to retransmission end moment-n, T2=retransmission end moment-n, or T2=min(retransmission end moment-n, P).

The foregoing description provides the condition met by the one or more sidelink resources and the condition met by the start moment and the end moment corresponding to the candidate resource set. The following describes the process in which the physical (physical, PHY) layer and a medium access control (Medium Access Control, MAC) layer of the first terminal interact to determine the one or more sidelink resources.

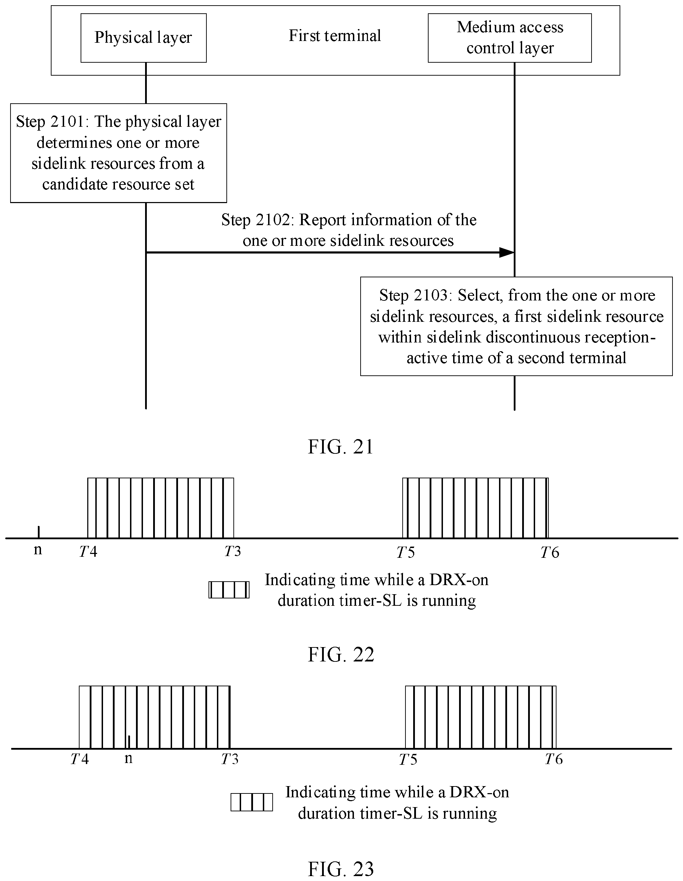

In an embodiment of this application, the first terminal has the physical layer and the MAC entity. Correspondingly, as shown in FIG. 21, step 1901 in this embodiment of this application may be implemented in the following manner.

Step 2101: The physical layer of the first terminal determines the one or more sidelink resources from the candidate resource set.

In a possible embodiment of this application, before step 2101, the method provided in this embodiment of this application may further include: The medium access control entity of the first terminal sends a sensing notification to the physical layer, where the sensing notification is used to notify the physical layer to sense the sidelink resource. That the medium access control entity of the first terminal sends a sensing notification to the physical layer may also be understood as that the MAC entity requires the physical layer to determine the one or more sidelink resources. The physical layer senses the sidelink resources based on the sensing notification. The physical layer may determine the candidate sidelink resources from the sidelink resources. In this embodiment of this application, the physical layer may sense the sidelink resource immediately after receiving the sensing notification, or may sense the sidelink resource after preset time, or may already sense the sidelink resource before receiving the sensing notification. The preset time may be determined by the first terminal, or may be predefined in a protocol. This is not limited in embodiments of this application.

For example, the medium access control entity of the first terminal sends the sensing notification to the physical layer of the first terminal in a time unit 1. For example, the time unit 1 is the foregoing $n$.

In a possible embodiment of this application, the physical layer may actively sense the sidelink resource. For example, when determining that data needs to be transmitted, the physical layer may determine to sense the sidelink resource.

The following separately describes whether to provide first information for the physical layer when the medium access control entity notifies the physical layer to sense the sidelink resource, as an example to describe this application.

Example (1): The medium access control entity provides the first information for the physical layer.

In example (1), in a possible embodiment of this application, before step 701, the method provided in this embodiment of this application may further include: The medium access control entity of the first terminal sends the first information to the physical layer of the first terminal. Correspondingly, the physical layer of the first terminal receives the first information from the medium access control entity of the first terminal.

The first information is used to determine the end moment of the sidelink discontinuous reception-active time of the second terminal.

In an example, the first information is one or more of the following: information for indicating the end moment of the sidelink discontinuous reception-active time, or information for indicating remaining time of the sidelink discontinuous reception-active time.

In an example, the first information and the sensing notification may be carried in a same message and sent to the PHY layer. For example, both the first information and the sensing notification are carried in a message 1, so that the first information and the sensing notification are simultaneously sent to the PHY layer.

In another example, the first information and the sensing notification may alternatively be carried in different messages and sent to the PHY layer. This is not limited in embodiments of this application. For example, the MAC entity notifies the PHY layer to sense the sidelink resource, and then provides the first information for the PHY layer. Certainly, the MAC entity may alternatively provide the first information for the PHY layer, and then notify the PHY layer to sense the sidelink resource.

For example, the information for indicating the end moment of the sidelink discontinuous reception-active time may be the end moment of the sidelink discontinuous reception-active time, or may be a time length L. The time length L is provided, so that it is convenient for the physical layer to determine the end moment of the sidelink discontinuous reception-active time based on a current moment (for example, the time unit 1) and the time length L. The current moment may be understood as a moment at which the physical layer receives the time length L. It may be considered that a moment at which the medium access control entity sends the time length L to the physical layer is a moment at which the physical layer receives the time length L. An error of reception and sending between the medium access control entity and the physical layer may be ignored.

For example, the information for indicating the remaining time of the sidelink discontinuous reception-active time may be the remaining time, or the end moment of the sidelink discontinuous reception-active time. The end moment of the sidelink discontinuous reception-active time is provided, so that it is convenient for the PHY layer to select, from the candidate resource set, a sidelink resource earlier than the end moment of the sidelink discontinuous reception-active time.

For example, the MAC entity requires the physical layer to determine a group of sidelink resources in the slot $n$. For example, the MAC entity provides time Q for the physical layer, where Q is the remaining time of the sidelink discontinuous reception-active time, and $n$ Q is the end moment of the sidelink discontinuous reception-active time. It should be noted that the remaining time of the sidelink discontinuous reception-active time may be understood as remaining time of sidelink discontinuous reception-active time determined at the current moment, and further is a continuous period of the discontinuous reception-active time.

For example, the first terminal may obtain, based on the DRX cycle (cycle), the DRX start offset, and the duration of the drx-onDurationTimer-SL of the second terminal, periodic time while the drx-onDurationTimer-SL is running.

As shown in FIG. 22, in the slot $n$, the second terminal is in the dormant period, that is, the second terminal is not within the sidelink discontinuous reception-active time. However, in a time period from $T4$ to $T3$ and a time period from $T5$ to $T6$, the drx-onDurationTimer-SL of the second terminal is running. Therefore, the second terminal is within the sidelink discontinuous reception-active time in the time period from $T4$ to $T3$ and the time period from $T5$ to $T6$. Specifically, within a discontinuous reception-active period, the second terminal is in the active state. In the slot $n$, the MAC entity provides $T3$ or $T3 - n$ for the physical layer. $T3$ and $T6$ indicate the end moment of the sidelink discontinuous reception-active time, and $T3-n$ indicates the remaining time of the sidelink discontinuous reception-active time. In the embodiment shown in FIG. 21, the sidelink discontinuous reception-active time is the discontinuous reception-active period.

As shown in FIG. 23, in the slot $n$, the drx-onDurationTimer-SL of the second terminal is running, that is, a moment at which the MAC entity provides $T3$ or $T3-n$ for the physical layer is within the sidelink discontinuous reception-active time of the second terminal. In the slot n, the MAC entity of the first terminal provides $T3$ or $T3-n$ for the physical layer.

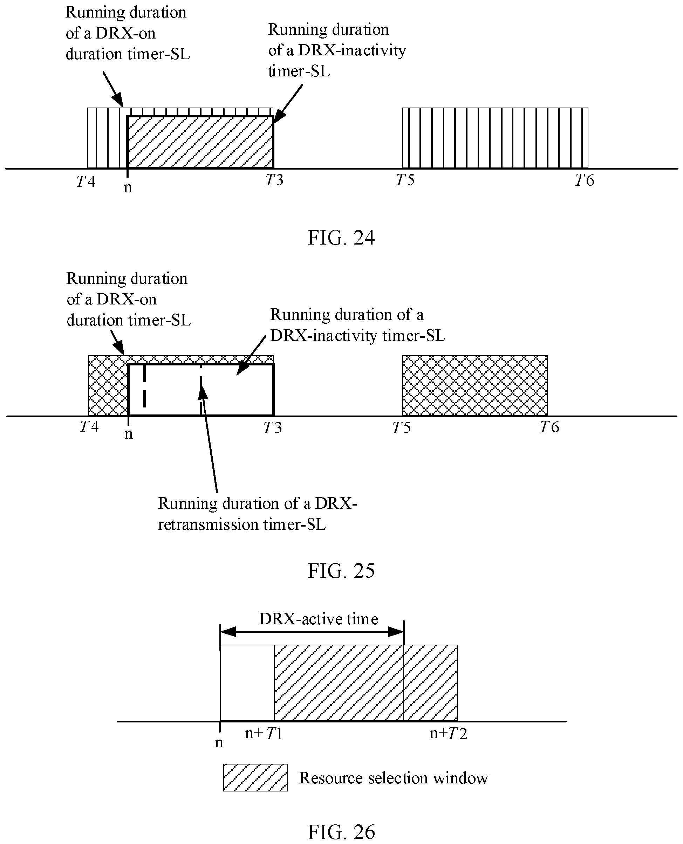

As shown in FIG. 24, in the slot $n$, the drx-onDurationTimer-SL (DRX-on duration timer-SL) of the second terminal is running, and the drx-InactivityTimer-SL (DRX-inactivity timer-SL) is also running. A time period 1 is time while the drx-InactivityTimer-SL is running and that is determined in the slot $n$. If the drx-InactivityTimer-SL is not restarted after the slot $n$, the drx-InactivityTimer-SL expires after $T3$. The discontinuous reception-active time of the second terminal ends at $T3$. In the slot $n$, the MAC entity provides time $T3$ or $T3 - n$ for the physical layer.

As shown in FIG. 25, in the slot $n$, the drx-onDurationTimer-SL is running, and the drx-InactivityTimer-SL is also running. A time period 2 is time while the drx-InactivityTimer-SL is running and that is determined in the slot $n$. In the slot $n$, it may be determined that the drx-RetransmissionTimer-SL is running in a dashed box. In this case, the first terminal may determine, in the slot $n$, that the second terminal is not within the discontinuous reception-active time after T3. In the slot $n$, the MAC entity provides time $T3$ or $T3 - n$ for the physical layer.

In an embodiment of this application, when the MAC entity determines that the physical layer needs to sense the sidelink resource, the MAC entity provides, for the first terminal, the one or more of the following: the information for indicating the end moment of the sidelink discontinuous reception-active time, or the information for indicating the remaining time of the sidelink discontinuous reception-active time.

In another embodiment of this application, the MAC entity may determine, based on a relationship between the remaining time of the sidelink discontinuous reception-active time and a remaining PDB, whether to provide, for the physical layer, the one or more of the following: the information for indicating the end moment of the sidelink discontinuous reception-active time, or the information for indicating the remaining time of the sidelink discontinuous reception-active time.

For example, when the remaining time ($T3-n$) of the sidelink discontinuous reception-active time is greater than or equal to the remaining (remaining) PDB, the MAC entity does not provide, for the physical layer, the one or more of the following: the information for indicating the end moment of the sidelink discontinuous reception-active time, or the information for indicating the remaining time of the sidelink discontinuous reception-active time. The information is not provided because T2 is less than or equal to the remaining PDB. Therefore, the end of the resource selection window is earlier than the end of the sidelink discontinuous reception-active time. Therefore, the information does not need to be provided. The remaining PDB in this embodiment of this application may be data sent by the first terminal to the second terminal on the sidelink.

For example, when the remaining time ( $T3$-$n$ ) of the sidelink discontinuous reception-active time is less than or equal to the remaining (remaining) PDB, the MAC entity provides, for the physical layer, the one or more of the following: the information for indicating the end moment of the sidelink discontinuous reception-active time, or the information for indicating the remaining time of the sidelink discontinuous reception-active time.

If the medium access control entity provides related information of the sidelink discontinuous reception-active time for the physical layer, it is convenient for the physical layer to select, from the candidate resource set, a sidelink resource within the sidelink discontinuous reception-active time. This avoids that since the one or more sidelink resources reported by the physical layer to the medium access control entity do not include the sidelink resource within the sidelink discontinuous reception-active time, the medium access control entity cannot determine the first sidelink resource for transmitting data, and then a data transmission cannot be performed.

In example (1), step 2101 provided in this embodiment of this application may be implemented in the following manner: The physical layer determines the one or more sidelink resources from the candidate resource set based on the first information.

In an example, that the physical layer determines the one or more sidelink resources from the candidate resource set based on the first information includes: The physical layer selects, from the candidate resource set, a sidelink resource earlier than the end moment of the sidelink discontinuous reception-active time as the one or more sidelink resources.

It should be noted that in this embodiment of this application, if the medium access control entity provides the first information for the physical layer, the physical layer selects the plurality of sidelink resources from the candidate resource set based on the first information. Therefore, the one or more sidelink resources include a sidelink resource earlier than $T3$ and a sidelink resource later than $T3$. Alternatively, all the sidelink resources in the one or more sidelink resources are earlier than $T3$.

Further, optionally, a sidelink resource included in the one or more sidelink resources further needs to be later than the time unit 1. Because the physical layer determines that the sidelink resource needs to be sensed in the time unit 1, a sidelink resource that is provided for the MAC entity and that is earlier than the time unit 1 may be of no reference value. Therefore, the physical layer may not provide a sidelink resource earlier than the time unit 1 for the MAC entity of the first terminal. For example, the time unit 1 may be the slot $n$.

In an embodiment of this application, the one or more sidelink resources may be all or a part of sidelink resources in the candidate resource set. This is not limited in embodiments of this application. The one or more sidelink resources may be reported by the PHY layer to the MAC entity one by one, or the one or more sidelink resources may be reported by the PHY layer to the MAC entity together. This is not limited in embodiments of this application.

This helps the PHY layer of the first terminal determine the start moment of the sidelink discontinuous reception-active time of the second terminal, and ensures that the sidelink resource within the sidelink discontinuous reception-active time exists in the one or more sidelink resources provided by the PHY layer for the MAC entity. In a possible embodiment of this application, the first information further includes information for indicating the start moment of the sidelink discontinuous reception-active time.

In an example, the information for indicating the start moment of the sidelink discontinuous reception-active time may be the start moment of the sidelink discontinuous reception-active time, or the information for indicating the start moment of the sidelink discontinuous reception-active time may be current moment L1. L1 indicates a time length between the current moment and the start moment of the sidelink discontinuous reception-active time.

In a possible embodiment of this application, when the first information further includes the information for indicating the start moment of the sidelink discontinuous reception-active time, step 2101 may be implemented by using the following step: The physical layer determines the sidelink discontinuous reception-active time based on the first information. Then, the physical layer determines the one or more sidelink resources from the candidate resource set based on the sidelink discontinuous reception-active time.

In a possible embodiment of this application, the MAC entity may provide, for the PHY layer, one or more of the following: the information for indicating the start moment of the sidelink discontinuous reception-active time, and the information for indicating the end moment of the sidelink discontinuous reception-active time.

In a possible embodiment of this application, when the MAC entity determines that the physical layer needs to sense the sidelink resource, the MAC entity provides, for the PHY layer, the information for indicating the start moment of the sidelink discontinuous reception-active time.

In a possible embodiment of this application, the MAC entity determines, based on a relationship between the time unit 1 and the start moment of the sidelink discontinuous reception-active time, whether to send, to the physical layer of the first terminal, the information for indicating the start moment of the sidelink discontinuous reception-active time. The time unit 1 is a moment at which the physical layer of the first terminal determines to sense the sidelink resource.

For example, when the time unit 1 is earlier than the start moment of the sidelink discontinuous reception-active time, or the time unit 1 is the start moment of the sidelink discontinuous reception-active time, the medium access control entity of the first terminal sends, to the physical layer of the first terminal, the information for indicating the start moment of the sidelink discontinuous reception-active time. In this case, when the time unit 1 is earlier than the start moment of the sidelink discontinuous reception-active time, it indicates that when the MAC entity notifies the PHY to sense the sidelink, the second terminal is still in the dormant state, and has not entered the active state from the dormant state. Therefore, if the start moment of the sidelink discontinuous reception-active time is not provided for the PHY layer of the first terminal, the one or more sidelink resources subsequently provided by the PHY layer for the MAC entity may include a sidelink resource earlier than the start moment of the sidelink discontinuous reception-active time. However, the sidelink resource earlier than the start moment of the sidelink discontinuous reception-active time cannot carry the data sent to the second terminal.

As shown in FIG. 22, for example, the first terminal may obtain, based on the DRX cycle, the DRX start offset, and the duration of the drx-onDurationTimer-SL, the periodic time while the drx-onDurationTimer-SL is running. In the slot $n$, the second terminal is not within SL active time (namely, the sidelink discontinuous reception-active time). However, it is learned that in the time period from $T4$ to $T3$ and the time period from $T5$ to $T6$, the drx-onDurationTimer-SL of the second terminal is running. Therefore, the second terminal is within the sidelink discontinuous reception-active time in the time period from $T4$ to $T3$ and the time period from $T5$ to $T6$. In this case, in the slot $n$, the MAC entity provides $T4$ or $T4\text{-}n$ for the physical layer. $T4\text{-}n$ indicates a time length between the slot $n$ and the start moment of the sidelink discontinuous reception-active time.

For example, when the time unit 1 is later than the start moment of the sidelink discontinuous reception-active time, or the time unit 1 is the start moment of the sidelink discontinuous reception-active time, the medium access control entity of the first terminal does not send, to the physical layer of the first terminal, the information for indicating the start moment of the sidelink discontinuous reception-active time. In this case, when the time unit 1 is later than the start moment of the sidelink discontinuous reception-active time, it indicates that the second terminal is already in the active state when the MAC entity notifies the PHY layer to sense the sidelink. Therefore, there is a low probability that the one or more sidelink resources subsequently provided by the PHY layer for the MAC entity include the sidelink resource earlier than the time unit 1.

As shown in FIG. 23, in the slot $n$, the drx-onDurationTimer-SL is running, that is, the second terminal is within the sidelink discontinuous reception-active time in the slot $n$. In this case, in the slot $n$, the MAC entity provides $T4$, $T4 - n$, or 0 for the physical layer, or the MAC entity does not provide the start moment of the sidelink discontinuous reception-active time for the physical layer.

Example (2): The medium access control entity does not provide the first information for the physical layer.

When the medium access control entity does not provide the first information for the physical layer, the physical layer does not consider the first information when selecting the one or more sidelink resources from the candidate resource set. Therefore, the sidelink resource within the sidelink discontinuous reception-active time may exist in the one or more sidelink resources reported by the physical layer to the MAC entity. Alternatively, the sidelink resource within the sidelink discontinuous reception-active time may not exist in the one or more sidelink resources reported by the physical layer to the MAC entity.

If the sidelink resource within the sidelink discontinuous reception-active time does not exist in the one or more sidelink resources reported by the physical layer to the MAC entity, the MAC entity cannot select the resource within the sidelink discontinuous reception-active time. In this case, the MAC entity does not select an initial transmission resource or a retransmission resource. Alternatively, the MAC entity may notify the physical layer to re-report the sensed sidelink resource. This is not limited in embodiments of this application.

In an embodiment of this application, if the MAC entity requires the physical layer to determine the time unit 1 of the group of sidelink resources, $n\ T1$ is not earlier than the start moment of the sidelink discontinuous reception-active time. In this way, the MAC entity does not need to provide the start moment information of the sidelink discontinuous reception-active time for the physical layer. Details are as follows:

As shown in FIG. 26, for example, the time unit 1 is the slot $n$, and the slot $n$ is within the discontinuous reception-active time. As shown in FIG. 12, it may be learned that the start moment ($n\ T1$) of the candidate resource set is later than the start moment of the discontinuous reception-active time. In the full sensing mechanism, the start moment of the candidate resource set may also be understood as the start moment of the resource selection window.

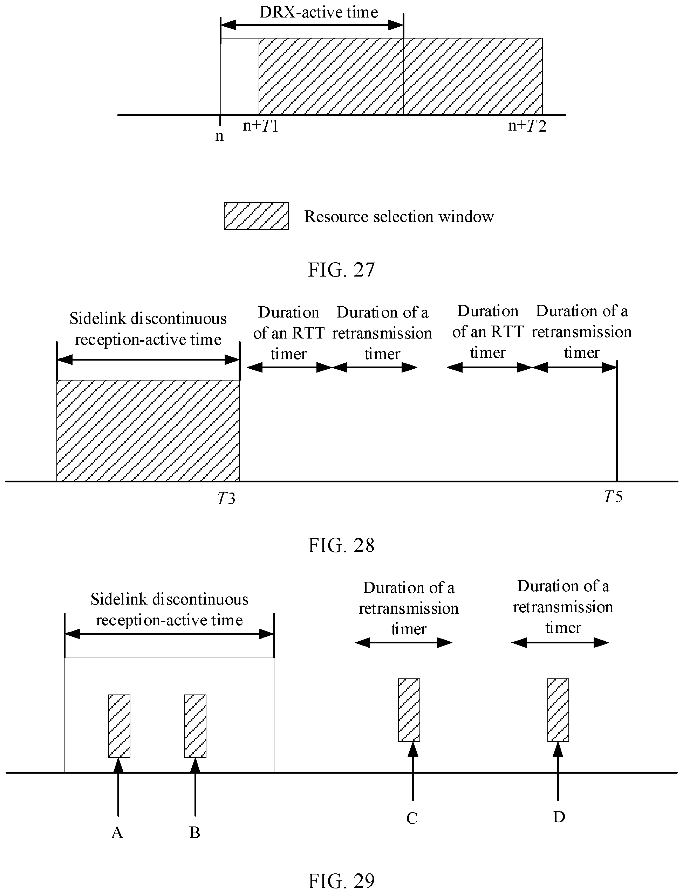

As shown in FIG. 27, the slot $n$ is later than or equal to a slot $T1$ earlier than the start of the discontinuous reception-active time. For example, the slot n in FIG. 13 is equal to a slot $T1$ earlier than the start of the active time.

Optionally, if the MAC entity requires the physical layer to determine the time unit 1 of the group of sidelink resources, $n\ T1$ is not later than the end moment of the sidelink discontinuous reception-active time. For example, the time unit 1 is the slot $n$. The start moment ($n\ T1$) of the candidate resource set is earlier than the end moment of the discontinuous reception-active time. The slot $n$ is earlier than or equal to a slot of the end of the discontinuous reception-active time.

In an embodiment of this application, if the MAC entity requires the physical layer to determine the time unit 1 of the group of sidelink resources, $n$ $T_{proc,1}^{SL}$ is not earlier than the start moment of the sidelink discontinuous reception-active time. In this way, the MAC entity does not need to provide the start moment information of the sidelink discontinuous reception-active time for the physical layer. For example, the time unit 1 is the slot $n$. The slot $n$ is later than or equal to a slot $T_{proc,1}^{SL}$ earlier than the start of the discontinuous reception-active time. In this embodiment, the physical layer does not need to provide a value of T1 for the MAC entity. The moment ($n$ $T_{proc,1}^{SL}$) is later than the start moment of the discontinuous reception-active time. The start moment ($n$ T1) of the candidate resource set may be earlier than the start moment of the discontinuous reception-active time, or may be the start moment of the discontinuous reception-active time, or may be later than the start moment of the discontinuous reception-active time. Optionally, T2 determined by the terminal needs to be greater than $T_{proc,1}^{SL}$ . In this way, it can be ensured that the candidate resource set overlaps the discontinuous reception-active time.

Optionally, if the MAC entity requires the physical layer to determine the time unit 1 of the group of sidelink resources, $n$ $T_{proc,1}^{SL}$ is not later than the end moment of the sidelink discontinuous reception-active time. For example, the time unit 1 is the slot $n$ . The start moment ($n$ $T_{proc,1}^{SL}$ ) of the candidate resource set is earlier than the end moment of the discontinuous reception-active time. The slot $n$ is earlier than or equal to the slot of the end of the discontinuous reception-active time. In a possible embodiment of this application, in the foregoing description, the PHY layer of the first terminal may determine, from the s candidate sidelink resources, the one or more sidelink resources reported to the MAC entity. In this case, when determining, from the s candidate sidelink resources, the one or more sidelink resources reported to the MAC entity, the PHY layer may refer to the following rule, so that finally the quantity of the sidelink resources within the first time period in the one or more sidelink resources is greater than or equal to the first threshold. Specifically, for a specific implementation in which the PHY layer determines, from the s candidate sidelink resources, that the quantity of the sidelink resources within the first time period in the one or more sidelink resources is greater than or equal to the first threshold, refer to the specific description in the foregoing embodiment. Details are not described herein again.

For example, if $n$ T2 is greater than or equal to T3 (that is, the end moment of the candidate resource set is later than the end moment of the discontinuous reception-active time), a quantity of sidelink resources in [$n$ T1, T3] in the one or more sidelink resources reported by the physical layer to the MAC entity needs to reach a specific value (the first threshold). For example, the first threshold may be obtained by multiplying M by the total quantity of the candidate sidelink resources in [$n$ T1, T3] in the candidate resource set. If the physical layer determines that the quantity of the sidelink resources in [$n$ T1, T3] in the one or more sidelink resources is less than the first threshold, the PHY layer increases the RSRP threshold for determining whether the candidate sidelink resource is excluded. The PHY layer determines, based on the increased RSRP threshold, the one or more sidelink resources reported to the MAC entity. The PHY layer may continuously increase the RSRP threshold until the quantity of the resources in [$n$ T1, T3] in the one or more sidelink resources determined by the physical layer reaches the value.

Optionally, the condition that a quantity of resources in [T3 1, $n$ T2] in the one or more sidelink resources reported by the physical layer to the MAC entity is greater than or equal to a total quantity of candidate resources in [T3 1, $n$ T2] multiplied by M further needs to be met. If the condition is not met, the RSRP threshold may be continuously increased to meet the condition. In this way, it can be ensured that a specific quantity of resources within the discontinuous reception-active time are available for the MAC entity to select a sidelink resource for an initial transmission of data. A specific quantity of resources in the resource selection window are available for the MAC entity to select a sidelink resource for a retransmission of data.

Step 2102: The physical layer reports information of the one or more sidelink resources to the medium access control entity of the first terminal.

As shown in FIG. 21, step 1901 in this embodiment of this application may be implemented in the following step 2103.

Step 2103: The medium access control entity selects, from the one or more sidelink resources, the first sidelink resource within the sidelink discontinuous reception-active time of the second terminal.

In an embodiment of this application, to ensure that the sidelink resource for a retransmission of data exists in the candidate resource set, the method provided in this embodiment of this application further includes: The first terminal determines a retransmission end moment of data or remaining retransmission time of data. The first terminal determines, based on the retransmission end moment or the remaining retransmission time, the end moment corresponding to the candidate resource set, where the end moment corresponding to the candidate resource set is earlier than or equal to the retransmission end moment. That the end moment corresponding to the candidate resource set is earlier than or equal to the retransmission end moment may be understood as that the end moment corresponding to the candidate resource set is earlier than the retransmission end moment, or is the retransmission end moment. Certainly, the end moment corresponding to the candidate resource set may alternatively be later than the retransmission end moment. In this way, it can be fully ensured that a sidelink resource that is used for a retransmission of data and that is earlier than the retransmission end moment exists in the candidate resource set. This process may be considered as that the first terminal re-determines the end moment corresponding to the candidate resource set.

It should be noted that both the retransmission end moment and the remaining retransmission time in this embodiment of this application are time pre-estimated by the first terminal. At this time, the first terminal may not transmit the foregoing data to the second terminal for the first time. The retransmission end moment may also be referred to as a possible retransmission end moment or a latest retransmission end moment. The retransmission end moment may also be referred to as a latest retransmission moment, or may be referred to as a possible latest retransmission moment. The remaining retransmission time may also be referred to as possible remaining retransmission time or maximum remaining retransmission time. The possible remaining retransmission time is the possible retransmission end moment-$n$ .

For example, the MAC entity requests, in the slot n, the physical layer to determine the group of sidelink resources. The physical layer uses the resources in [$T1+n$, $T2+n$] as the s candidate sidelink resources. The s candidate sidelink resources constitute the candidate resource set. The physical layer determines, from the candidate resource set, the one or more sidelink resources reported to the MAC entity. If $T2\mathrm{min}<$retransmission end moment-$n$, $T2\mathrm{min}$ $T2$ retransmission end moment-$n$ . Otherwise, $T2$ =retransmission end moment-$n$ .

Alternatively, if $T2\,\mathrm{min}<$retransmission end moment-$n$ , $T2\,\mathrm{min}$ $T2$ min(retransmission end moment-$n$, remaining PDB). If $T2\,\mathrm{min}$ is greater than or equal to retransmission end moment-$n$, $T2\mathrm{min}$ is greater than or equal to the remaining PDB, and $T2$ =min(retransmission end moment-$n$, remaining PDB). If $T2\,\mathrm{min}$ is greater than or equal to retransmission end moment-$n$, $T2\mathrm{min}$ is less than the remaining PDB, $T2=$retransmission end moment- $n$ , or $T2$ =min(retransmission end moment- $n$ , remaining PDB). If $T2\,\mathrm{min}<$retransmission end moment-$n$ , $T2\mathrm{min}$ is greater than or equal to the remaining PDB, $T2$ =remaining PDB, or $T2=$min(retransmission end moment-$n$, remaining PDB).

Alternatively, if $T2\mathrm{min}<$min(retransmission end moment-$n$, remaining PDB), $T2\,\mathrm{min}$ $T2$ min(retransmission end moment-$n$ , remaining PDB). If $T2\,\mathrm{min}$ is greater than or equal to min(retransmission end moment-$n$, remaining PDB), $T2=$min(retransmission end moment-$n$, remaining PDB).

The following describes a process in which the first terminal determines the retransmission end moment of the data or the remaining retransmission time of the data by using an example in which the MAC entity and the physical layer of the first terminal interact. For example, the medium access control entity sends second information to the physical layer, where the second information indicates the retransmission end moment of the data or the remaining retransmission time of the data. That the first terminal determines the retransmission end moment of the data or the remaining retransmission time of the data includes: The physical layer of the first terminal determines the retransmission end moment or the remaining retransmission time based on the second information.

It should be noted that the second information may be sent by the MAC entity of the first terminal to the PHY layer in the time unit 1, or sent by the MAC entity of the first terminal to the PHY layer after the time unit 1. The second information and the first information may be sent to the PHY layer together, or separately sent to the PHY layer. This is not limited in embodiments of this application.

In an example, the second information includes the retransmission end moment or the remaining retransmission time of the data. This avoids that the PHY layer calculates the retransmission end moment or the remaining retransmission time of the data. In this case, the MAC entity may determine the possible retransmission end moment based on the at least one of the following: the quantity of retransmissions, the duration of the RTT timer, the duration of the retransmission timer, and the end moment of the discontinuous reception-active time.

In another example, the second information is at least one of the following: the quantity of retransmissions, the duration of the RTT timer, and the duration of the retransmission timer. In this case, that the PHY layer determines the retransmission end moment or the remaining retransmission time based on the second information may include: The PHY layer of the first terminal determines the retransmission end moment or the remaining retransmission time of the data based on the at least one of the following: the quantity of data retransmissions, the duration of the RTT timer, and the duration of the retransmission timer. In this solution, the physical layer calculates the retransmission end moment or the remaining retransmission time.

In a possible implementation of this application, the retransmission end moment is equal to the end moment of the sidelink discontinuous reception-active time (duration of the RTT timer duration of the retransmission timer)×quantity of retransmissions; the retransmission end moment is equal to the end moment of the sidelink discontinuous reception-active time duration of the retransmission timer×quantity of retransmissions; the retransmission end moment is equal to a first data transmission end moment ( duration of the RTT timer duration of the retransmission timer)×quantity of retransmissions; or the retransmission end moment is equal to a first data transmission end moment dur ation of the retransmission timer×quantity of retransmissions.

For example, as shown in FIG. 28, the quantity of retransmissions is 2, $T3$ is the end moment of the sidelink discontinuous reception-active time, and $T5$ is the retransmission end moment (or the latest retransmission end moment). In this case, the end moment of the candidate resource set cannot be later than $T5$ .

In a possible embodiment of this application, regardless of whether the remaining packet delay budget is less than a first value, that is, the MAC entity does not need to consider a relationship between the remaining packet delay budget and the first value, the medium access control entity provides, for the physical layer, a minimum value of the remaining packet delay budget and the retransmission end moment.

In a possible embodiment of this application, the MAC entity considers the relationship between the remaining packet delay budget and the first value, and determines whether to provide, for the physical layer, the minimum value of the remaining packet delay budget and the retransmission end moment.

For example, if the remaining packet delay budget is less than the first value, or if the remaining packet delay budget is less than the remaining retransmission time, the MAC entity does not provide, for the physical layer, the possible retransmission end moment or the remaining retransmission time. The first value is the retransmission end moment-$n$ .

For example, if the remaining packet delay budget is less than the first value, or the remaining packet delay budget is less than the remaining retransmission time, the MAC entity provides, for the physical layer, the minimum value of the remaining PDB and the retransmission end moment.

The foregoing step 2103 may be implemented in the following manner.

The MAC entity selects the first sidelink resource from the one or more sidelink resources provided by the physical layer, so that the selected first sidelink resource is within the sidelink discontinuous reception-active time. The sidelink discontinuous reception-active time in this embodiment of this application may be understood as including currently determined sidelink discontinuous reception-active time and possible sidelink discontinuous reception-active time. The possible sidelink discontinuous reception-active time is determined based on the selected first sidelink resource. There are several specific manners.

(1) The selected initial transmission resource (for example, the first sidelink resource) is within the currently determined sidelink discontinuous reception-active time. If a retransmission resource (for example, a second sidelink resource) needs to be selected, the selected retransmission resource is within the currently determined sidelink discontinuous reception-active time or within possible time while the retransmission timer is running. The possible time while the retransmission timer is running is determined based on a resource earlier than the resource. For example, if one initial transmission resource and two retransmission resources are selected, first time while the retransmission timer is running is determined based on the initial transmission resource, and the first time while the retransmission timer is running is determined based on a first retransmission resource. For example, if one initial transmission resource and two retransmission resources are selected, the first retransmission resource can be indicated by SCI of an initial transmission, and a second retransmission resource can be indicated by SCI of the first retransmission resource.

Currently, the terminal may determine a time domain resource and a frequency domain resource for a PSSCH transmission based on a time domain resource allocation field and a frequency domain resource allocation field that are included in the SCI and a resource for a PSCCH transmission. The time domain resource allocation field indicates N resources and a slot offset of a resource other than a first resource in the N resources, and N may be 1, 2, or 3. A slot in which the first resource is located is a slot in which the SCI is located. The slot offset of the resource other than the first resource is a slot offset relative to the first resource. The frequency domain resource allocation field indicates a quantity of consecutive subchannels of each resource of the N resources and a start subchannel index of the resource other than the first resource. The N resources are used for N data transmissions.

Specifically, the MAC entity selects a sidelink resource from the one or more sidelink resources provided by the physical layer, so that the selected initial transmission resource is within the sidelink discontinuous reception-active time. If a retransmission resource needs to be selected, the retransmission resource can be indicated by the foregoing SCI and is within the currently determined sidelink discontinuous reception-active time or within the possible time while the retransmission timer is running. In a more specific manner, the MAC entity randomly selects, as the first sidelink resource, one resource from the sidelink resources within the sidelink discontinuous reception-active time in the one or more sidelink resources provided by the physical layer. If at least one retransmission resource needs to be selected, the retransmission resource continues to be selected from remaining resources in the one or more sidelink resources provided by the physical layer, so that the selected initial transmission resource is within the sidelink discontinuous reception-active time. The retransmission resource can be indicated by the foregoing SCI and is within the currently determined sidelink discontinuous reception-active time or within the possible time while the retransmission timer is running. An earliest resource is the initial transmission resource. Resource selection herein may be understood as selection of a resource of a transmission opportunity. The initial transmission resource may be understood as a resource of an initial transmission opportunity, and the retransmission resource may be understood as a resource of a retransmission opportunity. That the resource is within the possible time while the retransmission timer is running may be understood as that a transmission opportunity corresponding to the resource is within the possible time while the retransmission timer is running.

The initial transmission resource in this embodiment of this application is a resource for transmitting the data for the first time, that is, a resource used when the data is transmitted for the first time. The retransmission resource in this embodiment of this application is a resource for transmitting the data for the second time, that is, a resource used when the data is transmitted for an $X^{th}$ time. X is greater than or equal to 2.

In this embodiment of this application, the first terminal may determine a plurality of second sidelink resources, and a quantity of the second sidelink resources may be determined based on a quantity of retransmissions of the data. This is not limited in embodiments of this application.

The possible time while the retransmission timer is running may be determined based on the sidelink resource selected by the first terminal. For example, a start moment of the time while the retransmission timer is running may be a first time unit after a resource A ends. If the retransmission timer is a timer for a first retransmission, the resource A is a resource that is used for an initial transmission and that is earlier than the first retransmission. If the retransmission timer is a timer for a $g^{th}$ retransmission, the resource A is a resource that is used for a retransmission and that is earlier than the $g^{th}$ retransmission. g is an integer greater than or equal to 2. An end moment of the time while the retransmission timer is running is the start moment of the time while the retransmission timer is running duration of the retransmission timer-1. The possible time while the retransmission timer is running may alternatively be determined based on the selected first sidelink resource and the RTT timer. For example, the first terminal determines, based on the selected sidelink resource, time while the RTT timer is running. A first time unit after the expiry of the RTT timer is the start moment of the time while the retransmission timer is running. The end moment of the time while the retransmission timer is running is the start moment of the time while the retransmission timer is running duration of the retransmission timer-1. That the first terminal determines, based on the selected sidelink resource, time while the RTT timer is running may be specifically: The first terminal determines, based on the selected sidelink resource, a resource for a transmission carrying a HARQ feedback. A first time unit after the end of the transmission carrying the HARQ feedback is the start moment of the time while the RTT timer is running. The end moment of the time while the RTT timer is running is the start moment of the time while the RTT timer is running duration of the RTT timer-1. A time unit may be a symbol, a slot, a subframe, a millisecond, a frame, a mini-slot, or the like.

As shown in FIG. 29, a sidelink resource A, a sidelink resource B, a sidelink resource C, and a sidelink resource D indicate sidelink resources selected by the MAC entity. The sidelink resource A is a sidelink resource whose time domain position is the earliest in the four sidelink resources. The sidelink resource D is a sidelink resource whose time domain position is the latest in the four sidelink resources. The sidelink resource A is an initial transmission resource. The sidelink resource B to the sidelink resource D are retransmission resources. The sidelink resource A and the sidelink resource B are within the currently determined sidelink discontinuous reception-active time. The sidelink resource C is within the time while the retransmission timer is running and that is determined based on the sidelink resource B. The sidelink resource D is within the time while the retransmission timer is running and that is determined based on the sidelink resource C.

That the retransmission resource can be indicated by the foregoing SCI may be specifically: The retransmission resource can be indicated by the time domain resource allocation field in the foregoing SCI. A resource can be indicated by the foregoing SCI, provided that an interval between a time domain position of the resource and a time domain position of the foregoing SCI is less than or equal to a threshold. In a possible manner, the slot in which the resource is located-slot in which the foregoing SCI is located is less than or equal to 31.

(2) The selected initial transmission resource is within the currently determined SL DRX-active time. If a retransmission resource needs to be selected, the selected retransmission resource is within the currently determined sidelink discontinuous reception-active time or within the possible sidelink discontinuous reception-active time. The possible sidelink discontinuous reception-active time is determined based on a resource earlier than the resource. Specifically, the MAC entity selects the sidelink resource from the one or more sidelink resources provided by the physical layer, so that the selected initial transmission resource is within the sidelink discontinuous reception-active time. If the retransmission resource needs to be selected, the retransmission resource can be indicated by the foregoing SCI and is within the currently determined sidelink discontinuous reception-active time or within the possible sidelink discontinuous reception-active time. In a more specific manner, the MAC entity randomly selects, as the initial transmission resource, one resource from the sidelink resources within the sidelink discontinuous reception-active time in the one or more sidelink resources provided by the physical layer. If at least one retransmission resource needs to be selected, the resource continues to be selected from remaining resources other than the initial transmission resource in the one or more sidelink resources provided by the physical layer, so that the selected initial transmission resource is within the sidelink discontinuous reception-active time. The retransmission resource can be indicated by the foregoing SCI and is within the currently determined sidelink discontinuous reception-active time or within the possible sidelink discontinuous reception-active time. An earliest sidelink resource is the initial transmission resource. Sidelink resource selection herein may be understood as selection of a sidelink resource of a transmission opportunity. The initial transmission resource may be understood as a sidelink resource of an initial transmission opportunity, and the retransmission resource may be understood as a sidelink resource of a retransmission opportunity. That the sidelink resource is within the active time may be understood that a transmission opportunity corresponding to the sidelink resource is within the sidelink discontinuous reception-active time.

The possible active time includes the possible time while the retransmission timer is running in (1) and possible time while another timer is running, for example, possible time while the drx-InactivityTimerSL is running. The possible time while the drx-InactivityTimerSL is running is determined based on the selected initial transmission resource. For example, the drx-InactivityTimerSL is started/restarted in a first time unit after the end of the initial transmission resource, and expires after the duration of the drx-InactivityTimerSL.

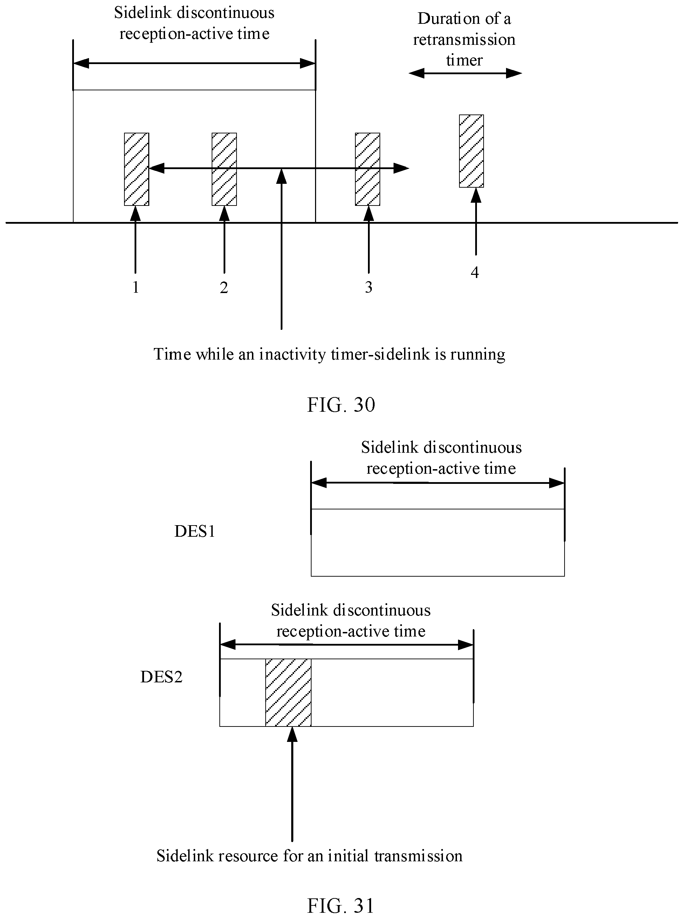

As shown in FIG. 30, a sidelink resource 1 to a sidelink resource 4 are sidelink resources selected by the MAC entity. The sidelink resource 1 is an initial transmission resource. The sidelink resource to the sidelink resource 4 are retransmission resources. The sidelink resource 1 and the sidelink resource 2 are within the currently determined sidelink discontinuous reception-active time. The sidelink resource 3 is within time while the drx-InactivityTimerSL is running and that is determined by the first terminal based on the sidelink resource 1. The sidelink resource 4 is within the time while the retransmission timer is running and that is determined by the first terminal based on the sidelink resource 3.

Optionally, the sidelink resource selected by the MAC entity from the one or more sidelink resources provided by the physical layer further needs to meet the condition that a time interval between any two selected sidelink resources is greater than or equal to a minimum time interval. Optionally, if a PSFCH resource is configured for a resource pool in which the resource is located, the foregoing condition of the minimum time interval needs to be met. For example, a time interval between the first sidelink resource and the second sidelink resource is greater than or equal to the minimum time interval.

In a possible case, the MAC entity cannot select X retransmission resources that meet the foregoing condition from the one or more sidelink resources provided by the physical layer. X is a quantity of retransmissions determined by the MAC entity, and X is greater than or equal to 1. Therefore, the MAC entity selects a maximum of N retransmission resources that can meet the foregoing condition, where N is greater than or equal to 0.

In a possible embodiment of this application, if the first terminal needs to send data to a plurality of destinations, the destination may be a destination selected by the first terminal for one SL grant according to an LCP process, specifically, a destination whose at least one of a logical channel (logical channel, LCH) and a MAC CE has a highest priority in all logical channels and MAC CEs that meet the condition. The condition includes: SL data in the destination is transmittable.

Alternatively, the destination may be a destination of to-be-transmitted data. The SL DRX-active time of the destination is determined based on active time of at least one destination of to-be-transmitted data, for example, a union or an intersection of active time of destinations of to-be-transmitted data.

In a possible embodiment of this application, the first terminal may first determine the destination. For example, there are a plurality of destinations of to-be-transmitted data. The first terminal may select one target destination from the plurality of destinations of the to-be-transmitted data (the plurality of destinations of the to-be-transmitted data may belong to a same terminal, or may belong to different terminals, and this is not limited in embodiments of this application). For example, if the target destination is identified by a layer-2 ID of the second terminal, the first terminal may determine that a sidelink resource needs to be selected to send data to the second terminal. Then, the first terminal selects, based on the SL DRX-active time of the second terminal, a sidelink resource within the SL DRX-active time from the one or more sidelink resources as the first sidelink resource. Then, the first terminal sends the data to the second terminal on the first sidelink resource. For a manner in which the first terminal may select one target destination from the plurality of destinations of the to-be-transmitted data, refer to the foregoing description. Details are not described herein again in this embodiment of this application.

It should be noted that when the second terminal has the plurality of destinations of the to-be-transmitted data, the first terminal may also select one target destination according to the foregoing rule.

A DRX parameter considered when the MAC entity selects the first sidelink resource from the one or more sidelink resources provided by the physical layer may be a DRX parameter of the destination selected for one SL grant according to the LCP process, specifically, a destination whose at least one of a logical channel (logical channel, LCH) and a MAC CE has a highest priority in all logical channels and MAC CEs that meet the condition. Alternatively, the destination may be a destination of to-be-transmitted data. At least one of the resources provided by the physical layer selects, within the SL DRX-active time of the destination, a destination whose at least one of a logical channel (logical channel, LCH) and a MAC CE has a highest priority in all logical channels and MAC CEs of all the destinations that meet the condition.

A DRX status/active time/timer running status and the like of the destination in this application may be understood as a DRX status/active time/timer running status maintained by the first terminal for the destination. Further, the DRX parameter/status/active time/timer running status and the like of the destination may be a DRX parameter/status/active time/timer running status and the like of a source and destination pair.

When a destination is selected for one SL grant in the LCP process, the condition that the SL grant is within the SL DRX-active time of the destination further needs to be met. In other words, the destination whose at least one of an LCH and a MAC CE has a highest priority in all logical channels and MAC CEs that meet the condition is selected from the destinations whose SL grants are within the DRX-active time.

As shown in FIG. 31, for example, destinations are a DES1 and a DES2. A destination selected by the first terminal is the DES2. Subsequently, the first terminal may select a sidelink resource within DRX-active time of the DES2 to initially transmit data sent to the DES2.

In another embodiment of this application, the first terminal may determine the second terminal in the following manner. For example, the first terminal may first select one SL grant, and then determine, from the one or more sidelink resources, the first sidelink resource indicated by the SL grant. The first terminal determines a time range of the first sidelink resource. Then, the first terminal determines a first destination from the plurality of destinations of the to-be-transmitted data. Active time of the first destination includes the time range of the first sidelink resource, that is, the time range of the first sidelink resource is within the SL DRX-active time of the first destination.

If there are a plurality of destinations including the time range of the first sidelink resource, the first terminal may determine the first destination from the plurality of destinations based on priorities of the plurality of destinations. It should be noted that the priority of the destination may also be considered as a priority of data transmitted on the destination.

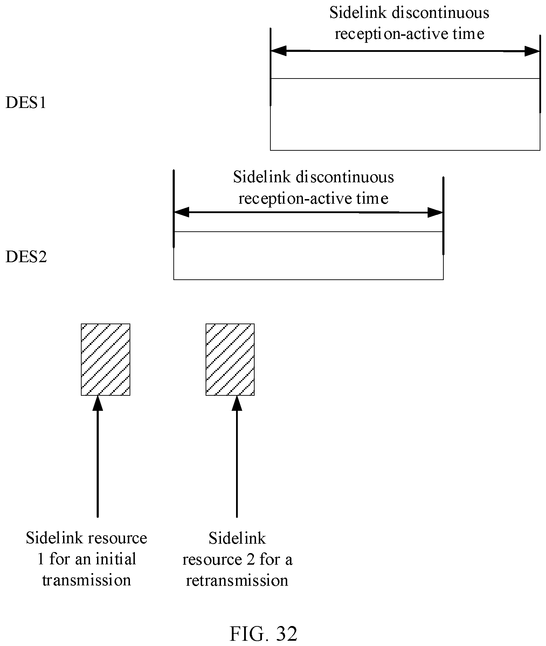

For example, as shown in FIG. 32, a time range of a sidelink resource (for example, the sidelink resource 1 for an initial transmission) selected by the first terminal does not overlap SL DRX-active time of the DES1 and the DES2. In other words, neither the DES 1 nor the DES2 is within the SL DRX-active time within the time range of the sidelink resource selected by the first terminal. In this case, the first terminal does not generate a MAC PDU. Therefore, an SL grant corresponding to the sidelink resource 1 selected by the first terminal for an initial transmission is not used.

In an existing standard, for a retransmission grant, a HARQ entity indicates a sidelink process to trigger a retransmission, and the sidelink process notifies the physical layer to transmit SCI and generate a transmission. If no MAC PDU is generated during the foregoing initial transmission, for the retransmission grant, the sidelink process cannot transmit the SCI and data. As shown in FIG. 18, even if the sidelink resource 2 for a retransmission is within the SL DRX-active time of the DES2, the first terminal does not perform a transmission on the sidelink resource 2 for a retransmission, that is, the second terminal does not use a retransmission grant corresponding to the sidelink resource 2 for a retransmission.

If the retransmission grant is not within active time of a destination of the MAC PDU, the transmitted SCI and data are not received by the destination. Therefore, if no MAC PDU is generated for the initial transmission grant, a transmission is not performed on the corresponding retransmission grant.

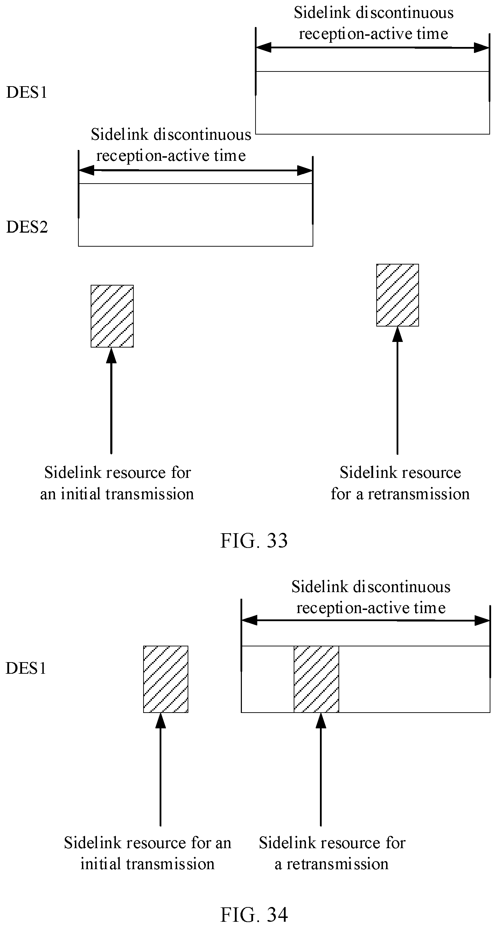

In another possible embodiment of this application, as shown in FIG. 33, if no MAC PDU is generated during the foregoing initial transmission, for the retransmission grant, if the retransmission grant is not within the SL DRX-active time of the selected destination (the DES2), the retransmission grant is not used. The retransmission grant corresponding to the initial transmission grant is a grant for transmitting a MAC PDU/TB the same as the initial transmission grant.

If no MAC PDU is generated for the initial transmission grant, the retransmission grant is processed in the following manner.

(1) If the MAC entity does not obtain the MAC PDU of the initial transmission grant, PSCCH duration and PSSCH duration that are corresponding to the retransmission grant associated with the initial transmission grant are cleared; if the MAC entity does not obtain the MAC PDU of the initial transmission grant, the retransmission grant associated with the initial transmission grant is cleared; if the MAC entity does not transmit data on the initial transmission grant, the MAC entity clears PSCCH duration and PSSCH duration that are corresponding to the retransmission grant associated with the initial transmission grant; or if the MAC entity does not transmit data on the initial transmission grant, the MAC entity clears the retransmission grant associated with the initial transmission grant.

(2) If an SL grant is for a retransmission for transmitting a MAC PDU, and a transmission resource indicated by the SL grant is not within SL DRX-active time of a destination corresponding to the MAC PDU, the MAC entity clears PSCCH duration and PSSCH duration that are corresponding to the grant, or clears the grant.

(3) If a HARQ buffer associated with a sidelink process associated with a retransmission grant is not empty, and a transmission resource indicated by the SL grant is within SL DRX-active time of a destination corresponding to the MAC PDU, the HARQ entity delivers the grant to the sidelink process, and indicates the sidelink process to trigger a retransmission. If a HARQ buffer associated with a sidelink process associated with a retransmission grant is empty, or a transmission resource indicated by the SL grant is not within SL DRX-active time of a destination corresponding to the MAC PDU, the HARQ entity does not deliver the grant to the sidelink process, and does not indicate the sidelink process to trigger a retransmission.

(4) If a HARQ buffer associated with a sidelink process is not empty, and a transmission resource indicated by a stored SL grant is within SL DRX-active time of a destination corresponding to the MAC PDU, the sidelink process indicates the physical layer to transmit SCI based on the stored SL grant. If a HARQ buffer associated with a sidelink process is empty, or a transmission resource indicated by a stored SL grant is not within SL DRX-active time of a destination corresponding to the MAC PDU, the sidelink process does not indicate the physical layer to transmit SCI based on the stored SL grant.

To enable the sidelink process to determine whether the SL grant is within the SL DRX-active time of the destination, the HARQ entity provides/delivers destination information of the MAC PDU to the sidelink process, for example, a destination layer-2 ID, a source and destination pair, a source layer-2 ID and destination layer-2 ID pair, or a source layer-1 ID and destination layer-1 ID pair.

In the foregoing solution, if the initial transmission grant is not used, the retransmission grant is not used either. This can avoid waste of power consumed when the PSCCH, the PSSCH, the SCI, or the MAC PDU is sent when the destination does not monitor the PSCCH, the PSSCH, the SCI, or the MAC PDU.

In another embodiment of this application, if the time domain position of the first sidelink resource that is indicated by the initial transmission SL grant and that is selected by the first terminal is not within the SL DRX-active time of the second terminal, but a time domain position of a sidelink resource indicated by the retransmission SL grant is within the SL DRX-active time of the second terminal, the first terminal may send the data to the second terminal by using the sidelink resource indicated by the retransmission SL grant.

When a destination is selected for one SL grant in the LCP process, the condition that at least one of the initial transmission SL grant and the corresponding retransmission SL grant is within the SL DRX-active time of the destination further needs to be met. In other words, the destination whose at least one of a logical channel (logical channel, LCH) and a MAC CE has a highest priority in all logical channels and MAC CEs that meet the condition is selected from the destinations whose at least one of an initial transmission SL grant and a retransmission SL grant is within the SL DRX-active time. If no destination meets the condition, no MAC PDU is generated. Therefore, the initial transmission SL grant is not used. If a grant is not within the SL DRX-active time of the selected destination, the grant is not used.

In addition, if no MAC PDU is generated for the initial transmission grant, the initial transmission grant and the retransmission grant are processed in the following manners.

(1) If a transmission resource indicated by the initial transmission SL grant is within the SL DRX-active time of the destination corresponding to the MAC PDU, the HARQ entity indicates the sidelink process to trigger a new transmission. If a transmission resource indicated by the initial transmission SL grant is not within the SL DRX-active time of the destination corresponding to the MAC PDU, the HARQ entity does not indicate the sidelink process to trigger a new transmission. If a transmission resource indicated by the initial transmission SL grant is not within the SL DRX-active time of the destination corresponding to the MAC PDU, the HARQ entity delivers the MAC PDU and the initial transmission SL grant to the sidelink process.

(2) If the HARQ buffer associated with the sidelink process associated with the retransmission grant is not empty, and the transmission resource indicated by the SL grant is within the SL DRX-active time of the destination corresponding to the MAC PDU, the HARQ entity delivers the grant to the sidelink process, and indicates the sidelink process to trigger a retransmission. If the HARQ buffer associated with the sidelink process associated with the retransmission grant is empty, or the transmission resource indicated by the SL grant is not within the SL DRX-active time of the destination corresponding to the MAC PDU, the HARQ entity does not deliver the grant to the sidelink process, and does not indicate the sidelink process to trigger a retransmission.

(3) If the HARQ buffer associated with the sidelink process is not empty, and the transmission resource indicated by the stored SL grant is within the SL DRX-active time of the destination corresponding to the MAC PDU, the sidelink process indicates the physical layer to transmit the SCI based on the stored SL grant. If the HARQ buffer associated with the sidelink process is empty, or the transmission resource indicated by the stored SL grant is not within the SL DRX-active time of the destination corresponding to the MAC PDU, the sidelink process does not indicate the physical layer to transmit the SCI based on the stored SL grant.

To enable the sidelink process to determine whether the SL grant is within the SL DRX-active time of the destination, the HARQ entity provides/delivers the destination information of the MAC PDU to the sidelink process, for example, the destination layer-2 ID, the source and destination pair, the source layer-2 ID and destination layer-2 ID pair, or the source layer-1 ID and destination layer-1 ID pair.

If the time domain position of the first sidelink resource indicated by the initial transmission SL grant is not within the SL DRX-active time of any destination (for example, the second terminal), for the retransmission grant corresponding to the initial transmission SL grant, the first terminal still attempts to obtain a MAC PDU for the retransmission grant, including selecting a destination for the retransmission grant to transmit data to the destination. The selected destination needs to meet the condition that the time domain position of the sidelink resource indicated by the retransmission SL grant is within the SL DRX-active time of the destination.

Specifically, for a retransmission grant, when at least one of the following conditions is met, the first terminal associates one sidelink process with the grant, and/or obtains a to-be-sent MAC PDU from a multiplexing and assembly entity (Multiplexing and assembly entity). The obtaining a to-be-sent MAC PDU from a multiplexing and assembly entity (Multiplexing and assembly entity) includes performing an LCP process. When a destination is selected for an SL grant in the LCP process, the condition that the SL grant is within SL DRX-active time of the destination needs to be met. In other words, the destination whose at least one of an LCH and a MAC CE has a highest priority in all logical channels and MAC CEs that meet the condition is selected from the destinations whose SL grants are within the DRX-active time.

(1) A HARQ process ID corresponding to the grant is associated with a sidelink process whose HARQ buffer is empty.
(2) A HARQ process ID corresponding to the grant is not associated with any sidelink process.
(3) A grant earlier than the grant and associated with the grant is not within the SL DRX-active time of any destination.
(4) No MAC PDU is obtained on a grant earlier than the grant and associated with the grant.

As shown in FIG. 34, for example, the initial transmission sidelink resource indicated by the initial transmission grant selected by the terminal is not within the SL DRX-active time of the DES1. However, the retransmission sidelink resource indicated by the retransmission grant selected by the terminal is within the SL DRX-active time of the DES1. Although the terminal does not use the initial transmission grant to transmit data, the terminal may use the retransmission grant to transmit data.

This avoids waste of power consumed when the PSCCH, the PSSCH, the SCI, or the MAC PDU is sent when the destination does not monitor the PSCCH, the PSSCH, the SCI, or the MAC PDU.

In an embodiment of this application, an embodiment of this application provides a resource selection/reselection triggering method. The method includes the following steps.

Step A1: The first terminal determines one or more sidelink resources Y for an initial transmission of data.

The sidelink resource Y for an initial transmission of data is indicated by an initial transmission grant.

Step B1: If the first terminal determines that a sidelink resource whose time domain position is within the DRX-active time of the second terminal does not exist in the one or more sidelink resources Y, the first terminal determines to trigger resource selection/reselection.

The foregoing step A1 and step B1 may be considered as a resource (re-)selection triggering condition of the first terminal. The resource (re-)selection triggering condition is checked in the MAC entity. In another possible manner, the check is performed in the LCP process: If no sidelink resource Y for an initial transmission of data is within the DRX-active time of the destination (for example, the second terminal) having data, resource selection/reselection is triggered.

It should be noted that the second terminal may be a specific terminal. For example, if a sidelink resource within the DRX-active time of the second terminal does not exist, but a sidelink resource within DRX-active time of another terminal exists, the first terminal may choose to trigger resource reselection, or may not trigger resource selection/reselection. However, if the second terminal represents one or more terminals, and if a sidelink resource within DRX-active time of any terminal of the one or more terminals does not exist in the one or more sidelink resources Y, the first terminal may choose to trigger resource reselection.

In an embodiment of this application, an embodiment of this application provides a resource selection/reselection triggering method. The method includes the following steps.

Step A2: The first terminal determines one or more sidelink resources Y for an initial transmission of data and a sidelink resource Z for a retransmission.

Step B2: If the first terminal determines that a sidelink resource that is used for an initial transmission and whose time domain position is within the DRX-active time of the second terminal does not exist in the one or more sidelink resources Y, and a sidelink resource that is used for a retransmission and that is within the DRX-active time does not exist in the sidelink resource Z for a retransmission, the first terminal determines to trigger resource selection/reselection.

The resource selection/reselection (Resource (re-)selection) triggering condition described in the foregoing step A2 and step B2 is checked in the MAC entity. In another possible manner, the check is performed in the LCP process: If neither the sidelink resource for an initial transmission (the initial transmission SL grant) nor the sidelink resource for a retransmission (for example, the sidelink resource indicated by the retransmission SL grant) is within the SL DRX-active time of the second terminal, resource selection/reselection is triggered.

It should be noted that the solution described in the foregoing step A1 and step B2 or the foregoing step A2 and step B2 may be used as an embodiment alone. Certainly, the solution described in the foregoing step A1 and step B1 may also be used in combination with the solution described in FIG. 19. The solution described in the foregoing step A2 and step B2 may also be used in combination with the solution described in FIG. 19. When used in combination, the solution described in step A1 and step B2 or step A2 and step B2 may be considered as a condition for the first terminal to trigger resource selection/reselection.

The foregoing describes the methods in embodiments of this application with reference to FIG. 19 to FIG. 34. The following describes communication apparatuses that are provided in embodiments of this application and that perform the foregoing methods. A person skilled in the art may understand that the method and the apparatus may be combined and referenced with each other. The communication apparatus provided in embodiments of this application may perform the steps performed by the first terminal in the foregoing communication method.

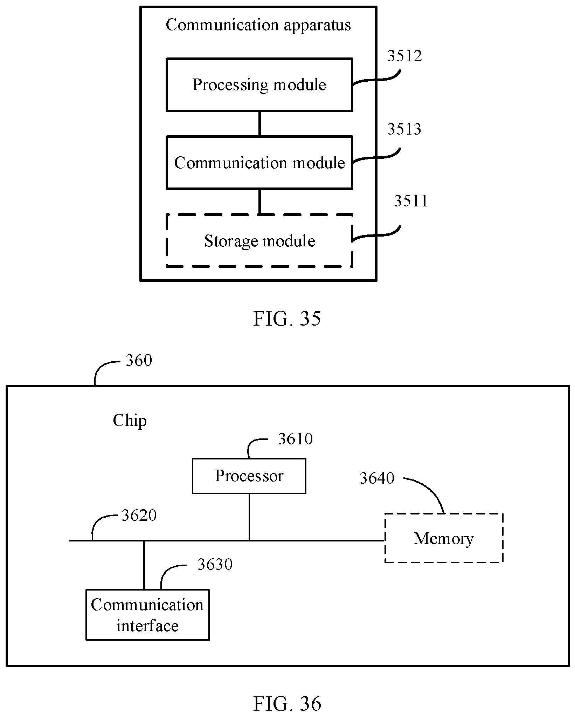

If an integrated unit is used, FIG. 35 shows the communication apparatus in the foregoing embodiments. The communication apparatus may include a communication module 3513 and a processing module 3512.

In an optional implementation, the communication apparatus may further include a storage module 3511, configured to store program code and data of the communication apparatus.

In an example, the communication apparatus is the first terminal or a chip used in the first terminal. In this case, the communication module 3513 is configured to support the communication apparatus in communicating with an external network element (for example, the second terminal). For example, the communication module 3513 is configured to perform receiving and sending operations performed by the first terminal in the foregoing method embodiment. The processing module 3512 is configured to perform a processing operation performed by the first terminal in the foregoing method embodiment.

For example, the communication module 3513 is configured to perform the sending action performed by the first terminal in step 1901 in FIG. 19 in the foregoing embodiment. The processing module 3512 may be configured to support the communication apparatus in performing the processing action performed by the first terminal in the foregoing embodiment, for example, step 1902.

It should be noted that the communication module 3513 shown in FIG. 35 may alternatively be replaced with a communication unit, and the processing module 3512 may alternatively be replaced with a processing unit. The storage module 3511 may alternatively be replaced with a storage unit. The processing unit is configured to control and manage actions of the communication apparatus. For example, the processing unit is configured to perform an information/data processing step performed by the communication apparatus. The communication unit is configured to support the communication apparatus in performing an information/data sending or receiving step.

In a possible implementation, the communication unit may include a receiving unit and a sending unit. The receiving unit is configured to receive a signal, and the sending unit is configured to send a signal.

The processing module 3512 may be a processor or a controller, for example, may be a central processing unit, a general-purpose processor, a digital signal processor, an application-specific integrated circuit, a field-programmable gate array or another programmable logic device, a transistor logic device, a hardware component, or any combination thereof. The processing module 3512 may implement or execute logical blocks, modules, and circuits in various examples described with reference to content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. The storage module may be a memory.

When the processing module 3512 is the processor 161 or the processor 165, the communication module 3513 is the transceiver 163, and the storage module 3511 is the memory 162, the communication apparatus in this application may be the communication device shown in FIG. 16.

The communication module may be a communication interface of the apparatus, and is configured to receive a signal from another apparatus. For example, when the apparatus is implemented as a chip, the communication module is a communication interface used by the chip to receive a signal from or send a signal to another chip or apparatus.

FIG. 36 is a schematic diagram of a structure of a chip 360 according to an embodiment of this application. The chip 360 includes one or more (including two) processors 3610 and a communication interface 3630.

Optionally, the chip 360 further includes a memory 3640. The memory 3640 may include a read-only memory and a random access memory, and provide operation instructions and data for the processor 3610. A part of the memory 3640 may further include a non-volatile random access memory (non-volatile random access memory, NVRAM).

In some implementations, the memory 3640 stores the following elements, an executable module or a data structure, or a subset thereof, or an extended set thereof.

In this embodiment of this application, a corresponding operation is performed by invoking the operation instructions stored in the memory 3640 (the operation instructions may be stored in an operating system).

The processor 3610 controls a processing operation of the first terminal, and the processor 3610 may also be referred to as a central processing unit (central processing unit, CPU).

The memory 3640 may include a read-only memory and a random access memory, and provide instructions and data for the processor 3610. A part of the memory 3640 may further include an NVRAM. For example, during application, the memory 3640, the communication interface 3630, and the memory 3640 are coupled together through a bus system 3620. The bus system 3620 may include a power bus, a control bus, a status signal bus, and the like in addition to a data bus. However, for clear description, various buses are marked as the bus system 3620 in FIG. 36.

The method disclosed in embodiments of this application may be applied to the processor 3610, or may be implemented by the processor 3610. The processor 3610 may be an integrated circuit chip and has a signal processing capability. In an implementation process, steps in the methods may be implemented by using a hardware integrated logic circuit in the processor 3610, or by using instructions in a form of software. The processor 3610 may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory 3640, and the processor 3610 reads information in the memory 3640 and completes the steps in the foregoing methods in combination with hardware of the processor 3610.

In a possible implementation, the communication interface 3630 is configured to perform receiving and sending steps of the first terminal in the embodiments shown in FIG. 19 or FIG. 21. The processor 3610 is configured to perform the processing step of the first terminal in the embodiments shown in FIG. 19 or FIG. 21.

According to one aspect, a computer-readable storage medium is provided. The computer-readable storage medium stores instructions. When the instructions are run, the function performed by the first terminal in FIG. 19 or FIG. 21 is implemented.

According to one aspect, a computer program product including instructions is provided. The computer program product includes the instructions. When the instructions are run, the function performed by the first terminal in FIG. 19 or FIG. 21 is implemented.

According to one aspect, a chip is provided. The chip is used in a first terminal, the chip includes at least one processor and a communication interface, the communication interface is coupled to the at least one processor, and the processor is configured to run instructions, to implement the function performed by the first terminal in FIG. 19 or FIG. 21.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, by way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Embodiment 1. A communication method, applied to a first terminal device, where the method includes:

receiving at least one message for reserving a resource;
determining, from S resources based on the at least one message, M resources whose signal strengths do not meet a first signal strength threshold, where a first signal strength threshold corresponding to a first resource in the M resources is related to a priority indicated by a message for reserving the first resource, M is a positive integer, and S is an integer greater than or equal to M;
adjusting the first signal strength threshold if M does not meet a first resource quantity or S-M does not meet a first resource quantity; and
sending a first message to a second terminal device, where the first message indicates a resource determined based on an adjusted signal strength threshold, and the adjusted signal strength threshold enables M to meet the first resource quantity or enables S-M to meet the first resource quantity.

Embodiment 2. The method according to Embodiment 1, where the method further includes:
determining, from the S resources based on the at least one message, N resources whose signal strengths do not meet the adjusted signal strength threshold.

Embodiment 3. The method according to Embodiment 2, where the N resources are a resource non-preferred for sending data to the first terminal device.

Embodiment 4. The method according to Embodiment 2 or 3, where the method further includes:
determining K resources from the N resources, where K is less than or equal to the first resource quantity, and K is a positive integer.

Embodiment 5. The method according to Embodiment 4, where

signal strengths corresponding to the K resources are greater than or equal to a signal strength of a remaining resource in the N resources other than the K resources, the K resources are a resource with a highest signal strength in the N resources, the K resources are first K resources determined in descending order of signal strengths in the N resources, or the K resources are a resource whose signal strength is greater than a second signal strength threshold in the N resources; or
the K resources are randomly determined from the N resources.

Embodiment 6. The method according to any one of Embodiments 2 to 5, where the method further includes:
determining P resources whose signal strengths are less than or equal to a third signal strength threshold and that are used to send data to the first terminal device, where P is a positive integer, and the third signal strength threshold is equal to the adjusted signal strength threshold, or equal to a largest value in thresholds included in the adjusted signal strength threshold.

Embodiment 7. The method according to Embodiment 6, where the first message further indicates the P resources.

Embodiment 8. The method according to any one of Embodiments 1 to 7, where the first signal strength threshold corresponding to the first resource in the M resources is determined based on a first priority and the priority of the message for reserving the first resource, and the first priority is a priority indicated by the second terminal device, or is a preset priority.

Embodiment 9. The method according to any one of Embodiments 1 to 8, where the determining, from S resources, M resources whose signal strengths do not meet a first signal strength threshold includes:
determining, from the S resources, the M resources whose signal strengths are greater than the first signal strength threshold.

Embodiment 10. The method according to Embodiment 9, where the adjusting the first signal strength threshold if M does not meet a first resource quantity includes:
increasing the first signal strength threshold if M is greater than the first resource quantity.

Embodiment 11. The method according to Embodiment 9, where the adjusting the first signal strength threshold if M does not meet a first resource quantity includes:
decreasing the first signal strength threshold if M is less than the first resource quantity.

Embodiment 12. The method according to any one of Embodiments 1 to 8, where the determining, from S resources, M resources whose signal strengths do not meet a first signal strength threshold includes:

determining, from the S resources, the M resources whose signal strengths are less than or equal to the first signal strength threshold.

Embodiment 13. The method according to Embodiment 12, where the adjusting the first signal strength threshold if S-M does not meet a first resource quantity includes:

increasing the first signal strength threshold if S-M is greater than the first resource quantity.

Embodiment 14. The method according to Embodiment 13, where the adjusting the first signal strength threshold if S-M does not meet a first resource quantity includes:

decreasing the first signal strength threshold if S-M is less than the first resource quantity.

Embodiment 15. A communication method, applied to a first terminal device, where the method includes:

receiving at least one message for reserving a resource;
determining, from S resources based on the at least one message, M resources whose signal strengths do not meet a first signal strength threshold, where a first signal strength threshold corresponding to a first resource in the M resources is related to a priority indicated by a message for reserving the first resource, M is a positive integer, and S is an integer greater than or equal to M;
determining K resources from the M resources or S-M resources, where K is less than or equal to a first resource quantity, and K is a positive integer less than or equal to M; and
sending a first message to a second terminal device, where the first message indicates the K resources.

Embodiment 16. The method according to Embodiment 15, where the first signal strength threshold corresponding to the first resource in the M resources is determined based on a first priority and the priority of the message for reserving the first resource, and the first priority is a priority indicated by the second terminal device, or is a preset priority.

Embodiment 17. The method according to Embodiment 15 or 16, where

signal strengths corresponding to the K resources are greater than or equal to a signal strength of a remaining resource other than the K resources in the M resources, the K resources are a resource with a highest signal strength in the M resources, the K resources are first K resources determined in descending order of signal strengths in the M resources, or the K resources are a resource whose signal strength is greater than a second signal strength threshold in the M resources; or
the K resources are randomly determined from the M resources.

Embodiment 18. The method according to any one of Embodiments 15 to 17, where the method further includes: determining P resources whose signal strengths are less than or equal to a third signal strength threshold and that are used to send data to the first terminal device, where P is a positive integer, and the third signal strength threshold is equal to the first signal strength threshold, or equal to a largest value in thresholds included in the first signal strength threshold.

Embodiment 19. The method according to Embodiment 18, where the first message further indicates the P resources.

Embodiment 20. A communication method, applied to a first terminal device, where the method includes:

receiving at least one message for reserving a resource;
determining M resources from a resource reserved by using the at least one message in descending order of a signal strength of the at least one message, where M is a positive integer;
determining K resources from the M resources, where K is less than or equal to a first resource quantity, and K is a positive integer less than or equal to M; and
sending a first message to a second terminal device, where the first message indicates the K resources.

Embodiment 21. The method according to Embodiment 20, where

signal strengths corresponding to the K resources are greater than or equal to a signal strength of a remaining resource other than the K resources in the M resources, the K resources are a resource with a highest signal strength in the M resources, the K resources are first K resources determined in descending order of signal strengths in the M resources, or the K resources are a resource whose signal strength is greater than a second signal strength threshold in the M resources; or
the K resources are randomly determined from the M resources.

Embodiment 22. A communication method, applied to a first terminal device, where the method includes:

determining a third signal strength threshold based on a first priority, where the first priority is a priority indicated by a second terminal device, or is a preset priority;

receiving at least one message for reserving a resource; and

determining, based on the at least one message, P resources whose signal strengths do not meet the third signal strength threshold, where P is a positive integer.

Embodiment 23. The method according to Embodiment 22, where the determining a third signal strength threshold based on a first priority includes:

determining, from first information, a group of thresholds corresponding to the first priority as the third signal strength threshold; or

determining, from first information, a threshold corresponding to a lowest message priority in a group of thresholds corresponding to the first priority as the third signal strength threshold.

Embodiment 24. The method according to Embodiment 22 or 23, where the preset priority is the lowest message priority.

Embodiment 25. A communication method, applied to a first terminal device, where the method includes:

determining a first resource quantity; and

determining, in a first selection manner based on the first resource quantity, a resource non-preferred for sending data to the first terminal device.

Embodiment 26. The method according to Embodiment 25, where the method further includes:

excluding a part of resources from the determined resource if a quantity of determined resources is greater than the first resource quantity.

Embodiment 27. The method according to Embodiment 26, where the determining a first resource quantity includes:

determining a first-type resource, where the first-type resource includes a reserved resource for sending data to the first terminal device, or includes a resource that is detected and that is reserved by using a message using the first terminal device as a receiver; and

determining the first resource quantity based on a resource quantity threshold and the first-type resource.

Embodiment 28. The method according to Embodiment 27, where

the part of resources are reserved resources for sending data to the first terminal device;

signal strengths corresponding to the part of resources are less than a signal strength of a remaining resource, where the remaining resource is a resource other than the part of resources in the determined resources; the part of resources are a resource with a lowest signal strength in the M resources; the part of resources are last E resources determined in descending order of signal strengths in the M resources, where E is a positive integer; or the part of resources are a resource whose signal strength is less than or equal to a second signal strength threshold in the M resources; or

the part of resources are randomly determined from the remaining resource.

Embodiment 29. The method according to Embodiment 26, where the determining a first resource quantity includes:

determining a second resource quantity, where the second resource quantity is a quantity of resources that are determined in a second selection manner and that are non-preferred for sending data to the first terminal device; and

determining the first resource quantity based on a resource quantity threshold and the second resource quantity.

Embodiment 30. The method according to Embodiment 29, where

the part of resources do not include a resource for sending data to the first terminal device;

signal strengths corresponding to the part of resources are less than a signal strength of a remaining resource, where the remaining resource is a resource other than the part of resources in the determined resources; the part of resources are a resource with a lowest signal strength in the M resources; the part of resources are last E resources determined in descending order of signal strengths in the M resources, where E is a positive integer; or the part of resources are a resource whose signal strength is less than or equal to a second signal strength threshold in the M resources; or
the part of resources are randomly determined from the remaining resource.

Embodiment 31. The method according to any one of Embodiments 25 to 30, where the method further includes: if the quantity of determined resources is less than or equal to the first resource quantity, using the quantity of determined resources as the resources non-preferred for sending data to the first terminal device.
Embodiment 32. The method according to any one of Embodiments 25 to 31, where

the first selection manner is a manner of determining, based on a first signal strength threshold, the resource non-preferred for sending data to the first terminal device, where a signal strength of the resource non-preferred for sending data to the first terminal device is greater than the first signal strength threshold; and
the second selection manner is a manner of determining, based on a third signal strength threshold, the resource non-preferred for sending data to the first terminal device, where the signal strength of the resource non-preferred for sending data to the first terminal device is less than or equal to the first signal strength threshold, and is used to send data to the first terminal device.

Embodiment 33. A communication method, applied to a first terminal device, where the method includes:

determining a first resource quantity and a second resource quantity, where the first resource quantity is a quantity of resources that are determined in a first selection manner and that are non-preferred for sending data to the first terminal device, the second resource quantity is a quantity of resources that are determined in a second selection manner and that are non-preferred for sending data to the first terminal device, and a resource corresponding to the first resource quantity and a resource corresponding to the second resource quantity include an overlapping resource; and
excluding the overlapping resource from the resource corresponding to the first resource quantity.

Embodiment 34. The method according to Embodiment 33, where the method further includes:

if a sum of the second resource quantity and a remaining resource obtained by excluding the overlapping resource from the resource corresponding to the first resource quantity is greater than a resource quantity threshold, increasing a first signal strength threshold, where the first signal strength threshold is used to determine, in the first selection manner, a resource non-preferred for sending data to the first terminal device; and
determining a third resource quantity in the first selection manner based on an increased signal strength threshold, where the third resource quantity is a quantity of resources non-preferred for sending data to the first terminal device.

Embodiment 35. The method according to Embodiment 33, where the method further includes: if a sum of the second resource quantity and a remaining resource obtained by excluding the overlapping resource from the resource corresponding to the first resource quantity is greater than a resource quantity threshold, determining F resources from the resource corresponding to the first resource quantity, where a sum of F and the second resource quantity is less than or equal to the resource quantity threshold, and F is a positive integer.
Embodiment 36. The method according to Embodiment 35, where

signal strengths corresponding to the F resources are greater than or equal to a signal strength corresponding to a resource other than the F resources in the remaining resource, the F resources are a resource with a highest signal strength in the remaining resource, the F resources are first F resources determined in descending order of signal strengths in the remaining resource, or the F resources are a resource whose signal strength is greater than a second signal strength threshold in the remaining resource; or
the F resources are randomly determined from the remaining resource.

Embodiment 37. The method according to Embodiment 33, where the method further includes:

if a sum of the second resource quantity and a remaining resource obtained by excluding the overlapping resource from the resource corresponding to the first resource quantity is less than a resource quantity threshold, decreasing a first signal strength threshold, where the first signal strength threshold is used to determine, in the first selection manner, a resource non-preferred for sending data to the first terminal device;
determining a third resource quantity in the first selection manner based on a decreased signal strength threshold, where the third resource quantity is a quantity of resources non-preferred for sending data to the first terminal device;

and

excluding, from a resource corresponding to the third resource quantity, a resource that overlaps the resource corresponding to the second resource quantity.

Embodiment 38. The method according to Embodiment 33, where the method further includes:
if a sum of the second resource quantity and a remaining resource obtained by excluding the overlapping resource from the resource corresponding to the first resource quantity is less than or equal to a resource quantity threshold, using the remaining resource as a resource non-preferred for sending data to the first terminal device.

Embodiment 39. A communication method, applied to a first terminal device, where the method includes:

determining, in a first selection manner and/or a second selection manner, a resource non-preferred for sending data to the first terminal device, where the selection manner is determined based on a first parameter; and
sending a message to a second terminal device, where the message indicates the resource non-preferred for sending data to the first terminal device.

Embodiment 40. The method according to Embodiment 39, where the first parameter includes one or more of the following:

a resource quantity threshold;
a quantity of reserved resources for sending data to the first terminal device;
a priority indicated by the second terminal device;
a quantity of resources determined in the first selection manner; or
a quantity of resources determined in the second selection manner.

Embodiment 41. The method according to Embodiment 40, where

when the first parameter includes the resource quantity threshold, if the resource quantity threshold is less than a first threshold, the resource non-preferred for sending data to the first terminal device is determined in the second selection manner; if the resource quantity threshold is greater than or equal to a first threshold and is less than a second threshold, the resource non-preferred for sending data to the first terminal device is determined in the first selection manner; or if the resource quantity threshold is greater than or equal to a second threshold, the resource non-preferred for sending data to the first terminal device is determined in the first selection manner and the second selection manner;
when the first parameter includes the quantity of reserved resources for sending data to the first terminal device, if the quantity of reserved resources for sending data to the first terminal device is greater than or equal to a third threshold, the resource non-preferred for sending data to the first terminal device is determined in the second selection manner; otherwise, the resource non-preferred for sending data to the first terminal device is determined in the first selection manner, or the resource non-preferred for sending data to the first terminal device is determined in the first selection manner and the second selection manner;
when the first parameter includes the priority indicated by the second terminal device, if the priority indicated by the second terminal device is higher than or equal to a second priority, the resource non-preferred for sending data to the first terminal device is determined in the first selection manner and the second selection manner; otherwise, the resource non-preferred for sending data to the first terminal device is determined in the first selection manner or the second selection manner;
when the first parameter includes the quantity of resources determined in the first selection manner, if the quantity of resources determined in the first selection manner is greater than a fourth threshold, the resource non-preferred for sending data to the first terminal device is determined in the first selection manner; otherwise, the resource non-preferred for sending data to the first terminal device is determined in the first selection manner and the second selection manner, or the resource non-preferred for sending data to the first terminal device is determined in the second selection manner; or
when the first parameter includes the quantity of resources determined in the second selection manner, if the quantity of resources determined in the second selection manner is greater than a fifth threshold, the resource non-preferred for sending data to the first terminal device is determined in the second selection manner; otherwise, the resource non-preferred for sending data to the first terminal device is determined in the first selection manner and the second selection manner, or the resource non-preferred for sending data to the first terminal device is determined in the first selection manner.

Embodiment 42. The method according to any one of Embodiments 39 to 41, where the method further includes:

determining the quantity of resources determined in the first selection manner, and/or determining the quantity of resources determined in the second selection manner.

Embodiment 43. The method according to any one of Embodiments 39 to 42, where

the first selection manner is a manner of determining, based on a first signal strength threshold, the resource non-preferred for sending data to the first terminal device, where a signal strength of the resource non-preferred for sending data to the first terminal device is greater than the first signal strength threshold; and

the second selection manner is a manner of determining, based on a third signal strength threshold, the resource non-preferred for sending data to the first terminal device, where the signal strength of the resource non-preferred for sending data to the first terminal device is less than or equal to the first signal strength threshold, and is used to send data to the first terminal device.

Embodiment 44. A communication apparatus, including:

a transceiver unit, configured to receive at least one message for reserving a resource; and

a processing unit, configured to determine, from S resources based on the at least one message, M resources whose signal strengths do not meet a first signal strength threshold, where a first signal strength threshold corresponding to a first resource in the M resources is related to a priority indicated by a message for reserving the first resource, M is a positive integer, and S is an integer greater than or equal to M;

the processing unit is further configured to adjust the first signal strength threshold if M does not meet a first resource quantity or S-M does not meet a first resource quantity; and

the transceiver unit is further configured to send a first message to a second terminal device, where the first message indicates a resource determined based on an adjusted signal strength threshold, and the adjusted signal strength threshold enables M to meet the first resource quantity or enables S-M to meet the first resource quantity.

Embodiment 45. The communication apparatus according to Embodiment 44, where the processing unit is further configured to determine, from the S resources based on the at least one message, N resources whose signal strengths do not meet the adjusted signal strength threshold.

Embodiment 46. The communication apparatus according to Embodiment 45, where the N resources are a resource non-preferred for sending data to the communication apparatus.

Embodiment 47. The apparatus according to Embodiment 45 or 46, where the processing unit is further configured to determine K resources from the N resources, where K is less than or equal to the first resource quantity, and K is a positive integer.

Embodiment 48. The communication apparatus according to Embodiment 47, where

signal strengths corresponding to the K resources are greater than or equal to a signal strength of a remaining resource in the N resources other than the K resources, the K resources are a resource with a highest signal strength in the N resources, the K resources are first K resources determined in descending order of signal strengths in the N resources, or the K resources are a resource whose signal strength is greater than a second signal strength threshold in the N resources; or

the K resources are randomly determined from the N resources.

Embodiment 49. The communication apparatus according to any one of Embodiments 45 to 48, where the processing unit is further configured to determine P resources whose signal strengths are less than or equal to a third signal strength threshold and that are used to send data to the communication apparatus, where P is a positive integer, and the third signal strength threshold is equal to the adjusted signal strength threshold, or equal to a largest value in thresholds included in the adjusted signal strength threshold.

Embodiment 50. The communication apparatus according to Embodiment 49, where the first message further indicates the P resources.

Embodiment 51. The communication apparatus according to any one of Embodiments 44 to 50, where the first signal strength threshold corresponding to the first resource in the M resources is determined based on a first priority and the priority of the message for reserving the first resource, and the first priority is a priority indicated by the second terminal device, or is a preset priority.

Embodiment 52. The communication apparatus according to any one of Embodiments 44 to 51, where the processing unit is configured to determine, from the S resources, the M resources whose signal strengths do not meet the first signal strength threshold in the following manner:

determining, from the S resources, the M resources whose signal strengths are greater than the first signal strength threshold.

Embodiment 53. The communication apparatus according to Embodiment 52, where the processing unit is configured to: if M does not meet a resource quantity threshold, adjust the first signal strength threshold in the following manner:

increasing the first signal strength threshold if M is greater than the resource quantity threshold.

Embodiment 54. The communication apparatus according to Embodiment 52, where the processing unit is configured to: adjust the first signal strength threshold in the following manner if M does not meet a resource quantity threshold:

decreasing the first signal strength threshold if M is less than the resource quantity threshold.

Embodiment 55. The communication apparatus according to any one of Embodiments 44 to 51, where the processing unit is configured to determine, from the S resources, the M resources whose signal strengths do not meet the first signal strength threshold in the following manner:

determining, from the S resources, the M resources whose signal strengths are less than or equal to the first signal strength threshold.

Embodiment 56. The communication apparatus according to Embodiment 55, where the processing unit is configured to adjust the first signal strength threshold in the following manner if S-M does not meet a resource quantity threshold:

increasing the first signal strength threshold if S-M is greater than the resource quantity threshold.

Embodiment 57. The communication apparatus according to Embodiment 56, where the processing unit is configured to adjust the first signal strength threshold in the following manner if S-M does not meet the resource quantity threshold:

decreasing the first signal strength threshold if S-M is less than the resource quantity threshold.

Embodiment 58. A communication apparatus, including:

a transceiver unit, configured to receive at least one message for reserving a resource; and

a processing unit, configured to determine, from S resources based on the at least one message, M resources whose signal strengths do not meet a first signal strength threshold, where a first signal strength threshold corresponding to a first resource in the M resources is related to a priority indicated by a message for reserving the first resource, M is a positive integer, and S is an integer greater than or equal to M;

the processing unit is further configured to determine K resources from the M resources or S-M resources, where K is less than or equal to a first resource quantity, and K is a positive integer less than or equal to M; and

the transceiver unit is further configured to send a first message to a second terminal device, where the first message indicates the K resources.

Embodiment 59. The communication apparatus according to Embodiment 58, where the first signal strength threshold corresponding to the first resource in the M resources is determined based on a first priority and the priority of the message for reserving the first resource, and the first priority is a priority indicated by the second terminal device, or is a preset priority.

Embodiment 60. The communication apparatus according to Embodiment 58 or 59, where

signal strengths corresponding to the K resources are greater than or equal to a signal strength of a remaining resource other than the K resources in the M resources, the K resources are a resource with a highest signal strength in the M resources, the K resources are first K resources determined in descending order of signal strengths in the M resources, or the K resources are a resource whose signal strength is greater than a second signal strength threshold in the M resources; or

the K resources are randomly determined from the M resources.

Embodiment 61. The communication apparatus according to any one of Embodiments 58 to 60, where the processing unit is further configured to determine P resources whose signal strengths are less than or equal to a third signal strength threshold and that are used to send data to the communication apparatus, where P is a positive integer, and the third signal strength threshold is equal to the first signal strength threshold, or equal to a largest value in thresholds included in the first signal strength threshold.

Embodiment 62. The communication apparatus according to Embodiment 61, where the first message further indicates the P resources.

Embodiment 63. A communication apparatus, including:

a transceiver unit, configured to receive at least one message for reserving a resource; and
a processing unit, configured to determine M resources from a resource reserved by using the at least one message in descending order of a signal strength of the at least one message, where M is a positive integer;

the processing unit is further configured to determine K resources from the M resources, where K is less than or equal to a first resource quantity, and K is a positive integer less than or equal to M; and
the transceiver unit is further configured to send a first message to a second terminal device, where the first message indicates the K resources.

Embodiment 64. The communication apparatus according to Embodiment 63, where

signal strengths corresponding to the K resources are greater than or equal to a signal strength of a remaining resource other than the K resources in the M resources, the K resources are a resource with a highest signal strength in the M resources, the K resources are first K resources determined in descending order of signal strengths in the M resources, or the K resources are a resource whose signal strength is greater than a second signal strength threshold in the M resources; or
the K resources are randomly determined from the M resources.

Embodiment 65. A communication apparatus, including:

a processing unit, configured to determine a third signal strength threshold based on a first priority, where the first priority is a priority indicated by a second terminal device, or is a preset priority; and
a transceiver unit, configured to receive at least one message for reserving a resource; and
the processing unit is further configured to determine, based on the at least one message, P resources whose signal strengths do not meet the third signal strength threshold, where P is a positive integer.

Embodiment 66. The communication apparatus according to Embodiment 65, where the processing unit is configured to determine the third signal strength threshold based on the first priority in the following manner:

determining, from first information, a group of thresholds corresponding to the first priority as the third signal strength threshold; or
determining, from first information, a threshold corresponding to a lowest message priority in a group of thresholds corresponding to the first priority as the third signal strength threshold.

Embodiment 67. The communication apparatus according to Embodiment 65 or 66, where the preset priority is the lowest message priority.
Embodiment 68. A communication apparatus, including:

a processing unit, configured to determine a first resource quantity; and
the processing unit is further configured to determine, based on the first resource quantity in a first selection manner, a resource non-preferred for sending data to the communication apparatus.

Embodiment 69. The communication apparatus according to Embodiment 68, where the processing unit is further configured to exclude a part of resources from the determined resource if a quantity of determined resources is greater than the first resource quantity.
Embodiment 70. The communication apparatus according to Embodiment 69, where the processing unit is configured to determine the first resource quantity in the following manner:

determining a first-type resource, where the first-type resource includes a reserved resource for sending data to a first terminal device, or includes a resource that is detected and that is reserved by using a message using a first terminal device as a receiver; and
determining the first resource quantity based on a resource quantity threshold and the first-type resource.

Embodiment 71. The communication apparatus according to Embodiment 70, where

the part of resources are reserved resources for sending data to the communication apparatus;
signal strengths corresponding to the part of resources are less than a signal strength of a remaining resource, where the remaining resource is a resource other than the part of resources in the determined resources; the part of resources are a resource with a lowest signal strength in the M resources; the part of resources are last E resources determined in descending order of signal strengths in the M resources, where E is a positive integer; or the part of resources are a resource whose signal strength is less than or equal to a second signal strength threshold in the M resources; or

the part of resources are randomly determined from the remaining resource.

Embodiment 72. The communication apparatus according to Embodiment 71, where the processing unit is configured to determine the first resource quantity in the following manner:

determining a second resource quantity, where the second resource quantity is a quantity of resources that are determined in a second selection manner and that are non-preferred for sending data to the communication apparatus; and
determining the first resource quantity based on the resource quantity threshold and the second resource quantity.

Embodiment 73. The communication apparatus according to Embodiment 72, where

the part of resources do not include a resource for sending data to the communication apparatus;
the signal strengths corresponding to the part of resources are less than the signal strength of the remaining resource, where the remaining resource is the resource other than the part of resources in the determined resources; the part of resources are the resource with the lowest signal strength in the M resources; the part of resources are the last E resources determined in descending order of signal strengths in the M resources, where E is a positive integer; or the part of resources are the resource whose signal strength is less than or equal to the second signal strength threshold in the M resources; or
the part of resources are randomly determined from the remaining resource.

Embodiment 74. The communication apparatus according to any one of Embodiments 68 to 73, where the processing unit is further configured to: if the quantity of determined resource is less than or equal to the first resource quantity, use the quantity of determined resource as the resources non-preferred for sending data to the communication apparatus.

Embodiment 75. The communication apparatus according to any one of Embodiments 68 to 74, where

the first selection manner is a manner of determining, based on a first signal strength threshold, the resource non-preferred for sending data to the communication apparatus, where a signal strength of the resource non-preferred for sending data to the communication apparatus is greater than the first signal strength threshold; and
the second selection manner is a manner of determining, based on a third signal strength threshold, the resource non-preferred for sending data to the communication apparatus, where the signal strength of the resource non-preferred for sending data to the communication apparatus is less than or equal to the first signal strength threshold, and is used to send data to the communication apparatus.

Embodiment 76. A communication apparatus, including:

a processing unit, configured to determine a first resource quantity and a second resource quantity, where the first resource quantity is a quantity of resources that are determined in a first selection manner and that are non-preferred for sending data to the communication apparatus, the second resource quantity is a quantity of resources that are determined in a second selection manner and that are non-preferred for sending data to the communication apparatus, and a resource corresponding to the first resource quantity and a resource corresponding to the second resource quantity include an overlapping resource; and
the processing unit is further configured to exclude the overlapping resource from the resource corresponding to the first resource quantity.

Embodiment 77. The communication apparatus according to Embodiment 76, where the processing unit is further configured to:

if a sum of the second resource quantity and a remaining resource obtained by excluding the overlapping resource from the resource corresponding to the first resource quantity is greater than a resource quantity threshold, increase a first signal strength threshold, where the first signal strength threshold is used to determine, in the first selection manner, a resource non-preferred for sending data to the communication apparatus; and
determine a third resource quantity in the first selection manner based on an increased signal strength threshold, where the third resource quantity is a quantity of resources non-preferred for sending data to the communication apparatus.

Embodiment 78. The communication apparatus according to Embodiment 76, where the processing unit is further configured to: if a sum of the second resource quantity and a remaining resource obtained by excluding the overlapping resource from the resource corresponding to the first resource quantity is greater than a resource quantity threshold, determine F resources from the resource corresponding to the first resource quantity, where a sum of F and the second resource quantity is less than or equal to the resource quantity threshold, and F is a positive integer.

Embodiment 79. The communication apparatus according to Embodiment 76, where

signal strengths corresponding to the F resources are greater than or equal to a signal strength corresponding to a resource other than the F resources in the remaining resource, the F resources are a resource with a highest signal strength in the remaining resource, the F resources are first F resources determined in descending order of signal strengths in the remaining resource, or the F resources are a resource whose signal strength is greater than a second signal strength threshold in the remaining resource; or
the F resources are randomly determined from the remaining resource.

Embodiment 80. The communication apparatus according to Embodiment 76, where the processing unit is further configured to:

if a sum of the second resource quantity and a remaining resource obtained by excluding the overlapping resource from the resource corresponding to the first resource quantity is less than a resource quantity threshold, decrease a first signal strength threshold, where the first signal strength threshold is used to determine, in the first selection manner, a resource non-preferred for sending data to the communication apparatus; and
determine a third resource quantity in the first selection manner based on a decreased signal strength threshold, where the third resource quantity is a quantity of resources non-preferred for sending data to the communication apparatus; and
exclude, from a resource corresponding to the third resource quantity, a resource that overlaps the resource corresponding to the second resource quantity.

Embodiment 81. The method according to Embodiment 76, where the processing unit is further configured to:
if a sum of the second resource quantity and a remaining resource obtained by excluding the overlapping resource from the resource corresponding to the first resource quantity is less than or equal to a resource quantity threshold, use the remaining resource as a resource non-preferred for sending data to the communication apparatus.

Embodiment 82. A communication apparatus, including:

a processing unit, configured to determine, in a first selection manner and/or a second selection manner, a resource non-preferred for sending data to the communication apparatus, where the selection manner is determined based on a first parameter; and
a transceiver unit, configured to send a message to a second terminal device, where the message indicates the resource non-preferred for sending data to the communication apparatus.

Embodiment 83. The communication apparatus according to Embodiment 82, where the first parameter includes one or more of the following:

a resource quantity threshold;
a quantity of reserved resources for sending data to the communication apparatus;
a priority indicated by the second terminal device;
a quantity of resources determined in the first selection manner; or
a quantity of resources determined in the second selection manner.

Embodiment 84. The communication apparatus according to Embodiment 83, where

when the first parameter includes the resource quantity threshold, if the resource quantity threshold is less than a first threshold, the resource non-preferred for sending data to the communication apparatus is determined in the second selection manner; if the resource quantity threshold is greater than or equal to a first threshold and is less than a second threshold, the resource non-preferred for sending data to the communication apparatus is determined in the first selection manner; or if the resource quantity threshold is greater than or equal to a second threshold, the resource non-preferred for sending data to the communication apparatus is determined in the first selection manner and the second selection manner;
when the first parameter includes the quantity of reserved resources for sending data to the communication apparatus, if the quantity of reserved resources for sending data to the communication apparatus is greater than or equal to a third threshold, the resource non-preferred for sending data to the communication apparatus is determined in the second selection manner; otherwise, the resource non-preferred for sending data to the communication apparatus is determined in the first selection manner, or the resource non-preferred for sending data to the communication apparatus is determined in the first selection manner and the second selection manner;

when the first parameter includes the priority indicated by the second terminal device, if the priority indicated by the second terminal device is higher than or equal to a second priority, the resource non-preferred for sending data to the communication apparatus is determined in the first selection manner and the second selection manner; otherwise, the resource non-preferred for sending data to the communication apparatus is determined in the first selection manner or the second selection manner;

when the first parameter includes the quantity of resources determined in the first selection manner, if the quantity of resources determined in the first selection manner is greater than a fourth threshold, the resource non-preferred for sending data to the communication apparatus is determined in the first selection manner; otherwise, the resource non-preferred for sending data to the communication apparatus is determined in the first selection manner and the second selection manner, or the resource non-preferred for sending data to the first communication apparatus is determined in the second selection manner; or

when the first parameter includes the quantity of resources determined in the second selection manner, if the quantity of resources determined in the second selection manner is greater than a fifth threshold, the resource non-preferred for sending data to the communication apparatus is determined in the second selection manner; otherwise, the resource non-preferred for sending data to the communication apparatus is determined in the first selection manner and the second selection manner, or the resource non-preferred for sending data to the communication apparatus is determined in the first selection manner.

Embodiment 85. The communication apparatus according to any one of Embodiments 82 to 84, where the processing unit is further configured to determine the quantity of resources determined in the first selection manner, and/or determine the quantity of resources determined in the second selection manner.

Embodiment 86. The communication apparatus according to any one of Embodiments 82 to 85, where

the first selection manner is a manner of determining, based on a first signal strength threshold, the resource non-preferred for sending data to the communication apparatus, where a signal strength of the resource non-preferred for sending data to the communication apparatus is greater than the first signal strength threshold; and

the second selection manner is a manner of determining, based on a third signal strength threshold, the resource non-preferred for sending data to the communication apparatus, where the signal strength of the resource non-preferred for sending data to the communication apparatus is less than or equal to the first signal strength threshold, and is used to send data to the communication apparatus.

Embodiment 87: An apparatus, including units for performing the method described in any one of embodiments of this application.

Embodiment 88. A computer program product, where the computer program product includes a computer program, and when the computer program is run on a computer, the computer is enabled to perform the method according to any one of Embodiments 1 to 14, the computer is enabled to perform the method according to any one of Embodiments 15 to 19, the computer is enabled to perform the method according to Embodiment 20 or 21, the computer is enabled to perform the method according to any one of Embodiments 22 to 24, the computer is enabled to perform the method according to any one of Embodiments 25 to 32, the computer is enabled to perform the method according to any one of Embodiments 33 to 38, or the computer is enabled to perform the method according to any one of Embodiments 39 to 43.

Embodiment 89. A communication method, applied to a first terminal, where the method includes:

determining one or more sidelink resources, where the one or more sidelink resources include at least a sidelink resource within sidelink discontinuous reception-active time of a second terminal; and

sending data to the second terminal by using a first sidelink resource in the one or more sidelink resources, where the first sidelink resource is within the sidelink discontinuous reception-active time;

a quantity of sidelink resources within a first time period in the one or more sidelink resources is greater than or equal to a first threshold; and

a start moment of the first time period is a start moment corresponding to a candidate resource set, and an end moment of the first time period is an end moment of the sidelink discontinuous reception-active time, or the first time period is a time period in which a moment of the candidate resource set overlaps the sidelink discontinuous reception-active time.

Embodiment 90. The method according to Embodiment 89, where the method further includes:

determining, by the first terminal, a first resource set from the candidate resource set;

excluding, by the first terminal, a first part of resources from the first resource set based on a first RSRP threshold; and

if the first part of resources are excluded, if a quantity of resources whose time range is within the first time period in remaining resources in the first resource set is less than the first threshold, determining, by the first terminal, a second resource set from the candidate resource set, and determining, by the first terminal, the one or more sidelink resources from the second resource set based on a second RSRP threshold; or if the first part of resources are excluded, if a quantity of resources whose time range is within the first time period in remaining resources in the first resource set is greater than or equal to the first threshold, determining, by the first terminal, that the one or more sidelink resources include the resources whose time range is within the first time period in the remaining resources in the first resource set.

Embodiment 91. The method according to Embodiment 1 or 2, where the one or more sidelink resources are sidelink resources determined from the candidate resource set, and the start moment corresponding to the candidate resource set is later than or equal to a start moment of the sidelink discontinuous reception-active time; or

the one or more sidelink resources are sidelink resources determined from the candidate resource set, and an end moment corresponding to the candidate resource set is earlier than or equal to a retransmission end moment of the data.

Embodiment 92. The method according to any one of Embodiments 1 to 3, where the determining the one or more sidelink resources includes:

determining, by a physical layer of the first terminal, the one or more sidelink resources from the candidate resource set; and

reporting, by the physical layer, information of the one or more sidelink resources to a medium access control entity of the first terminal; and

the method further includes:

selecting, by the medium access control entity, the first sidelink resource within the sidelink discontinuous reception-active time from the one or more sidelink resources.

Embodiment 93. The method according to Embodiment 92, where the method further includes:

sending, by the medium access control entity, first information to the physical layer, where the first information includes: information for indicating the end moment of the sidelink discontinuous reception-active time, or information for indicating remaining time of the sidelink discontinuous reception-active time; and

the determining, by a physical layer of the first terminal, the one or more sidelink resources from the candidate resource set includes:

determining, by the physical layer, the one or more sidelink resources from the candidate resource set based on the first information.

Embodiment 94. The method according to Embodiment 93, where the sending, by the medium access control entity, first information to the physical layer includes:

when the remaining time of the sidelink discontinuous reception-active time is less than or equal to a remaining packet delay budget, sending, by the medium access control entity, the first information to the physical layer.

Embodiment 95. The method according to Embodiment 93 or 94, where the first information further includes information for indicating the start moment of the sidelink discontinuous reception-active time.

Embodiment 96. The method according to Embodiment 95, where when a time unit 1 is earlier than the start moment of the sidelink discontinuous reception-active time, the medium access control entity of the first terminal sends, to the physical layer of the first terminal, the information for indicating the start moment of the sidelink discontinuous reception-active time, where the time unit 1 is a moment at which the physical layer of the first terminal determines to sense a sidelink resource.

Embodiment 97. The method according to Embodiment 89, where the first resource set is all sidelink resources whose time range is within the first time period in the candidate resource set, or the first resource set is all sidelink resources in the candidate resource set.

Embodiment 98. The method according to Embodiment 97, where if the first resource set is all the sidelink resources whose time range is within the first time period in the candidate resource set, the first terminal determines that a third resource set is all sidelink resources whose time range is outside the first time period in the candidate resource set;

the first terminal excludes a part of resources from the third resource set based on a third RSRP threshold; and

if the part of resources are excluded, if a quantity of remaining resources in the third resource set is less than a second threshold, the first terminal determines a fourth resource set from the candidate resource set, and the first terminal determines the one or more sidelink resources from the fourth resource set based on a fourth RSRP threshold; or

if the part of resources are excluded, if a quantity of remaining resources in the third resource set is greater than or equal to a second threshold, the first terminal determines that the one or more sidelink resources include the remaining resources in the third resource set.

Embodiment 99. The method according to any one of Embodiments 89 to 98, where the first resource set is the same as the second resource set.

Embodiment 100. The method according to Embodiment 98, where the third resource set is the same as the fourth resource set.

Embodiment 101. A computer-readable storage medium, where the computer-readable storage medium stores instructions, and when the instructions are executed, the method according to any one of Embodiments 89 to 100 is implemented.

Embodiment 102. A chip, where the chip includes a processor, the processor is coupled to a communication interface, the processor is configured to run a computer program or instructions, to implement the method according to any one of Embodiments 89 to 100, and the communication interface is configured to communicate with another module other than the chip.

Embodiment 103. A terminal, including at least one processor, where the at least one processor is coupled to a memory, and the at least one processor is configured to run instructions stored in the memory, to perform the method according to any one of Embodiments 89 to 100.

**Claims**

1. A communication method, applied to a first terminal device, wherein the method comprises:

   receiving at least one message for reserving a resource;
   determining, from S resources based on the at least one message, M resources whose signal strengths do not meet a first signal strength threshold, wherein a first signal strength threshold corresponding to a first resource in the M resources is related to a priority indicated by a message for reserving the first resource, M is a positive integer, and S is an integer greater than or equal to M;
   adjusting the first signal strength threshold if M does not meet a first resource quantity or S-M does not meet a first resource quantity; and
   sending a first message to a second terminal device, wherein the first message indicates a resource determined based on an adjusted signal strength threshold, and the adjusted signal strength threshold enables M to meet the first resource quantity or enables S-M to meet the first resource quantity.

2. The method according to claim 1, wherein the method further comprises:
   determining, from the S resources based on the at least one message, N resources whose signal strengths do not meet the adjusted signal strength threshold.

3. The method according to claim 2, wherein the N resources are a resource non-preferred for sending data to the first terminal device.

4. The method according to claim 2 or 3, wherein the method further comprises:
   determining K resources from the N resources, wherein K is less than or equal to the first resource quantity, and K is a positive integer.

5. The method according to claim 4, wherein

   signal strengths corresponding to the K resources are greater than or equal to a signal strength of a remaining resource in the N resources other than the K resources, the K resources are a resource with a highest signal strength in the N resources, the K resources are first K resources determined in descending order of signal strengths in the N resources, or the K resources are a resource whose signal strength is greater than a second signal strength threshold in the N resources; or
   the K resources are randomly determined from the N resources.

**6.** The method according to any one of claims 2 to 5, wherein the method further comprises:
determining P resources whose signal strengths are less than or equal to a third signal strength threshold and that are used to send data to the first terminal device, wherein P is a positive integer, and the third signal strength threshold is equal to the adjusted signal strength threshold, or equal to a largest value in thresholds comprised in the adjusted signal strength threshold.

**7.** The method according to claim 6, wherein the first message further indicates the P resources.

**8.** The method according to any one of claims 1 to 7, wherein the first signal strength threshold corresponding to the first resource in the M resources is determined based on a first priority and the priority of the message for reserving the first resource, and the first priority is a priority indicated by the second terminal device, or is a preset priority.

**9.** The method according to any one of claims 1 to 8, wherein the determining, from S resources, M resources whose signal strengths do not meet a first signal strength threshold comprises:
determining, from the S resources, the M resources whose signal strengths are greater than the first signal strength threshold.

**10.** The method according to claim 9, wherein the adjusting the first signal strength threshold if M does not meet a first resource quantity comprises:
increasing the first signal strength threshold if M is greater than the first resource quantity.

**11.** The method according to any one of claims 1 to 8, wherein the determining, from S resources, M resources whose signal strengths do not meet a first signal strength threshold comprises:
determining, from the S resources, the M resources whose signal strengths are less than or equal to the first signal strength threshold.

**12.** The method according to claim 11, wherein the adjusting the first signal strength threshold if S-M does not meet a first resource quantity comprises:
increasing the first signal strength threshold if S-M is greater than the first resource quantity.

**13.** A communication method, applied to a first terminal device, wherein the method comprises:

determining, in a first selection manner and/or a second selection manner, a resource non-preferred for sending data to the first terminal device, wherein the selection manner is determined based on a first parameter; and
sending a message to a second terminal device, wherein the message indicates the resource non-preferred for sending data to the first terminal device.

**14.** The method according to claim 13, wherein the first parameter comprises one or more of the following:

a resource quantity threshold;
a quantity of reserved resources for sending data to the first terminal device;
a priority indicated by the second terminal device;
a quantity of resources determined in the first selection manner; or
a quantity of resources determined in the second selection manner.

**15.** The method according to claim 14, wherein

when the first parameter comprises the resource quantity threshold, if the resource quantity threshold is less than a first threshold, the resource non-preferred for sending data to the first terminal device is determined in the second selection manner; if the resource quantity threshold is greater than or equal to a first threshold and is less than a second threshold, the resource non-preferred for sending data to the first terminal device is determined in the first selection manner; or if the resource quantity threshold is greater than or equal to a second threshold, the resource non-preferred for sending data to the first terminal device is determined in the first selection manner and the second selection manner;
when the first parameter comprises the quantity of reserved resources for sending data to the first terminal device, if the quantity of reserved resources for sending data to the first terminal device is greater than or equal to a third threshold, the resource non-preferred for sending data to the first terminal device is determined in the second selection manner; otherwise, the resource non-preferred for sending data to the first terminal device is determined in the first selection manner, or the resource non-preferred for sending data to the first terminal device is determined in the first selection manner and the second selection manner;

when the first parameter comprises the priority indicated by the second terminal device, if the priority indicated by the second terminal device is higher than or equal to a second priority, the resource non-preferred for sending data to the first terminal device is determined in the first selection manner and the second selection manner; otherwise, the resource non-preferred for sending data to the first terminal device is determined in the first selection manner or the second selection manner;

when the first parameter comprises the quantity of resources determined in the first selection manner, if the quantity of resources determined in the first selection manner is greater than a fourth threshold, the resource non-preferred for sending data to the first terminal device is determined in the first selection manner; otherwise, the resource non-preferred for sending data to the first terminal device is determined in the first selection manner and the second selection manner, or the resource non-preferred for sending data to the first terminal device is determined in the second selection manner; or

when the first parameter comprises the quantity of resources determined in the second selection manner, if the quantity of resources determined in the second selection manner is greater than a fifth threshold, the resource non-preferred for sending data to the first terminal device is determined in the second selection manner; otherwise, the resource non-preferred for sending data to the first terminal device is determined in the first selection manner and the second selection manner, or the resource non-preferred for sending data to the first terminal device is determined in the first selection manner.

16. The method according to any one of claims 13 to 15, wherein the method further comprises:
determining the quantity of resources determined in the first selection manner, and/or determining the quantity of resources determined in the second selection manner.

17. The method according to any one of claims 13 to 16, wherein

the first selection manner is a manner of determining, based on a first signal strength threshold, the resource non-preferred for sending data to the first terminal device, wherein a signal strength of the resource non-preferred for sending data to the first terminal device is greater than the first signal strength threshold; and

the second selection manner is a manner of determining, based on a third signal strength threshold, the resource non-preferred for sending data to the first terminal device, wherein the signal strength of the resource non-preferred for sending data to the first terminal device is less than or equal to the first signal strength threshold, and is used to send data to the first terminal device.

18. A communication device, comprising:

one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 12, or the communication device is enabled to perform the method according to any one of claims 13 to 17.

19. A computer-readable storage medium, wherein the computer-readable storage medium is configured to store a computer program, and when the computer program is run on a computer, the computer is enabled to perform the method according to any one of claims 1 to 12, or the computer is enabled to perform the method according to any one of claims 13 to 17.

20. A chip, comprising one or more processors and a communication interface, wherein the one or more processors are configured to read instructions, to perform the method according to any one of claims 1 to 12, or perform the method according to any one of claims 13 to 17.

Information of an unrecommended resource

UE-A        UE-B

Determine, based on the information of
the unrecommended resource, a
resource for sending data to the UE-A

FIG. 1

First UE        Second UE

S201: At least one
message for
reserving a resource

S202: Determine, from S
resources based on the at least
one message, M resources whose
signal strengths do not meet a
first signal strength threshold

S203: Adjust the first signal
strength threshold if M does not
meet a first resource quantity

S204: Determine a fourth signal
strength threshold based on an
adjusted signal strength threshold

S205: Determine, from the S
resources based on the at least
one message, N resources whose
signal strengths do not meet the
fourth signal strength threshold
as an unrecommended resource

S206: First message, indicating
the N resources

FIG. 2A

FIG. 2B

FIG. 3

First UE

Second UE

S401: At least one
message for reserving a
resource

S402: Determine, from S
resources based on the at
least one message, M
resources whose signal
strengths do not meet a
first signal strength
threshold

S403: Determine K
resources from the M
resources, where K is
less than or equal to a
first resource quantity

S404: First message, indicating the
K resources

FIG. 4

First UE

Second UE

S501: At least one
message for reserving a
resource

S502: Determine M
resources from a
resource reserved by
using the at least one
message in descending
order of a signal strength
of the at least one
message

S503: Determine K
resources from the M
resources, where K is
less than or equal to a
first resource quantity

S504: First message, indicating
the K resources

FIG. 5

First UE

Second UE

S601: At least one
message for
reserving a resource

S602: Determine, from S
resources based on the at
least one message, M
resources whose signal
strengths do not meet a
first signal strength
threshold

S603: Adjust the first
signal strength threshold
if M does not meet a first
resource quantity

S604: Determine a fourth
signal strength threshold
based on an adjusted
signal strength threshold

S605: Determine a third
signal strength threshold
based on the adjusted
signal strength threshold
and/or the fourth signal
strength threshold

S606: First message, indicating K
resources and P resources

FIG. 6

First UE

Second UE

S701: At least one
message for
reserving a resource

S702: Determine, from S
resources based on the at
least one message, M
resources whose signal
strengths do not meet a first
signal strength threshold

S703: Determine, from the
S resources based on the at
least one message, P
resources whose signal
strengths do not meet a
third signal strength
threshold and that are used
to send data to the first UE

S704: First message, indicating
K resources and the P resources

FIG. 7

First UE

Second UE

S801: Determine a third signal strength threshold based on a first priority

S802: At least one message for reserving a resource

S803: Determine, from S resources based on the at least one message, P resources whose signal strengths do not meet the third signal strength threshold and that are used to send data to the first UE

S804: First message, indicating the P resources

FIG. 8

First UE

Second UE

S901: At least one message for reserving a resource

S902: Determine, from S resources based on the at least one message, P resources whose signal strengths do not meet a third signal strength threshold and that are used to send data to the first UE

S903: The first UE adjusts the third signal strength threshold if P does not meet a second resource quantity

S904: Determine a fifth signal strength threshold based on an adjusted signal strength threshold

S905: Determine, from the S resources based on the at least one message, Q resources whose signal strengths do not meet the fifth signal strength threshold and that are used to send data to the first UE

S906: First message, indicating the Q resources

FIG. 9

```
┌──────────────┐                                      ┌──────────────┐
│   First UE   │                                      │  Second UE   │
└──────┬───────┘                                      └──────┬───────┘
       │                                                     │
┌──────┴─────────────┐                                       │
│ S1001: Determine a first                                   │
│    resource quantity                                       │
└──────┬─────────────┘                                       │
       │                                                     │
┌──────┴─────────────┐                                       │
│ S1002: Determine, based                                    │
│  on the first resource                                     │
│ quantity in a first selection                              │
│  manner, a resource non-                                   │
│ preferred for sending data                                 │
│     to the first UE                                        │
└──────┬─────────────┘                                       │
```

S1003: Exclude a part of resources from the determined resources if a quantity of determined resources is greater than the first resource quantity

S1004: First message, indicating Z resources

FIG. 10

```
┌──────────────┐                              ┌──────────────┐
│   First UE   │                              │  Second UE   │
└──────┬───────┘                              └──────┬───────┘
       │                                             │
┌──────┴────────────────┐                            │
│ S1101: Determine a first                           │
│ resource quantity and a                            │
│ second resource quantity                           │
└──────┬────────────────┘                            │
┌──────┴────────────────┐                            │
│ S1102: Exclude an                                  │
│ overlapping resource from                          │
│ a resource corresponding to                        │
│ the first resource quantity                        │
└──────┬────────────────┘                            │
┌ ─ ─ ─┴─ ─ ─ ─ ─ ─ ─ ─ ┐                            │
│ S1103: Increase a first                            │
│ signal strength threshold if                       │
│ a sum of the second                                │
│ resource quantity and a                            │
│ quantity of remaining                              │
│ resources obtained by                              │
│ excluding the overlapping                          │
│ resource from the resource                         │
│ corresponding to the first                         │
│ resource quantity does not                         │
│ meet a resource quantity                           │
│ threshold                                          │
└ ─ ─ ─┬─ ─ ─ ─ ─ ─ ─ ─ ┘                            │
       │  S1104: First message, indicating           │
       │     K resources and P resources             │
       │────────────────────────────────────────────▶│
       │                                             │
```

FIG. 11

```
┌──────────────┐                              ┌──────────────┐
│   First UE   │                              │  Second UE   │
└──────┬───────┘                              └──────┬───────┘
┌──────┴────────────────┐                            │
│ S1201: Determine, in a                             │
│ first selection manner                             │
│ and/or a second selection                          │
│ manner, a resource non-                            │
│ preferred for sending data                         │
│ to the first UE                                    │
└──────┬────────────────┘                            │
       │  S1202: First message, indicating W resources│
       │────────────────────────────────────────────▶│
       │                                             │
```

FIG. 12

1300

1301

Processor

Instructions

1303

1302

Memory

Instructions

1304

Transceiver

1305

Antenna

1306

FIG. 13

Antenna

Control circuit

1410

1400

Memory

Processor

1420

Input/Output apparatus

FIG. 14

FIG. 15

FIG. 16

Duration of a
DRX-on
duration timer

Dormant period

A terminal should
detect a PDCCH

DRX cycle

FIG. 17

Active
period

A terminal
needs to
monitor a
PDCCH

Dormant period

A DRX-
inactivity timer
is running

DRX cycle

Active time

PDCCH

FIG. 18

First terminal

Second terminal

Step 1901: Determine one or more sidelink resources

Step 1902: Send data to the second terminal by using a first sidelink resource in the one or more sidelink resources

FIG. 19

Time while a DRX-on duration timer-SL is running

Sidelink resource 1

Sidelink resource 2

Sidelink resource 3

A terminal needs to monitor a PSCCH, a PSSCH, SCI, or a MAC PDU

A DRX-inactivity timer-SL is running

DRX cycle

Active time

Slot 1

Slot 2

Slot 3

Slot 4

Slot 5

FIG. 20

| | First terminal | |
|---|---|---|
| Physical layer | | Medium access control layer |

Step 2101: The physical layer determines one or more sidelink resources from a candidate resource set

Step 2102: Report information of the one or more sidelink resources

Step 2103: Select, from the one or more sidelink resources, a first sidelink resource within sidelink discontinuous reception-active time of a second terminal

FIG. 21

n    T4                    T3                    T5                    T6

Indicating time while a DRX-on duration timer-SL is running

FIG. 22

T4    n    T3                    T5                    T6

Indicating time while a DRX-on duration timer-SL is running

FIG. 23

Running duration
of a DRX-on
duration timer-SL

Running duration
of a DRX-inactivity
timer-SL

$T4$　　n　　　　　　　　$T3$　　　　$T5$　　　　　　　$T6$

FIG. 24

Running duration
of a DRX-on
duration timer-SL

Running duration of a
DRX-inactivity timer-SL

$T4$　　n　　　　　　　　$T3$　　　　$T5$　　　　　$T6$

Running duration of a DRX-
retransmission timer-SL

FIG. 25

DRX-active time

n　　n+$T1$　　　　　　　　n+$T2$

Resource selection window

FIG. 26

DRX-active time

n  n+*T*1  n+*T*2

⟍⟍⟍⟍ Resource selection window

FIG. 27

Sidelink discontinuous reception-active time

Duration of an RTT timer   Duration of a retransmission timer   Duration of an RTT timer   Duration of a retransmission timer

*T*3  *T*5

FIG. 28

Sidelink discontinuous reception-active time

Duration of a retransmission timer

Duration of a retransmission timer

A  B  C  D

FIG. 29

Sidelink discontinuous
reception-active time

Duration of a
retransmission
timer

1

2

3

4

Time while an inactivity timer-sidelink is running

FIG. 30

Sidelink discontinuous
reception-active time

DES1

Sidelink discontinuous
reception-active time

DES2

Sidelink resource for an initial transmission

FIG. 31

Sidelink discontinuous
reception-active time

DES1

Sidelink discontinuous
reception-active time

DES2

Sidelink resource
1 for an initial
transmission

Sidelink
resource 2 for a
retransmission

FIG. 32

Sidelink discontinuous
reception-active time

DES1

Sidelink discontinuous
reception-active time

DES2

Sidelink resource for
an initial transmission

Sidelink resource
for a retransmission

FIG. 33

Sidelink discontinuous
reception-active time

DES1

Sidelink resource for an
initial transmission

Sidelink resource for
a retransmission

FIG. 34

Communication apparatus

Processing module 3512

Communication module 3513

Storage module 3511

FIG. 35

360

Chip

Processor 3610

3640

3620

Memory

3630

Communication interface

FIG. 36

## INTERNATIONAL SEARCH REPORT

| International application No. |
|---|
| **PCT/CN2022/112189** |

**A.  CLASSIFICATION OF SUBJECT MATTER**

H04W 4/70(2018.01)i;  H04W 28/16(2009.01)i;  H04W 28/26(2009.01)i

According to International Patent Classification (IPC) or to both national classification and IPC

**B.  FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 侧链路, 侧行, 参考信号接收功率, 信号强度, 门限, 阈值, 调整, 减小, 降低, 改变, 资源, 条件, 侧行控制信息, RSRP, threshold, adjust, lower, change, resource, condition, V2X, sidelink, SCI

**C.  DOCUMENTS CONSIDERED TO BE RELEVANT**

| Category* | Citation of document, with indication, where appropriate, of the relevant passages | Relevant to claim No. |
|---|---|---|
| X | CN 112788758 A (GOHIGH DATA NETWORKS TECHNOLOGY CO., LTD.) 11 May 2021 (2021-05-11) <br> description, paragraphs [0040]-[0079] | 1-20 |
| A | CN 113543236 A (VIVO COMMUNICATION TECHNOLOGY CO., LTD.) 22 October 2021 (2021-10-22) <br> entire document | 1-20 |
| A | CN 113497659 A (HUAWEI TECHNOLOGIES CO., LTD.) 12 October 2021 (2021-10-12) <br> entire document | 1-20 |
| A | US 2021266951 A1 (QUALCOMM INC.) 26 August 2021 (2021-08-26) <br> entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 October 2022** | **01 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | | International application No. |
| --- | --- | --- |
| | | **PCT/CN2022/112189** |

| Patent document cited in search report | | | Publication date (day/month/year) | Patent family member(s) | Publication date (day/month/year) |
| --- | --- | --- | --- | --- | --- |
| CN | 112788758 | A | 11 May 2021 | None | |
| CN | 113543236 | A | 22 October 2021 | None | |
| CN | 113497659 | A | 12 October 2021 | None | |
| US | 2021266951 | A1 | 26 August 2021 | None | |

Form PCT/ISA/210 (patent family annex) (January 2015)

**EP 4 415 399 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202111238539

- CN 202111302217